# EUROPÄISCHE PATENTSCHRIFT

(11) **EP 3 013 874 B1**
(45) Veröffentlichungstag und Bekanntmachung des Hinweises auf die Patenterteilung: **14.12.2016**
(21) Anmeldenummer: 14732205.1
(22) Anmeldetag: 24.06.2014
(51) Int. Cl.: C08F 220/20, C08F 230/02, C08F 8/40, C09D 133/06

(54) **HAFTUNGS-VERSTÄRKENDES ADDITIV UND DIESES ENTHALTENDE BESCHICHTUNGSZUSAMMENSETZUNG**
ADDITIVE THAT IMPROVES ADHESION AND COATING COMPOUND CONTAINING THE SAME
ADDITIF RENFORÇANT L'ADHÉRENCE ET COMPOSITION DE REVÊTEMENT LE CONTENANT

(30) Priorität: 24.06.2013 EP 13173425
(43) Veröffentlichungstag der Anmeldung: 04.05.2016
(73) Patentinhaber: BYK-Chemie GmbH, 46483 Wesel (DE)
(72) Erfinder: GÖBELT, Bernd, 46487 Wesel (DE); NAGELSDIEK, René, 46499 Hamminkeln (DE); OMEIS, Jürgen, 46286 Dorsten-Lembeck (DE); BÖMER, Jörg, 46487 Wesel (DE); SCHEPERS, Carina, 46485 Wesel (DE)
(74) Vertreter: Leifert & Steffan
(86) Internationale Anmeldenummer: PCT/EP2014/063232
(87) Internationale Veröffentlichungsnummer: WO 2014/206962

(56) Entgegenhaltungen:
- EP-A2- 0 218 248
- WO-A1-96/06894
- DE-A1- 3 807 588
- DE-A1- 4 426 323

## Beschreibung

Die vorliegende Erfindung betrifft eine Verwendung wenigstens eines durch Polymerisation von ethylenisch ungesättigten Monomeren erhältlichen Homopolymeren oder Copolymeren, welches aufgebaut ist aus wenigstens einer Struktureinheit (W0) oder aus wenigstens zwei voneinander verschiedenen Struktureinheiten (W1) und (W2) sowie gegebenenfalls wenigstens einer weiteren von (W0), (W1) und (W2) verschiedenen Struktureinheit (W3), wobei jede Struktureinheit (W0) sowohl wenigstens eine funktionelle Gruppe enthält, die wenigstens ein Phosphoratom aufweist, als auch wenigstens eine gegenüber einer Isocyanat-Gruppe reaktive funktionelle Gruppe aufweist, jede Struktureinheit (W1) wenigstens eine funktionelle Gruppe enthält, die wenigstens ein Phosphoratom aufweist, jede Struktureinheit (W2) wenigstens eine gegenüber einer Isocyanat-Gruppe reaktive funktionelle Gruppe aufweist, wobei keine der Struktureinheiten (W2) Phosphoratome enthält, und das Homopolymere oder Copolymere, bezogen auf die Gesamtmenge der wenigstens einen Struktureinheit (W0) innerhalb der Polymerhauptkette des Homopolymeren oder Copolymeren 1 bis 100 mol-% der Struktureinheiten (W0) oder, bezogen auf die Gesamtmenge der wenigstens zwei Struktureinheiten (W1) und (W2) innerhalb der Polymerhauptkette des Homopolymeren oder Copolymeren 1 bis 80 mol-% der Struktureinheiten (W1) und 1 bis 80 mol-% der Struktureinheiten (W2) aufweist, als Haftungs-verstärkendes Additiv, eine Beschichtungszusammensetzung enthaltend ein solches Homopolymer oder Copolymer als Komponente (A) und wenigstens ein Bindemittel als Komponente (B), sowie eine Verwendung dieser Beschichtungszusammensetzung als Klarlack, Serienlack, Reparaturlack oder Wartungslack.

Aus dem Stand der Technik ist eine Vielzahl von verschiedenen Beschichtungszusammensetzungen für unterschiedliche Anwendungsgebiete bekannt.

Die dabei auf entsprechende Substrate aufgebrachten Beschichtungen können unterschiedlichen Zwecken dienen, wie beispielsweise rein dekorativen Zwecken, aber auch als Schutz des Substrats vor schädlichen Einflüssen. In vielen Fällen ist es erforderlich, dass nicht nur eine Beschichtung auf ein Substrat bzw. auf eine Substratoberfläche aufgebracht wird, sondern zwei oder mehrere solcher Beschichtungen nacheinander aufgetragen werden, welche sich üblicherweise in ihrer Zusammensetzung und in ihrem gewünschten Eigenschaftsprofil unterscheiden. Typische Anwendungsbeispiele für solche mehrschichtigen Beschichtungen sind Mehrschichtlackierungen wie beispielsweise Automobillacke, Coil-Lacke, Industrielacke, Korrosionsschutzlacke oder Druckfarben. Einen weiteren Fall, in dem mehrere Lackschichten aufeinander aufgetragen werden, stellen Reparaturlackierungen oder Wartungslackierungen dar, in denen eine bereits lackierte Oberfläche entweder punktuell oder aber als ganze neu lackiert wird, beispielsweise weil die gealterte Lackschicht verwittert ist oder beschädigt wurde.

In vielen Fällen ist jedoch zu beobachten, dass bei solchen Mehrschichtlackierungen Haftungsprobleme zwischen den einzelnen Lackschichten auftreten und es beispielsweise infolge von Umwelteinflüssen zu einer zumindest teilweisen Ablösung "höhergelegener" Lackschichten von darunterliegenden Lackschichten kommen kann. Dies ist nicht nur aus optisch-ästhetischen Gründen unerwünscht, sondern schädigt auch massiv die Funktionalität des Lacks, insbesondere wenn der Lack als Schutzbarriere wie beispielsweise als mechanische Schutzbarriere, als Schutz vor UV-Strahlung und/oder als Korrosionsschutz für das lackierte Substrat dient. Um die erwünschte Funktionalität des Lacks gewährleisten zu können, ist es daher unverzichtbar, dass nicht nur die direkt auf das Substrat aufgebrachte erste Lackschicht auf diesem ausreichend haftet, sondern auch die einzelnen weiteren aufgebrachten Schichten auf dieser ersten Lackschicht und zudem untereinander ausreichend gut haften, so dass es zu keiner zumindest teilweisen unerwünschten Delaminierung zwischen den einzelnen Lackschichten und/oder dem Substrat kommt.

Um das Auftreten solcher Haftungsprobleme zu verhindern, ist es aus dem Stand der Technik bekannt, Additive einzusetzen, welche eine Haftungs-verstärkende Wirkung aufweisen. Solche Haftvermittler sind beispielsweise aus M.N. Sathyanarayana et al., Progress in Organic Coatings 1995, 26, 275-313 bekannt. Die eingesetzten Haftvermittler können dabei entweder als ein Bestandteil der auf ein gegebenenfalls beschichtetes Substrat bzw. auf eine gegebenenfalls bereits beschichtete Substratoberfläche aufzubringenden Beschichtung eingesetzt werden oder aber zunächst - noch vor dem Aufbringen der eigentlichen Beschichtung - als Bestandteil einer Vorbehandlungsschicht oder Haftvermittlerschicht auf ein gegebenenfalls beschichtetes Substrat bzw. auf eine gegebenenfalls bereits beschichtete Substratoberfläche aufgebracht werden.

Mehrschichtlackierungen für Substrate werden häufig in Bereichen eingesetzt, in denen die einzusetzenden Mehrschichtlackierungen permanent optimiert und/oder verändert werden, beispielsweise hinsichtlich des Einsatzes von Rohstoffen aus regenerativen Quellen, der Substitution bestimmter Inhaltsstoffe aufgrund von chemikalienrechtlichen und ökologischen Anforderungen oder schlicht aus Kostengründen. Aufgrund der dadurch bedingten ständig veränderten Zusammensetzung der jeweiligen Lackschicht ergibt sich insbesondere im Fall von Überlackierungen wie Reparaturlackierungen oder Wartungslackierungen, aber auch bei Serienlackierungen oftmals ein verändertes Haftungsverhalten beispielsweise zwischen der überzulackierenden Lackschicht und der dann darauf aufgebrachten überlackierten Lacksicht, wodurch es hinsichtlich der Zwischenschichthaftung zwischen diesen beiden Schichten zu Problemen wie zum Beispiel einer zumindest teilweisen unerwünschten Delaminierung kommen kann.

Aus WO 96/06894 A1 sind im Can-Coating-Verfahren einsetzbare wässrige Beschichtungszusammensetzungen bekannt, welche u.a. ein phosphorhaltiges Polymer als Bindemittel aufweisen. Aus DE 38 07 588 A1 sind phosphorhaltige (Meth)acrylcopolymer-Bindemittel bekannt. Hinweise auf eine Haftungs-verstärkende Wirkung dieser (Co)polymere und auf Beschichtungszusammensetzungen, die ein solches (Co)polymer jeweils in Additiv-Mengen aufweisen, sind weder WO 96/06894 A1 noch DE 38 07 588 A1 zu entnehmen.

Aus DE 44 26 323 A1 sind Polyacrylatharzlösungen bekannt, die als Additiv ein Phosphit wie Triisodecylphosphit enthalten. Hinweise auf (Co)polymere, welche phosphorhaltige funktionelle Gruppen aufweisen, und entsprechende diese enthaltende Beschichtungszusammensetzungen sind DE 44 26 323 A1 nicht zu entnehmen. EP 0 218 248 A2 offenbart eine polymerisierbare Mischung aus oligomeren oder präpolymeren Verbindungen, die mehrere polymerisierbare ungesättigte Gruppen und mehrere Säure-Gruppen wie zum Beispiel Phosphorsäure-Reste aufweisen. Entsprechende daraus erhaltene Polymere, die zudem gegenüber Isocyanat-Gruppen reaktive funktionelle Gruppen aufweisen, werden in EP 0 218 248 A2 nicht offenbart.

Es besteht daher ein Bedarf an Haftungs-verstärkenden Additiven, mittels derer die vorstehend genannten Nachteile, insbesondere hinsichtlich der Zwischenschichthaftung zwischen einer überzulackierenden Lackschicht eines Substrats und der darauf aufgebrachten überlackierten Lacksicht im Fall von Überlackierungen wie beispielsweise Reparaturlackierungen oder Wartungslackierungen zumindest teilweise vermieden werden können.

Eine Aufgabe der vorliegenden Erfindung ist es daher, ein Haftungs-verstärkendes Additiv zur Verfügung zu stellen, welches Vorteile gegenüber üblicherweise eingesetzten Haftungs-verstärkenden Additiven aufweist. Insbesondere ist es eine Aufgabe der vorliegenden Erfindung, ein solches Haftungs-verstärkendes Additiv bereitzustellen, welches eine ausreichend gute Haftung zwischen einem gegebenenfalls beschichteten Substrat und einer darauf aufgebrachten Beschichtung wie einer Lackschicht vermittelt. Insbesondere ist es eine Aufgabe der vorliegenden Erfindung, ein solches Haftungs-verstärkendes Additiv bereitzustellen, welches eine ausreichend gute Haftung zwischen einem bereits mit wenigstens einer Lackschicht beschichteten Substrat wie beispielsweise einem mit einem Basislack beschichteten Substrat und einer darauf aufgebrachten Lackschicht wie beispielsweise einer darauf aufgebrachten Klarlackschicht vermittelt, d.h. ein Haftungs-verstärkendes Additiv bereitzustellen, welches eine ausreichend gute Zwischenhaftung zwischen wenigstens diesen zwei Schichten einer Mehrschichtlackierung wie beispielsweise einer Basislackschicht und einer Klarlackschicht vermittelt.

Diese Aufgabe wird gelöst durch eine Verwendung wenigstens eines durch Polymerisation, vorzugsweise Copolymerisation, von ethylenisch ungesättigten Monomeren erhältlichen Homopolymeren oder Copolymeren, vorzugsweise Copolymeren, als Haftungs-verstärkendes Additiv,
welches aufgebaut ist aus wenigstens einer Struktureinheit (W0) und gegebenenfalls wenigstens einer weiteren von (W0) verschiedenen Struktureinheit (W3),
wobei
jede Struktureinheit (W0) sowohl wenigstens eine funktionelle Gruppe enthält, die wenigstens ein Phosphoratom aufweist, als auch wenigstens eine gegenüber einer Isocyanat-Gruppe reaktive funktionelle Gruppe aufweist,
und das Homopolymere oder Copolymere, bezogen auf die Gesamtmenge der wenigstens einen Struktureinheit (W0) sowie gegebenenfalls (W3) innerhalb der Polymerhauptkette des Homopolymeren oder Copolymeren, folgende Anteile in mol-% aufweist:
∘ 1 bis 100 mol-% der Struktureinheiten (W0) und
∘ 0 bis 99 mol-% der Struktureinheiten (W3),
oder welches aufgebaut ist aus wenigstens zwei voneinander verschiedenen Struktureinheiten (W1) und (W2) und gegebenenfalls wenigstens einer weiteren (W1) und (W2) verschiedenen Struktureinheit (W3),
wobei
jede Struktureinheit (W1) wenigstens eine funktionelle Gruppe enthält, die wenigstens ein Phosphoratom aufweist, und gegebenenfalls wenigstens ein Teil der Struktureinheiten (W1) zudem wenigstens eine gegenüber einer Isocyanat-Gruppe reaktive funktionelle Gruppe aufweist, und
jede Struktureinheit (W2) wenigstens eine gegenüber einer Isocyanat-Gruppe reaktive funktionelle Gruppe aufweist, wobei keine der Struktureinheiten (W2) Phosphoratome enthält,
und das Homopolymere oder Copolymere, bezogen auf die Gesamtmenge der wenigstens zwei Struktureinheiten (W1) und (W2) sowie gegebenenfalls (W3) innerhalb der Polymerhauptkette des Homopolymeren oder Copolymeren, folgende Anteile in mol-% aufweist:
∘ 1 bis 80 mol-% der Struktureinheiten (W1),
∘ 1 bis 80 mol-% der Struktureinheiten (W2) und
∘ 0 bis 98 mol-% der Struktureinheiten (W3).

Ein erster Gegenstand der vorliegenden Erfindung ist daher eine Verwendung wenigstens eines solchen Homopolymeren oder Copolymeren, vorzugsweise Copolymeren, als Haftungs-verstärkendes Additiv.

Vorzugsweise enthält dabei zudem keine der gegebenenfalls vorhandenen Struktureinheiten (W3) Phosphoratome. Vorzugsweise enthält dabei zudem keine der gegebenenfalls vorhandenen Struktureinheiten (W3) gegenüber einer Isocyanat-Gruppe reaktive funktionelle Gruppen.

Die Verwendung des wenigstens eines Homopolymeren oder Copolymeren als Haftungs-verstärkendes Additiv erfolgt dabei vorzugsweise in Kombination mit wenigstens einem Bindemittel (B), insbesondere wenigstens einem Polyurethan und/oder wenigstens einem Polyharnstoff als Bindemittel (B), insbesondere als Bestandteil einer Beschichtungszusammensetzung umfassend wenigstens das erfindungsgemäß eingesetzte Homopolymere oder Copolymere als Haftungs-verstärkendes Additiv (A), welche zudem gegebenenfalls wenigstens ein Bindemittel (B) enthält.

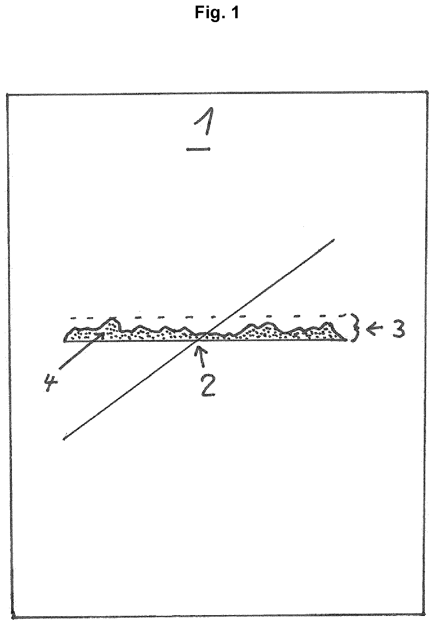

Die Haftungseigenschaften des erfindungsgemäß eingesetzten Homopolymeren oder Copolymeren können mit der nachstehend beschriebenen Bestimmungsmethode untersucht und bewertet werden (vgl. Abschnitt "Bestimmungsmethoden" und Figur 1.)

Es wurde überraschend gefunden, dass sich das erfindungsgemäß eingesetzte Homopolymer oder Copolymer durch eine Haftungs-verstärkende Wirkung, insbesondere durch eine Haftungs-verstärkende Wirkung zwischen zwei Schichten eines mit wenigstens zwei Schichten beschichteten Substrats, auszeichnet. Beispielsweise zeichnet sich das erfindungsgemäß eingesetzte Homopolymer oder Copolymer durch eine Haftungs-verstärkende Wirkung zwischen wenigstens einer auf einem Substrat aufgebrachten ersten Lackschicht, wie beispielsweise einer Basislackschicht, und einer darauf aufgebrachten weiteren Lackschicht, wie beispielsweise einer Klarlackschicht, aus und kann daher als Haftvermittler eingesetzt werden, insbesondere um eine ausreichend gute Zwischenschichthaftung zwischen diesen Schichten zu erzielen. Es wurde ferner überraschend gefunden, dass sich das erfindungsgemäß eingesetzte Homopolymer oder Copolymer zudem auch durch eine Haftungs-verstärkende Wirkung zwischen einem unbeschichteten Substrat und einer darauf aufgebrachten wenigstens einen Lackschicht auszeichnet und daher auch diesbezüglich als Haftvermittler eingesetzt werden kann.

Insbesondere wurde überraschend gefunden, dass das erfindungsgemäß eingesetzte Homopolymer oder Copolymer dabei sowohl als Haftungs-verstärkendes Additiv als Bestandteil einer Beschichtungszusammensetzung wie beispielsweise einer Klarlackzusammensetzung eingesetzt werden kann, wodurch beispielsweise eine ausreichend gute Haftung einer entsprechenden Klarlackschicht auf einer Basislackschicht erzielt werden kann, oder alternativ als Bestandteil einer Haftvermittlerschicht bereitgestellt werden kann, welche wenigstens das erfindungsgemäß eingesetzte Homopolymer oder Copolymer als Haftvermittler enthält, wobei diese Schicht als Zwischenschicht zwischen zwei Schichten wie einer Basislackschicht und einer Klarlackschicht aufgebracht wird und für eine ausreichend gute Haftung zwischen diesen beiden Schichten sorgt oder als Bestandteil einer Primerschicht auf ein unbeschichtetes Substrat aufgebracht wird und auf diese wiederum eine weitere Schicht aufgebracht wird, wobei die Primerschicht für eine ausreichend gute Haftung zwischen Substrat und der weiteren Schicht sorgt.

Es wurde ferner überraschend gefunden, dass das erfindungsgemäß eingesetzte Homopolymer oder Copolymer als Haftungs-verstärkendes Additiv in einfacher Weise in Beschichtungszusammensetzungen wie Klarlackzusammensetzungen eingearbeitet werden kann. Ferner wurde überraschend gefunden, dass das erfindungsgemäß eingesetzte Homopolymer oder Copolymer als Haftungs-verstärkendes Additiv die weitere Verarbeitung solcher Beschichtungszusammensetzungen nicht negativ beeinflusst und zudem die gewünschten Eigenschaften der jeweiligen Beschichtungszusammensetzungen wie Klarlackzusammensetzungen durch seine Gegenwart als Bestandteil darin nicht negativ beeinflusst.

Ein weiterer Gegenstand der vorliegenden Erfindung ist eine Verwendung eines durch Polymerisation, vorzugsweise Copolymerisation, von ethylenisch ungesättigten Monomeren erhältlichen Homopolymeren oder Copolymeren als Haftungs-verstärkendes Additiv, welches erhältlich ist durch radikalische Polymerisation von
(a) wenigstens einem zur Ausbildung der Struktureinheit (W1) befähigten ethylenisch ungesättigten Monomeren, welches wenigstens eine funktionelle Gruppe enthält, die wenigstens ein Phosphoratom aufweist, wenigstens einem zur Ausbildung der Struktureinheit (W2) befähigten ethylenisch ungesättigten Monomeren, welches wenigstens eine gegenüber einer Isocyanat-Gruppe reaktive funktionelle Gruppe aufweist, und gegebenenfalls wenigstens einem zur Ausbildung der Struktureinheit (W3) befähigten ethylenisch ungesättigten Monomeren,
   oder durch radikalische Polymerisation von
(b1) wenigstens zwei voneinander verschiedenen zur Ausbildung der Struktureinheit (W2) befähigten ethylenisch ungesättigten Monomeren, welche jeweils unabhängig voneinander wenigstens eine gegenüber einer Isocyanat-Gruppe reaktive funktionelle Gruppe aufweisen, und gegebenenfalls wenigstens einem zur Ausbildung der Struktureinheit (W3) befähigten ethylenisch ungesättigten Monomeren,
   oder
   von wenigstens einem zur Ausbildung der Struktureinheit (W2) befähigten ethylenisch ungesättigten Monomeren, welches wenigstens eine gegenüber einer Isocyanat-Gruppe reaktive funktionelle Gruppe aufweist, und wenigstens einem zur Ausbildung der Struktureinheit (W3) befähigten ethylenisch ungesättigten Monomeren,
   und
(b2) partieller Umsetzung der in den Struktureinheiten (W2) des nach Schritt (b1) erhältlichen Homopolymeren oder Copolymeren enthaltenen, gegenüber Isocyanat-Gruppen reaktiven funktionellen Gruppen, in funktionelle Gruppen, die wenigstens ein Phosphoratom aufweisen, zur Ausbildung von Struktureinheiten (W1) oder (W0) innerhalb des Homopolymeren oder Copolymeren,
   oder durch radikalische Co-Polymerisation von
(c) wenigstens einem zur Ausbildung der Struktureinheit (W0) befähigten ethylenisch ungesättigten Monomeren, welches sowohl wenigstens eine funktionelle Gruppe enthält, die wenigstens ein Phosphoratom aufweist, als auch wenigstens eine gegenüber einer Isocyanat-Gruppe reaktive funktionelle Gruppe aufweist, und gegebenenfalls wenigstens einem zur Ausbildung der Struktureinheit (W3) befähigten ethylenisch ungesättigten Monomeren.

### Homopolymer oder Copolymer

Das erfindungsgemäß eingesetzte Homopolymer oder Copolymer ist aufgebaut aus wenigstens einer Struktureinheit (W0) und gegebenenfalls wenigstens einer weiteren von (W0) verschiedenen Struktureinheit (W3), wobei jede Struktureinheit (W0) sowohl wenigstens eine funktionelle Gruppe enthält, die wenigstens ein Phosphoratom aufweist, als auch wenigstens eine gegenüber einer Isocyanat-Gruppe reaktive funktionelle Gruppe aufweist, oder ist aufgebaut aus wenigstens zwei voneinander verschiedenen Struktureinheiten (W1) und (W2) und gegebenenfalls wenigstens einer weiteren von (W1) und (W2) verschiedenen Struktureinheit (W3), wobei jede Struktureinheit (W1) wenigstens eine funktionelle Gruppe enthält, die wenigstens ein Phosphoratom aufweist, und jede Struktureinheit (W2) wenigstens eine gegenüber einer Isocyanat-Gruppe reaktive funktionelle Gruppe aufweist. Vorzugsweise enthält die Struktureinheit (W3) weder eine funktionelle Gruppe, welche wenigstens ein Phosphoratom aufweist, noch wenigstens eine gegenüber einer Isocyanat-Gruppe reaktive funktionelle Gruppe.

Dem Fachmann sind die Begriffe "Homopolymer" und "Copolymer" bekannt. Ein erfindungsgemäß eingesetztes Homopolymer liegt beispielsweise dann vor, wenn dieses ausschließlich aufgebaut ist aus Struktureinheiten (W0), wobei jede Struktureinheit (W0) sowohl wenigstens eine funktionelle Gruppe enthält, die wenigstens ein Phosphoratom aufweist, als auch wenigstens eine gegenüber einer Isocyanat-Gruppe reaktive funktionelle Gruppe aufweist. Ein solches Homopolymer ist erhältlich durch Polymerisation von geeigneten ethylenisch ungesättigten Monomeren. Ein erfindungsgemäß eingesetztes Copolymer liegt beispielsweise dann vor, wenn dieses sowohl aus Struktureinheiten (W0) und (W3) oder beispielsweise sowohl aus Struktureinheiten (W1), (W2) und (W3) aufgebaut ist.

Vorzugsweise ist das erfindungsgemäß eingesetzte Homopolymer oder Copolymer ein Copolymer.

In einer bevorzugten Ausführungsform ist das erfindungsgemäß eingesetzte Homopolymer oder Copolymer aufgebaut aus wenigstens einer Struktureinheit (W0) und gegebenenfalls wenigstens einer weiteren von (W0) verschiedenen Struktureinheit (W3). In einer anderen bevorzugten Ausführungsform ist das erfindungsgemäß eingesetzte Homopolymer oder Copolymer aufgebaut aus wenigstens zwei voneinander verschiedenen Struktureinheiten (W1) und (W2) und gegebenenfalls wenigstens einer weiteren von (W1) und (W2) verschiedenen Struktureinheit (W3).

Jede Struktureinheit (W0) enthält dabei wenigstens eine funktionelle Gruppe, die wenigstens ein Phosphoratom aufweist. Die in dem erfindungsgemäß eingesetzten Homopolymeren oder Copolymeren enthaltenen Struktureinheiten (W0) können sich dabei - abgesehen davon, dass jede der Struktureinheiten (W0) wenigstens eine funktionelle Gruppe enthält, die wenigstens ein Phosphoratom aufweist - in ihrer chemischen Struktur unterscheiden, je nachdem ob ein einzelnes geeignetes Monomer oder eine Mischung von geeigneten Monomeren zum Einbau der Struktureinheiten (W0) in das erfindungsgemäß eingesetzte Homopolymer oder Copolymer eingesetzt wird. Die in dem erfindungsgemäßen eingesetzten Homopolymeren oder Copolymeren enthaltenen Struktureinheiten (W0) können sich zudem jeweils in der Natur der wenigstens einen funktionellen Gruppe, die wenigstens ein Phosphoratom aufweist, unterscheiden. Beispielsweise kann eine Struktureinheit (W0) eine Phosphonsäure-Gruppe und eine andere Struktureinheit (W0) eine Phosphorsäureester-Gruppe aufweisen. In einer bevorzugten Ausführungsform unterscheiden sich die im erfindungsgemäß eingesetzten Homopolymeren oder Copolymeren enthaltenen Struktureinheiten (W0) nicht voneinander. In einer anderen bevorzugten Ausführungsform unterscheiden sich die im erfindungsgemäß eingesetzten Homopolymeren oder Copolymeren enthaltenen Struktureinheiten (W0) voneinander. Vorzugsweise weist das erfindungsgemäß eingesetzte Homopolymer oder Copolymer dabei wenigstens zwei oder drei unterschiedliche Struktureinheiten (W0) auf.

Jede Struktureinheit (W0) weist neben der wenigstens einen funktionellen Gruppe, die wenigstens ein Phosphoratom aufweist, zudem wenigstens eine gegenüber einer Isocyanat-Gruppe reaktive funktionelle Gruppe, insbesondere wenigstens eine gegebenenfalls geschützte OH-Gruppe, auf. Ein Beispiel für ein geeignetes Monomer, welches zur Herstellung der Struktureinheit (W0) innerhalb des Homopolymeren oder Copolymeren eingesetzt werden kann sind beispielsweise [(3-(Meth)acryloyloxy-2-hydroxypropyl)]phosphat und/oder [(2-(Meth)acryloyloxy-3-hydroxypropyl)]phosphat. Alternativ kann auch ein Monomer wie Glycidyl(meth)acrylat eingesetzt werden, dessen Epoxid-Gruppe nach Einbau in das Homopolymer oder Copolymer unter Ringöffnung beispielsweise durch Reaktion mit Phosphorsäure zu einer Gruppe umgesetzt werden kann, die sowohl eine OH-Gruppe als eine gegenüber einer Isocyanat-Gruppe reaktive funktionelle Gruppe, als auch eine Phosphorsäuremonoester-Gruppe als eine funktionelle Gruppe, die wenigstens ein Phosphoratom aufweist, enthält. Ein anderes Beispiel für eine in der Struktureinheit (W0) enthaltene Gruppe, die sowohl wenigstens eine funktionelle Gruppe aufweist, die wenigstens ein Phosphoratom aufweist, als auch wenigstens eine gegenüber einer Isocyanat-Gruppe reaktive funktionelle Gruppe aufweist, ist beispielsweise eine Phosphorsäuredialkylester-Gruppe, deren eine Alkyl-Gruppe durch eine OH-Gruppe substituiert ist.

Jede Struktureinheit (W1) enthält dabei wenigstens eine funktionelle Gruppe, die wenigstens ein Phosphoratom aufweist. Die in dem erfindungsgemäß eingesetzten Homopolymeren oder Copolymeren enthaltenen Struktureinheiten (W1) können sich dabei - abgesehen davon, dass jede der Struktureinheiten (W1) wenigstens eine funktionelle Gruppe enthält, die wenigstens ein Phosphoratom aufweist - in ihrer chemischen Struktur unterscheiden, je nachdem ob ein einzelnes geeignetes Monomer oder eine Mischung von geeigneten Monomeren zum Einbau der Struktureinheiten (W1) in das erfindungsgemäß eingesetzte Homopolymer oder Copolymer eingesetzt wird. Die in dem erfindungsgemäßen eingesetzten Homopolymeren oder Copolymeren enthaltenen Struktureinheiten (W1) können sich zudem jeweils in der Natur der wenigstens einen funktionellen Gruppe, die wenigstens ein Phosphoratom aufweist, unterscheiden. Beispielsweise kann eine Struktureinheit (W1) eine Phosphonsäure-Gruppe und eine andere Struktureinheit (W1) eine Phosphorsäureester-Gruppe aufweisen. In einer bevorzugten Ausführungsform unterscheiden sich die im erfindungsgemäß eingesetzten Homopolymeren oder Copolymeren enthaltenen Struktureinheiten (W1) nicht voneinander. In einer anderen bevorzugten Ausführungsform unterscheiden sich die im erfindungsgemäß eingesetzten Homopolymeren oder Copolymeren enthaltenen Struktureinheiten (W1) voneinander. Vorzugsweise weist das erfindungsgemäß eingesetzte Homopolymer oder Copolymer dabei wenigstens zwei oder drei unterschiedliche Struktureinheiten (W1) auf.

Jede Struktureinheit (W1) kann neben der wenigstens einen funktionellen Gruppe, die wenigstens ein Phosphoratom aufweist, gegebenenfalls zudem wenigstens eine weitere funktionelle Gruppe wie beispielsweise wenigstens eine gegenüber einer Isocyanat-Gruppe reaktive funktionelle Gruppe, insbesondere wenigstens eine gegebenenfalls geschützte OH-Gruppe, aufweisen. Ein Beispiel für eine solche Gruppe ist beispielsweise eine Phosphorsäuredialkylester-Gruppe, deren eine Alkyl-Gruppe durch eine OH-Gruppe substituiert ist. Ein anderes Beispiel für eine solche Gruppe ist beispielsweise eine dihydroxy-substituierte Alkyl-Gruppe, deren eine Hydroxy-Funktion mittels eines Phosphorylierungs-Reagenzes in eine funktionelle Gruppe überführt wird, die wenigstens ein Phosphoratom aufweist. Ein entsprechendes zur Herstellung des erfindungsgemäß eingesetzten Homopolymeren oder Copolymeren geeignetes ethylenisch ungesättigtes Monomer ist beispielsweise ein Dihydroxyalkyl(meth)acrylat wie 2,3-Dihydroxypropyl(meth)acrylat, dessen eine OH-Funktion, beispielsweise in 2-Stellung, mittels eines Phosphorylierungsmittels nach Herstellung des Homopolymeren oder Copolymeren oder - noch in Form des Monomeren - vor Herstellung des Homopolymeren oder Copolymeren phosphoryliert worden ist/wird, wohingegen die verbleibende OH-Funktion, beispielsweise in 3-Stellung, eine gegenüber einer Isocyanat-Gruppe reaktive funktionelle Gruppe darstellt.

Somit sind Struktureinheiten innerhalb des erfindungsgemäß eingesetzten Homopolymeren oder Copolymeren, welche sowohl wenigstens eine funktionelle Gruppe, die wenigstens ein Phosphoratom aufweist, als auch wenigstens eine gegenüber einer Isocyanat-Gruppe reaktive funktionelle Gruppe aufweisen, unter die Struktureinheit (W0) oder (W1) zu subsumieren.

In einer bevorzugten Ausführungsform weist die Struktureinheit (W1) jedoch neben der wenigstens einen funktionellen Gruppe, die wenigstens ein Phosphoratom aufweist, keine gegenüber einer Isocyanat-Gruppe reaktive funktionelle Gruppe auf.

Vorzugsweise ist die Struktureinheit (W0) oder die Struktureinheit (W1) innerhalb des erfindungsgemäß eingesetzten Homopolymeren oder Copolymeren jeweils die einzige von allen im Homopolymeren oder Copolymeren enthaltenen Struktureinheiten (W1), (W2) und gegebenenfalls (W3) oder (W0) und gegebenenfalls (W3), die phosphorhaltig ist, d.h. die wenigstens eine funktionelle Gruppe enthält, die wenigstens ein Phosphoratom aufweist.

Jede Struktureinheit (W2) enthält wenigstens eine gegenüber einer Isocyanat-Gruppe reaktive funktionelle Gruppe. Die in dem erfindungsgemäß eingesetzten Homopolymeren oder Copolymeren enthaltenen Struktureinheiten (W2) können sich dabei - abgesehen davon, dass jede der Struktureinheiten (W2) wenigstens eine gegenüber einer Isocyanat-Gruppe reaktive funktionelle Gruppe aufweist - in ihrer chemischen Struktur unterscheiden, je nachdem ob ein einzelnes geeignetes Monomer oder eine Mischung von geeigneten Monomeren zum Einbau der Struktureinheiten (W2) in das erfindungsgemäß eingesetzte Homopolymer oder Copolymer eingesetzt wird. Die in dem erfindungsgemäßen eingesetzten Homopolymeren oder Copolymeren enthaltenen Struktureinheiten (W2) können sich zudem jeweils in der Natur der wenigstens einen gegenüber einer Isocyanat-Gruppe reaktiven funktionellen Gruppe unterscheiden. Beispielsweise kann eine Struktureinheit (W2) eine Hydroxyl-Gruppe und eine andere Struktureinheit (W2) eine Carboxyl-Gruppe aufweisen. In einer bevorzugten Ausführungsform unterscheiden sich die im erfindungsgemäß eingesetzten Homopolymeren oder Copolymeren enthaltenen Struktureinheiten (W2) nicht voneinander. In einer anderen bevorzugten Ausführungsform unterscheiden sich die im erfindungsgemäß eingesetzten Homopolymeren oder Copolymeren enthaltenen Struktureinheiten (W2) voneinander. Vorzugsweise weist das erfindungsgemäß eingesetzte Homopolymer oder Copolymer dabei wenigstens zwei oder drei unterschiedliche Struktureinheiten (W2) auf.

Vorzugsweise enthält jede Struktureinheit (W2) neben der wenigstens einen gegenüber einer Isocyanat-Gruppe reaktiven funktionellen Gruppe keine weitere funktionelle Gruppe. Die Struktureinheit (W2) enthält keine phosphorhaltige Gruppe und somit keine funktionelle Gruppe, die wenigstens ein Phosphoratom aufweist.

Vorzugsweise ist die Struktureinheit (W0) oder (W2) innerhalb des erfindungsgemäß eingesetzten Homopolymeren oder Copolymeren jeweils die einzige von allen im Homopolymeren oder Copolymeren enthaltenen Struktureinheiten (W1), (W2) und gegebenenfalls (W3) oder (W0) und gegebenenfalls (W3), die wenigstens eine gegenüber einer Isocyanat-Gruppe reaktive funktionelle Gruppe aufweist.

Vorzugsweise ist das erfindungsgemäß eingesetzte Homopolymer oder Copolymer aus wiederkehrenden Struktureinheiten (W1) und (W2) sowie gegebenenfalls (W3) aufgebaut oder ist aus wiederkehrenden Struktureinheiten (W0) sowie gegebenenfalls (W3) aufgebaut.

Gegebenenfalls kann das erfindungsgemäß eingesetzte Homopolymer oder Copolymer wenigstens eine weitere von (W1) und (W2) oder von (W0) verschiedene Struktureinheit (W3) umfassen. Vorzugsweise umfasst das erfindungsgemäß eingesetzte Homopolymer oder Copolymer wenigstens eine solche weitere Struktureinheit (W3). Die weitere Struktureinheit (W3) ist von den Struktureinheiten (W1) und (W2) bzw. (W0) verschieden. Vorzugsweise enthält die Struktureinheit (W3) weder eine funktionelle Gruppe, welche wenigstens ein Phosphoratom aufweist, noch wenigstens eine gegenüber einer Isocyanat-Gruppe reaktive funktionelle Gruppe. Somit ist die Struktureinheit (W3) vorzugsweise nicht phosphorhaltig. Die gegebenenfalls in dem erfindungsgemäß eingesetzten Homopolymeren oder Copolymeren enthaltenen Struktureinheiten (W3) können sich dabei in ihrer chemischen Struktur voneinander unterscheiden, je nachdem ob ein einzelnes geeignetes Monomer oder eine Mischung von geeigneten Monomeren zum Einbau der Struktureinheiten (W3) in das erfindungsgemäß eingesetzte Homopolymer oder Copolymer eingesetzt wird. In einer bevorzugten Ausführungsform unterscheiden sich die im erfindungsgemäß eingesetzten Homopolymeren oder Copolymeren enthaltenen Struktureinheiten (W3) nicht voneinander. In einer anderen bevorzugten Ausführungsform unterscheiden sich die im erfindungsgemäß eingesetzten Homopolymeren oder Copolymeren enthaltenen Struktureinheiten (W3) voneinander. Vorzugsweise weist das erfindungsgemäß eingesetzte Homopolymer oder Copolymer dabei wenigstens zwei oder drei unterschiedliche Struktureinheiten (W3) auf.

Vorzugsweise ist das erfindungsgemäß eingesetzte Homopolymer oder Copolymer erhältlich durch radikalische Polymerisation, vorzugsweise Co-Polymerisation. Dabei werden vorzugsweise wenigstens zwei voneinander verschiedene ethylenisch ungesättigte Monomere eingesetzt. Alternativ kann auch zunächst nur ein ethylenisch ungesättigtes Monomer, beispielsweise ein Monomer, welches wenigstens eine gegenüber einer Isocyanat-Gruppe reaktive funktionelle Gruppe aufweist, und gegebenenfalls zudem wenigstens ein zur Ausbildung der Struktureinheit (W3) befähigtes Monomer eingesetzt werden und die in dem dann erhältlichen Homopolymer oder - falls zudem wenigstens ein zur Ausbildung der Struktureinheit (W3) befähigtes Monomer eingesetzt worden ist - die in dem dann erhältlichen Copolymeren enthaltenen gegenüber Isocyanat-Gruppen reaktiven funktionellen Gruppen, teilweise mittels polymeranaloger Reaktionen weiter zum Einbau der Struktureinheiten (W1) oder (W0) umgesetzt werden, beispielsweise durch Phosphorylierung.

In einer bevorzugten Ausführungsform handelt es sich bei dem erfindungsgemäß eingesetzten Homopolymer oder Copolymer um ein Copolymer, welches durch Co-Polymerisation von vorzugsweise wenigstens zwei ethylenisch ungesättigten Verbindungen erhältlich ist, welche vorzugsweise voneinander verschieden sind. Vorzugsweise wird dabei durch diese Polymerisation die Polymerhauptkette des Copolymeren aufgebaut, d.h. sowohl die wenigstens eine funktionelle Gruppe von (W1), welche wenigstens ein Phosphoratom aufweist, als auch die in (W2) enthaltene wenigstens eine gegenüber einer Isocyanat-Gruppe reaktive funktionelle Gruppe, oder die beiden entsprechenden in (W0) vorhandenen funktionellen Gruppen, befinden sich vorzugsweise in den Seitenketten bzw. Seitengruppen und nicht in der Hauptkette des erfindungsgemäß eingesetzten Copolymeren.

Die zur Herstellung des erfindungsgemäß eingesetzten Homopolymeren oder Copolymeren eingesetzten wenigstens zwei ethylenisch ungesättigten Verbindungen weisen vorzugsweise jeweils wenigstens eine endständige ethylenisch ungesättigte Gruppe auf.

Das erfindungsgemäß eingesetzte Homopolymer oder Copolymer kann linear, kammförmig, sternförmig oder verzweigt aufgebaut sein. Vorzugsweise weist das erfindungsgemäß eingesetzte einen linearen oder kammförmigen Aufbau auf.

Vorzugsweise weist das erfindungsgemäß eingesetzte Homopolymer oder Copolymer in den Seitengruppen seiner Polymerkette wenigstens eine funktionelle Gruppe auf, die wenigstens ein Phosphoratom aufweist, und zudem wenigstens eine gegenüber einer Isocyanat-Gruppe reaktive funktionelle Gruppe auf.

Die Verteilung der wenigstens zwei Struktureinheiten (W1) und (W2) oder der wenigstens einen Struktureinheit (W0) sowie gegebenenfalls (W3) im erfindungsgemäß eingesetzte Homopolymeren oder Copolymeren kann sowohl statistisch als auch strukturiert sein. Vorzugsweise ist die Verteilung der wenigstens zwei vorzugsweise wiederkehrenden Struktureinheiten (W1) und (W2) oder der wenigstens einen vorzugsweise wiederkehrenden Struktureinheit (W0) sowie gegebenenfalls (W3) im erfindungsgemäß eingesetzte Homopolymeren oder Copolymeren statistisch.

Vorzugsweise weist das erfindungsgemäß eingesetzte Homopolymer oder Copolymer einen linearen oder kammförmigen Aufbau auf, in dem die Verteilung der wenigstens zwei Struktureinheiten (W1) und (W2) oder der wenigstens einen Struktureinheit (W0) sowie gegebenenfalls (W3) statistisch ist.

Liegt eine strukturierte Verteilung vor, so sind die wenigstens zwei Struktureinheiten (W1) und (W2) sowie gegebenenfalls (W3) im erfindungsgemäß eingesetzten Homopolymeren oder Copolymeren vorzugsweise gradientenartig oder blockartig verteilt. In diesem Fall enthält das erfindungsgemäß eingesetzte Homopolymer oder Copolymer Segmente (S1), in denen sich der Anteil der wenigstens zwei Struktureinheiten (W1) und (W2) oder der Anteil von wenigstens zwei verschiedenen Struktureinheiten (W0) sowie gegebenenfalls (W3) quantitativ von dem Anteil der wenigstens zwei Struktureinheiten (W1) und (W2) oder der wenigstens einen verschiedenen Struktureinheit (W0) sowie gegebenenfalls (W3) in anderen Segmenten (S2) des gleichen erfindungsgemäß eingesetzten Homopolymer- oder Copolymer-Moleküls unterscheidet.

Gradientenartige erfindungsgemäß eingesetzte Homopolymere oder Copolymere sind vorzugsweise Homopolymere oder Copolymere, deren Polymerhauptkette durch Polymerisation von vorzugsweise wenigstens zwei ethylenisch ungesättigten Verbindungen gebildet wird, welche voneinander verschieden sind, und bei denen entlang der Polymerhauptkette die Konzentration wenigstens einer der wenigstens zwei Struktureinheiten (W1) oder (W2) oder einer von wenigstens zwei verschiedenen Struktureinheiten (W0) kontinuierlich abnimmt und die Konzentration des verbleibenden der wenigstens zwei Struktureinheiten (W1) oder (W2) oder der verbleibenden weiteren Struktureinheit (W0) zunimmt. Dem Fachmann ist der Begriff eines "gradientenartigen Copolymeren" bekannt. So werden beispielsweise gradientenartige Copolymere in EP 1 416 019 A1, WO 01/44389 A1 sowie in Macromolecules 2004, 37, Seite 966 ff., Macromolecular Reaction Engineering 2009, 3, Seite 148 ff., Polymer 2008, 49, Seite 1567 ff. und Biomacromolecules 2003, 4, Seite 1386 ff. offenbart.

Blockartige erfindungsgemäß eingesetzte Copolymere (Blockcopolymere) sind vorzugsweise Copolymere, deren Polymerhauptkette durch Zugabe von wenigstens zwei ethylenisch ungesättigten Verbindungen, welche voneinander verschieden sind, zu jeweils unterschiedlichen Zeitpunkten bei Durchführung einer kontrollierten Polymerisationsreaktion zur Herstellung des erfindungsgemäß eingesetzten Copolymeren, gebildet wird. Dabei kann beispielsweise eine Zugabe von mindestens zwei unterschiedlichen ethylenisch ungesättigten Monomere, zwei unterschiedlichen Mischungen ethylenisch ungesättigter Monomere oder eine Zugabe eines ethylenisch ungesättigten Monomeren und einer Mischung von ethylenisch ungesättigten Monomeren erfolgen. Hierbei können alle bei der Polymerisation eingesetzten ethylenisch ungesättigten Monomere bzw. Mischungen von ethylenisch ungesättigten Monomeren während der Durchführung der Polymerisation zum Reaktionsansatz portionsweise zugegeben bzw. zudosiert werden, oder es wird ein ethylenisch ungesättigtes Monomeres oder eine Mischung von ethylenisch ungesättigten Monomeren zu Beginn der Reaktion vorgelegt und die anderen ethylenisch ungesättigten Monomere bzw. Mischungen von ethylenisch ungesättigten Monomeren werden zudosiert. Bei der Zugabe des weiteren ethylenisch ungesättigten Monomeren oder der Mischung von ethylenisch ungesättigten Monomeren oder der Zugabe ethylenisch ungesättigten Monomeren in mehreren Portionen, können die zu Beginn der Polymerisation vorgelegten bzw. die bis zu diesem Zeitpunkt bereits zudosierten, ethylenisch ungesättigten Monomere entweder bereits komplett abreagiert oder aber noch teilweise nicht polymerisiert sein. Durch eine solche Polymerisation weisen erfindungsgemäß eingesetzte Blockcopolymere mindestens einen, gegebenenfalls aber auch mehrere, sprunghaften oder gradientenartigen Übergang in ihren wenigstens zwei Struktureinheiten (W1) oder (W2) oder in wenigstens zwei verschiedenen Struktureinheiten (W0) entlang der Polymerhauptkette auf, der die Grenze zwischen den jeweiligen einzelnen Blöcken darstellt. Solche Blockcopolymerstrukturen, die vorzugsweise zum Einsatz kommen können, sind beispielsweise AB-Diblockcopolymere, ABA- oder ABC-Triblockcopolymere, in denen die A-, B- und C-Blöcke eine unterschiedliche Zusammensetzung der Struktureinheiten (W1), (W2) und gegebenenfalls (W3) repräsentieren. Dem Fachmann ist der Begriff eines "blockartigen Copolymeren" bekannt. So werden beispielsweise in US 6,849,679, US 4,656,226, US 4,755,563, US 5,085,698, US 5,160,372, US 5,219,945, US 5,221,334, US 5,272,201, US 5,519,085, US 5,859,113, US 6,306,994, US 6,316,564, US 6,413,306, EP 1416019, EP 1803753, WO 01/44389 und WO 03/046029 blockartige Copolymere offenbart. Blockcopolymere, die vorzugsweise erfindungsgemäß zum Einsatz kommen, enthalten Blöcke mit einer Mindestanzahl von 3 Struktureinheiten pro Block. Vorzugsweise beträgt die Mindestanzahl an Struktureinheiten pro Block 3, besonders bevorzugt 5 und ganz besonders bevorzugt 8. Besonders bevorzugt handelt es sich um Blockstrukturen vom Typ A-B, A-B-A, B-A-B, A-B-C und /oder A-C-B, wobei sich die Blöcke A, B und C durch ihre jeweilige Zusammensetzung an Struktureinheiten in zwei benachbarten Blöcken um mindestens 5 Gew.% voneinander unterscheidet.

Die Struktureinheiten (W1) und (W2) oder (W0) sowie gegebenenfalls (W3) sind vorzugsweise wiederkehrend. Die wiederkehrenden Struktureinheiten stellen dabei vorzugsweise sich wiederholende chemische Struktureinheiten innerhalb des erfindungsgemäß eingesetzten Homopolymeren oder Copolymeren dar. Vorzugsweise leitet sich jede der im erfindungsgemäß eingesetzten Homopolymeren oder Copolymeren enthaltenen Struktureinheiten (W1), (W2) oder (W0) und gegebenenfalls (W3) von einem zur Herstellung des Homopolymeren oder Copolymeren eingesetzten Monomer ab.

Die erfindungsgemäß eingesetzten Homopolymere oder Copolymere weisen, bezogen auf die Gesamtmenge der wenigstens zwei Struktureinheiten (W1) und (W2) sowie gegebenenfalls (W3) innerhalb der Polymerhauptkette des Homopolymeren oder Copolymeren, folgende Anteile in mol-% auf:
- 1 bis 80 mol-% der Struktureinheiten (W1)
- 1 bis 80 mol-% der Struktureinheiten (W2) und
- 0 bis 98 mol-% der Struktureinheiten (W3)
oder weisen, bezogen auf die Gesamtmenge der wenigstens einen Struktureinheit (W0) sowie gegebenenfalls (W3) innerhalb der Polymerhauptkette des Homopolymeren oder Copolymeren, folgende Anteile in mol-% auf:
- 1 bis 100 mol-% der Struktureinheiten (W0) und
- 0 bis 99 mol-% der Struktureinheiten (W3).

Dem Fachmann ist dabei klar, dass die Gesamtmenge der wenigstens zwei Struktureinheiten (W1) und (W2) oder der wenigstens einen Struktureinheit (W0) sowie gegebenenfalls (W3) innerhalb der Polymerhauptkette des Homopolymeren oder Copolymeren insgesamt 100 mol-% beträgt. Die Polymerhauptkette des erfindungsgemäß eingesetzten Homopolymeren oder Copolymeren ist dabei vorzugsweise die durch radikalische Polymerisation wie Co-Polymerisation von vorzugsweise wenigstens zwei voneinander verschiedenen ethylenisch ungesättigten Monomeren erhältliche Polymerkette.

Vorzugsweise sind
70 bis 100 mol-% der wenigstens ein Phosphoratom aufweisenden wenigstens einen funktionellen Gruppe jeder der Struktureinheiten (W1) oder (W0) des Homopolymeren oder Copolymeren jeweils unabhängig voneinander ausgewählt sind aus der Gruppe bestehend aus Phosphonsäure-Gruppen, zumindest partiell veresterten Phosphonsäure-Gruppen, zumindest partiell veresterten Phosphorsäure-Gruppen und jeweils entsprechenden Salzen dieser Gruppen,
   und/oder
70 bis 100 mol-% der wenigstens einen gegenüber einer Isocyanat-Gruppe reaktiven funktionellen Gruppe jeder der Struktureinheiten (W2) oder (W0) und gegebenenfalls der Struktureinheiten (W1) des Homopolymeren oder Copolymeren jeweils unabhängig voneinander ausgewählt sind aus der Gruppe bestehend aus gegebenenfalls geschützten Hydroxyl-Gruppen, insbesondere freien Hydroxyl-Gruppen, Thiol-Gruppen, Epoxid-Gruppen, Carboxyl-Gruppen, gegebenenfalls geschützten primären Amino-Gruppen und gegebenenfalls geschützten sekundären Amino-Gruppen, besonders bevorzugt ausgewählt aus der Gruppe bestehend aus gegebenenfalls geschützten Hydroxyl-Gruppen, insbesondere freien Hydroxyl-Gruppen, Epoxid-Gruppen, gegebenenfalls geschützten primären Amino-Gruppen und gegebenenfalls geschützten sekundären Amino-Gruppen, ganz besonders bevorzugt ausgewählt aus der Gruppe bestehend aus gegebenenfalls geschützten Hydroxyl-Gruppen und gegebenenfalls geschützten primären Amino-Gruppen und gegebenenfalls geschützten sekundären Amino-Gruppen, insbesondere Hydroxyl-Gruppen.

Vorzugsweise weisen die erfindungsgemäß eingesetzten Copolymere, bezogen auf die Gesamtmenge der wenigstens zwei Struktureinheiten (W1) und (W2) sowie (W3) innerhalb der Polymerhauptkette des Copolymeren, folgende Anteile in mol-% auf:
- 3 bis 40 mol-% der Struktureinheiten (W1)
- 3 bis 40 mol-% der Struktureinheiten (W2) und
- 20 bis 94 mol-% der Struktureinheiten (W3)
oder weisen, bezogen auf die Gesamtmenge der wenigstens einen Struktureinheit (W0) sowie gegebenenfalls (W3) innerhalb der Polymerhauptkette des Copolymeren, folgende Anteile in mol-% auf:
- 6 bis 80 mol-% der Struktureinheiten (W0) und
- 20 bis 94 mol-% der Struktureinheiten (W3).

In einer weiteren bevorzugten Ausführungsform weisen die erfindungsgemäß eingesetzten Copolymere, bezogen auf die Gesamtmenge der wenigstens zwei Struktureinheiten (W1) und (W2) sowie (W3) innerhalb der Polymerhauptkette des Copolymeren, folgende Anteile in mol-% auf:
- 4 bis 30 mol-% der Struktureinheiten (W1)
- 4 bis 30 mol-% der Struktureinheiten (W2) und
- 40 bis 92 mol-% der Struktureinheiten (W3)
oder weisen, bezogen auf die Gesamtmenge der wenigstens einen Struktureinheit (W0) sowie gegebenenfalls (W3) innerhalb der Polymerhauptkette des Copolymeren, folgende Anteile in mol-% auf:
- 8 bis 60 mol-% der Struktureinheiten (W0) und
- 40 bis 92 mol-% der Struktureinheiten (W3).

In einer ganz besonders bevorzugten Ausführungsform weisen die erfindungsgemäß eingesetzten Copolymere, bezogen auf die Gesamtmenge der wenigstens zwei Struktureinheiten (W1) und (W2) sowie (W3) innerhalb der Polymerhauptkette des Copolymeren, folgende Anteile in mol-% auf:
- 7 bis 20 mol-% der Struktureinheiten (W1)
- 7 bis 20 mol-% der Struktureinheiten (W2) und
- 60 bis 86 mol-% der Struktureinheiten (W3)
oder weisen, bezogen auf die Gesamtmenge der wenigstens einen Struktureinheit (W0) sowie gegebenenfalls (W3) innerhalb der Polymerhauptkette des Copolymeren, folgende Anteile in mol-% auf:
- 14 bis 40 mol-% der Struktureinheiten (W0) und
- 60 bis 86 mol-% der Struktureinheiten (W3).

Insbesondere weisen die erfindungsgemäß eingesetzten Copolymere, bezogen auf die Gesamtmenge der wenigstens zwei Struktureinheiten (W1) und (W2) sowie (W3) innerhalb der Polymerhauptkette des Copolymeren, folgende Anteile in mol-% auf:
- 10 bis 17 mol-% der Struktureinheiten (W1)
- 6 bis 12 mol-% der Struktureinheiten (W2) und
- 71 bis 84 mol-% der Struktureinheiten (W3)
oder weisen, bezogen auf die Gesamtmenge der wenigstens einen Struktureinheit (W0) sowie gegebenenfalls (W3) innerhalb der Polymerhauptkette des Copolymeren, folgende Anteile in mol-% auf:
- 16 bis 29 mol-% der Struktureinheiten (W0) und
- 71 bis 84 mol-% der Struktureinheiten (W3).

Die erfindungsgemäß eingesetzten Homopolymere oder Copolymere weisen vorzugsweise ein zahlenmittleres Molekulargewicht in einem Bereich von 600 bis 250 000 g/mol, noch bevorzugter von 850 bis 250 000 g/mol oder von 1 000 bis 250 000 g/mol, besonders bevorzugt von 850 bis 150 000 g/mol oder von 1 000 bis 150 000 g/mol, ganz besonders bevorzugt von 850 bis 100 000 g/mol oder von 1 000 bis 100 000 g/mol, insbesondere bevorzugt von 850 bis 50 000 g/mol oder von 1 000 bis 50 000 g/mol, noch bevorzugter von 850 bis 25 000 g/mol oder von 1 000 bis 25 000 g/mol, am meisten bevorzugt von 1 250 bis 10 000 g/mol oder von 1 500 bis 10 000 g/mol und insbesondere am meisten bevorzugt von 1 250 bis 6 000 g/mol oder von 1 500 bis 6 000 g/mol. Dem Fachmann ist dabei bekannt, dass sich das gewünschte zahlenmittlere Molekulargewicht durch geeignete Wahl der Reaktionsbedingungen bei der Herstellung der erfindungsgemäß eingesetzten Homopolymere oder Copolymere steuern lässt wie beispielsweise der Initiatorkonzentration der bei der Herstellung eingesetzten Initiatoren, der Polymerisationstemperatur, des Lösemittels und/oder der Wahl eines Kettenüberträgers. Typische Kettenüberträger zur Erzielung des gewünschten zahlenmittleren Molekulargewichts sind beispielsweise Mercaptane, sekundäre Alkohole, Dimere wie Dimere von (Meth)acrylaten oder von α-Methylstyrol und/oder halogenierte Kohlenwasserstoffe. Die Bestimmung des zahlenmittleren Molekulargewichts erfolgt dabei mittels GelpermeationsChromatographie (GPC) gegen Polystyrol-Standards gemäß der nachstehend beschriebenen Methode.

Das erfindungsgemäß eingesetzte Homopolymer oder Copolymer ist vorzugsweise erhältlich durch radikalische Polymerisation von
(a) wenigstens einem zur Ausbildung der Struktureinheit (W1) befähigten ethylenisch ungesättigten Monomeren, welches wenigstens eine funktionelle Gruppe enthält, die wenigstens ein Phosphoratom aufweist, wenigstens einem zur Ausbildung der Struktureinheit (W2) befähigten ethylenisch ungesättigten Monomeren, welches wenigstens eine gegenüber einer Isocyanat-Gruppe reaktive funktionelle Gruppe, vorzugsweise wenigstens eine gegebenenfalls geschützte Hydroxyl-Gruppe oder wenigstens eine gegebenenfalls geschützte Carboxyl-Gruppe oder wenigstens eine gegebenenfalls geschützte primäre oder sekundäre Amino-Gruppe, aufweist, und gegebenenfalls wenigstens einem zur Ausbildung der Struktureinheit (W3) befähigten ethylenisch ungesättigten Monomeren,
   oder durch radikalische Polymerisation von
(b1) wenigstens zwei voneinander verschiedenen zur Ausbildung der Struktureinheit (W2) befähigten ethylenisch ungesättigten Monomeren, welche jeweils unabhängig voneinander wenigstens eine gegenüber einer Isocyanat-Gruppe reaktive funktionelle Gruppe aufweisen, vorzugsweise jeweils unabhängig voneinander wenigstens eine gegebenenfalls geschützte Hydroxyl-Gruppe und/oder wenigstens eine Carboxyl-Gruppe und/oder wenigstens eine gegebenenfalls geschützte primäre oder sekundäre Amino-gruppe aufweisen, und gegebenenfalls wenigstens einem zur Ausbildung der Struktureinheit (W3) befähigten ethylenisch ungesättigten Monomeren,
   oder
   von wenigstens einem zur Ausbildung der Struktureinheit (W2) befähigten ethylenisch ungesättigten Monomeren, welches wenigstens eine gegenüber einer Isocyanat-Gruppe reaktive funktionelle Gruppe, vorzugsweise wenigstens eine gegebenenfalls geschützte Hydroxyl-Gruppe oder wenigstens eine gegebenenfalls geschützte Carboxyl-Gruppe oder wenigstens eine gegebenenfalls geschützte primäre oder sekundäre Amino-Gruppe aufweist, und wenigstens einem zur Ausbildung der Struktureinheit (W3) befähigten ethylenisch ungesättigten Monomeren,
   und
(b2) partieller Umsetzung, vorzugsweise durch Phosphorylierung, der in den Struktureinheiten (W2) des nach Schritt (b1) erhältlichen Homopolymeren oder Copolymeren enthaltenen, gegenüber Isocyanat-Gruppen reaktiven funktionellen Gruppen, vorzugsweise Hydroxyl-Gruppen, in funktionelle Gruppen, die wenigstens ein Phosphoratom aufweisen, zur Ausbildung von Struktureinheiten (W1) oder (W0) innerhalb des Homopolymeren oder Copolymeren,
   oder durch radikalische Polymerisation von
(c) wenigstens einem zur Ausbildung der Struktureinheit (W0) befähigten ethylenisch ungesättigten Monomeren, welches sowohl wenigstens eine funktionelle Gruppe enthält, die wenigstens ein Phosphoratom aufweist, als auch wenigstens eine gegenüber einer Isocyanat-Gruppe reaktive funktionelle Gruppe aufweist, und gegebenenfalls wenigstens einem zur Ausbildung der Struktureinheit (W3) befähigten ethylenisch ungesättigten Monomeren.

Besonders bevorzugt ist das erfindungsgemäß eingesetzte Homopolymer oder Copolymer erhältlich durch radikalische Polymerisation von
(b1 a) wenigstens zwei voneinander verschiedenen zur Ausbildung der Struktureinheit (W2) befähigten ethylenisch ungesättigten Monomeren, welche jeweils wenigstens eine gegenüber einer Isocyanat-Gruppe reaktive gegebenenfalls geschützte Hydroxyl-Gruppe aufweisen, und gegebenenfalls wenigstens einem zur Ausbildung der Struktureinheit (W3) befähigten ethylenisch ungesättigten Monomeren, oder von
   wenigstens einem zur Ausbildung der Struktureinheit (W2) befähigten ethylenisch ungesättigten Monomeren, welches wenigstens eine gegenüber einer Isocyanat-Gruppe reaktive gegebenenfalls geschützte Hydroxyl-Gruppe aufweist, und wenigstens einem zur Ausbildung der Struktureinheit (W3) befähigten ethylenisch ungesättigten Monomeren,
   und
(b2a) partieller Phosphorylierung der in den Struktureinheiten (W2) des nach Schritt (b1a) erhältlichen Homopolymeren oder Copolymeren enthaltenen Hydroxyl-Gruppen zur Ausbildung von Struktureinheiten (W1) oder (W0) innerhalb des Homopolymeren oder Copolymeren.

Die reaktive Hydroxyl-Gruppe kann dabei jeweils auch in geschützter Form vorliegen.

In einer bevorzugten Ausführungsform enthält jede
Struktureinheit (W1) oder (W0) als wenigstens ein Phosphoratom aufweisende funktionelle Gruppe wenigstens eine Gruppe ausgewählt aus der Gruppe bestehend aus Phosphonsäure-Gruppen, zumindest partiell veresterte Phosphonsäure-Gruppen, zumindest partiell veresterte Phosphorsäure-Gruppen, und jeweils entsprechende Salze dieser Gruppen, und
jede Struktureinheit (W2) oder (W0) und gegebenenfalls (W1) als wenigstens eine gegenüber einer Isocyanat-Gruppe reaktive funktionelle Gruppe wenigstens eine Gruppe ausgewählt aus der Gruppe bestehend aus Hydroxyl-Gruppen, Thiol-Gruppen, Epoxid-Gruppen, Carboxyl-Gruppen primären Amino-Gruppen und sekundären Amino-Gruppen.

### Struktureinheiten (W0) und (W1)

Jede Struktureinheit (W1) und jede Struktureinheit (W0) innerhalb des erfindungsgemäß eingesetzten Homopolymeren oder Copolymeren enthält wenigstens eine funktionelle Gruppe, die wenigstens ein, vorzugsweise genau ein, Phosphoratom aufweist.

Vorzugsweise enthält jede Struktureinheit (W1) oder (W0) als wenigstens ein Phosphoratom aufweisende funktionelle Gruppe wenigstens eine Gruppe ausgewählt aus der Gruppe bestehend aus Phosphonsäure-Gruppen, zumindest partiell veresterten Phosphonsäure-Gruppen, zumindest partiell veresterten Phosphorsäure-Gruppen, und jeweils entsprechenden Salze dieser Gruppen wie beispielsweise Phosphonate oder Phosphate. Bei den Phosphonsäureester-Gruppen und Phosphorsäureester-Gruppen kann es sich dabei jeweils um vollständig oder nur partiell veresterte Gruppen handeln. Beispielsweise umfasst eine Phosphorsäureester-Gruppe sowohl eine Phosphorsäuremonoester-Gruppe als auch eine Phosphorsäurediester-Gruppe als auch eine Phosphorsäuretriester-Gruppe. Einem Fachmann ist klar, dass eine vollständig veresterte Phosphonsäure-Gruppe bzw. eine vollständig veresterte Phosphorsäure-Gruppe nicht in Form eines Salzes vorliegen kann. Besonders bevorzugt liegen die Phosphonsäure-Gruppen und partiell veresterten Phosphonsäure-Gruppen und Phosphorsäure-Gruppen jeweils in unversalzter Form vor. Zur partiellen oder vollständigen Veresterung der Phosphonsäureester-Gruppen und Phosphorsäureester-Gruppen geeignete einsetzbare Alkohole sind vorzugsweise C₁₋₈-aliphatische Alkohole, besonders bevorzugt C₁₋₈-Alkyl-Alkohole wie Methanol, Ethanol, n-Propanol, iso-Propanol, n-Butanol, iso-Butanol, und tert-Butanol.

Vorzugsweise sind 70 bis 100 mol-% der wenigstens ein Phosphoratom aufweisenden wenigstens einen funktionellen Gruppe jeder der Struktureinheiten (W1) oder (W0) des Homopolymeren oder Copolymeren jeweils unabhängig voneinander ausgewählt sind aus der Gruppe bestehend aus Phosphonsäure-Gruppen, zumindest partiell veresterten Phosphonsäure-Gruppen, zumindest partiell veresterten Phosphorsäure-Gruppen und jeweils entsprechenden Salzen dieser Gruppen.

Dem Fachmann ist dabei im Zusammenhang mit den vorstehend genannten zumindest partiell veresterten Phosphorsäure-Gruppen klar, dass die Verknüpfung einer solchen Gruppe an die Struktureinheit (W1) vorzugsweise über das Sauerstoffatom einer P-O-Bindung innerhalb dieser Gruppe erfolgt. Somit erfolgt die Verknüpfung einer solchen Gruppe mit der Struktureinheit (W1) vorzugsweise immer über Ausbildung bzw. "Verbrauch" einer Esterbindung. Die weiteren P-OH-Gruppen der zumindest partiell veresterten Phosphorsäure-Gruppe können mit geeigneten einsetzbaren Alkoholen wie C₁₋₈-aliphatische Alkoholen verestert sein. Ist genau eine der weiteren P-OH-Gruppen mit einem Alkohol verestert so handelt es sich bei der zumindest partiell veresterten Phosphorsäure-Gruppe beispielsweise um einen Phosphorsäurediester. Analoges gilt für die Struktureinheit (W0).

Die Struktureinheit (W0) enthält sowohl wenigstens eine funktionelle Gruppe, die wenigstens ein Phosphoratom aufweist, als auch wenigstens eine gegenüber einer Isocyanat-Gruppe reaktive funktionelle Gruppe. Als funktionelle Gruppen, die wenigstens ein Phosphoratom aufweisen, eignen sich sämtliche entsprechende Gruppen, die auch als entsprechende funktionelle Gruppen, die wenigstens ein Phosphoratom aufweisen, in der Struktureinheit (W1) enthalten sein können. Als funktionelle Gruppen, die gegenüber einer Isocyanat-Gruppe reaktive funktionelle Gruppe sind, eignen sich sämtliche entsprechende Gruppen, die auch als entsprechende funktionelle Gruppen in der Struktureinheit (W2) enthalten sein können.

Der Einbau der vorzugsweise wiederkehrenden Struktureinheit (W1)) in die chemische Struktur des erfindungsgemäßen Homopolymeren oder Copolymeren kann vorzugsweise mittels zweier unterschiedlicher Verfahrensvarianten (*Verfahrensvarianten 1 und 2*) erzielt werden, wobei die *Verfahrensvariante 2* bevorzugt ist. Der Einbau der vorzugsweise wiederkehrenden Struktureinheit (W0) in die chemische Struktur des erfindungsgemäßen Homopolymeren oder Copolymeren kann ebenfalls mittels *Verfahrensvariante 2* erzielt werden.

### Verfahrensvariante 1

Gemäß der Verfahrensvariante 1 ist das erfindungsgemäß eingesetzte Homopolymer oder Copolymere vorzugsweise erhältlich durch radikalische Polymerisation von
(a) wenigstens einem zur Ausbildung der Struktureinheit (W1) befähigten ethylenisch ungesättigten Monomeren, welches wenigstens eine funktionelle Gruppe enthält, die wenigstens ein Phosphoratom aufweist, wenigstens einem zur Ausbildung der Struktureinheit (W2) befähigten ethylenisch ungesättigten Monomeren, welches wenigstens eine, gegebenenfalls auch zwei, gegenüber einer Isocyanat-Gruppe reaktive funktionelle Gruppe, vorzugsweise wenigstens eine, gegebenenfalls auch zwei, Hydroxyl-Gruppe, aufweist, und gegebenenfalls wenigstens einem zur Ausbildung der Struktureinheit (W3) befähigten ethylenisch ungesättigten Monomeren.

Dabei erfolgt der Einbau der Struktureinheit (W1) in die chemische Struktur des erfindungsgemäß eingesetzten Homopolymeren oder Copolymeren, indem zur Herstellung des erfindungsgemäß eingesetzten Homopolymeren oder Copolymeren wenigstens ein zur Ausbildung der Struktureinheit (W1) befähigtes ethylenisch ungesättigtes Monomeren, welches wenigstens eine funktionelle Gruppe enthält, die wenigstens ein Phosphoratom aufweist, eingesetzt wird. In diesem Fall leitet sich die Struktureinheit (W1) des erfindungsgemäß eingesetzten Homopolymeren oder Copolymeren von wenigstens einem entsprechenden ethylenisch ungesättigten Monomer ab, welches wenigstens eine funktionelle Gruppe enthält, welche wenigstens ein Phosphoratom aufweist.

Gegebenenfalls kann das zur Ausbildung der Struktureinheit (W1) befähigte ethylenisch ungesättigte Monomere zudem wenigstens eine gegenüber einer Isocyanat-Gruppe reaktive Gruppe wie wenigstens eine OH-Gruppe aufweisen. Ein solches Monomer ist beispielsweise ein Dihydroxyalkyl(meth)acrylat wie 2,3-Dihydroxypropyl(meth)acrylat, dessen eine OH-Funktion, beispielsweise in 2-Stellung, mittels eines Phosphorylierungsmittels phosphoryliert ist, wohingegen die verbleibende OH-Funktion, beispielsweise in 3-Stellung, eine gegenüber einer Isocyanat-Gruppe reaktive funktionelle Gruppe darstellt.

Vorzugsweise leitet sich die Struktureinheit (W1) des erfindungsgemäß eingesetzten Homopolymeren oder Copolymeren von wenigstens einem ethylenisch ungesättigten Monomeren ab, welches wenigstens eine wenigstens ein Phosphoratom aufweisende funktionelle Gruppe enthält, die ausgewählt ist aus der Gruppe bestehend aus Phosphonsäure-Gruppen, zumindest partiell veresterten Phosphonsäure-Gruppen, zumindest partiell veresterten Phosphorsäure-Gruppen, und jeweils entsprechenden Salze dieser Gruppen wie beispielsweise Phosphonate oder Phosphate.

Besonders bevorzugt leitet sich die Struktureinheit (W1) des erfindungsgemäß eingesetzten Homopolymeren oder Copolymeren von wenigstens einem ethylenisch ungesättigten Monomeren ab, welches ausgewählt ist aus der Gruppe bestehend aus
Vinylphosphonsäure, Vinylphosphonsäure in zumindest partiell mittels eines C₁₋₈-Alkyl-Alkohols veresterter Form, Vinylphosphorsäure in zumindest partiell mittels eines C₁₋₈-Alkyl-Alkohols veresterter Form,
Alkyl(meth)acrylaten, Cycloalkyl(meth)acrylaten, Aryl(meth)acrylaten und Alkylaryl(meth)acrylaten, wobei die Alkyl-Reste, Cycloalkyl-Reste, Aryl-Reste bzw. Alkylaryl-Reste dieser (Meth)acrylate jeweils wenigstens eine wenigstens ein Phosphoratom aufweisende funktionelle Gruppe wie eine Phosponat- oder Phosphat-Gruppe, insbesondere wenigstens eine Phosphat-Gruppe, aufweisen, und jeweils zudem gegebenenfalls wenigstens eine gegenüber einer Isocyanat-Gruppe reaktive Gruppe aufweisen können.

Alkyl(meth)acrylate sind diesbezüglich vorzugsweise Alkyl(meth)acrylate von unverzweigten oder verzweigten aliphatischen Alkoholen mit 1 bis 22, vorzugsweise 1 bis 12, Kohlenstoffatomen wie zum Beispiel Methyl(meth)acrylat, Ethyl(meth)acrylat, n-Butyl(meth)acrylat, i-Butyl(meth)acrylat, t-Butyl(meth)acrylat, Lauryl(meth)acrylat, 2-Ethylhexyl(meth)acrylat, Stearyl(meth)acrylat, wobei die Alkyl-Reste dieser (Meth)acrylate jeweils wenigstens eine wenigstens ein Phosphoratom aufweisende funktionelle Gruppe, insbesondere wenigstens eine Phosphat-Gruppe, aufweisen und jeweils zudem gegebenenfalls wenigstens eine gegenüber einer Isocyanat-Gruppe reaktive Gruppe aufweisen können.

Cycloalkyl(meth)acrylate sind diesbezüglich vorzugsweise Cycloalkyl(meth)acrylate von cycloaliphatischen Alkoholen mit 3 bis 22, vorzugsweise 3 bis 12, Kohlenstoffatomen wie zum Beispiel Cyclohexyl(meth)acrylat oder Isobornyl(meth)acrylat, wobei die Cycloalkyl-Reste dieser (Meth)acrylate jeweils wenigstens eine wenigstens ein Phosphoratom aufweisende funktionelle Gruppe, insbesondere wenigstens eine Phosphat-Gruppe, aufweisen und jeweils zudem gegebenenfalls wenigstens eine gegenüber einer Isocyanat-Gruppe reaktive Gruppe aufweisen können.

Aryl(meth)acrylate sind diesbezüglich vorzugsweise Aryl(meth)acrylate von aromatischen Alkoholen mit 6 bis 22, vorzugsweise 6 bis 12, Kohlenstoffatomen, wobei die Aryl-Reste jeweils unsubstituiert oder bis zu vierfach substituiert sein können, wie zum Beispiel 4-Nitrophenylmethacrylat oder Phenyl(meth)acrylat, und wobei die Aryl-Reste dieser (Meth)acrylate jeweils wenigstens eine wenigstens ein Phosphoratom aufweisende funktionelle Gruppe, insbesondere wenigstens eine Phosphat-Gruppe, aufweisen und jeweils zudem gegebenenfalls wenigstens eine gegenüber einer Isocyanat-Gruppe reaktive Gruppe aufweisen können.

Alkylaryl(meth)acrylate sind diesbezüglich vorzugsweise Alkylaryl(meth)acrylate von Alkoholen mit 6 bis 22, vorzugsweise 6 bis 12, Kohlenstoffatomen, die sowohl einen aliphatischen als auch einen aromatischen Rest aufweisen, wobei die Aryl-Reste jeweils unsubstituiert oder bis zu vierfach substituiert sein können, wie zum Beispiel Benzyl(meth)acrylat, und wobei die Alkylaryl-Reste dieser (Meth)acrylate jeweils wenigstens eine wenigstens ein Phosphoratom aufweisende funktionelle Gruppe, insbesondere wenigstens eine Phosphat-Gruppe, aufweisen und jeweils zudem gegebenenfalls wenigstens eine gegenüber einer Isocyanat-Gruppe reaktive Gruppe aufweisen können.

Der Ausdruck "(Meth)acryl" umfasst im Sinne der vorliegenden Erfindung jeweils "Methacryl" und/oder "Acryl".

Ganz besonders bevorzugt leitet sich die Struktureinheit (W1) des erfindungsgemäß eingesetzten Homopolymeren oder Copolymeren von wenigstens einem ethylenisch ungesättigten Monomeren ab, welches ausgewählt ist aus der Gruppe bestehend aus
Vinylphosphonsäure, Vinylphosphonsäure in zumindest partiell mittels eines C₁₋₈-Alkyl-Alkohols veresterter Form, Vinylphosphorsäure in zumindest partiell mittels eines C₁₋₈-Alkyl-Alkohols veresterter Form, 2-(Meth)acryloyloxyethylphosphat, 3-(Meth)acryloyloxypropylphosphat, 4-(Meth)acryloyloxybutylphosphat, 10-Methacryloyloxydecyldihydrogenphosphat, Ethyl-2-[4-(dihydroxyphosphoryl)-2-oxabutyl]acrylat und 2,4,6-Trimethylphenyl-2-[4-(dihydroxyphosphoryl)-2-oxabutyl]acrylat.

Insbesondere besonders bevorzugt leitet sich die Struktureinheit (W1) des erfindungsgemäß eingesetzten Homopolymeren oder Copolymeren von wenigstens einem ethylenisch ungesättigten Monomeren ab, welches ausgewählt ist aus der Gruppe bestehend aus
Vinylphosphonsäure, Vinylphosphonsäure in zumindest partiell mittels eines C₁₋₈-Alkyl-Alkohols veresterter Form wie zum Beispiel Vinylphosphonsäuredimethylester oder Vinylphosphonsäurediethylester, Vinylphosphorsäure in zumindest partiell mittels eines C₁₋₈-Alkyl-Alkohols veresterter Form, 2-(Meth)acryloyloxyethylphosphat, 3-(Meth)acryloyloxypropylphosphat und 4-(Meth)acryloyloxybutylphosphat.

Es ist jedoch nicht zwingend erforderlich, dass der Einbau der Struktureinheit (W1) in die chemische Struktur des erfindungsgemäß eingesetzten Homopolymeren oder Copolymeren dadurch erfolgt, dass zur Herstellung des Homopolymeren oder Copolymeren mittels einer vorzugsweise radikalischen Polymerisationsreaktion wenigstens ein ethylenisch ungesättigtes Monomer eingesetzt wird, welches neben wenigstens einer vorhandenen Kohlenstoff-Kohlenstoff-Doppelbindung zudem wenigstens eine funktionelle Gruppe enthält, welche wenigstens ein Phosphoratom aufweist (*Verfahrensvariante 1*). Alternativ kann der Einbau der vorzugsweise wiederkehrenden Struktureinheit (W1) - genau wie auch der vorzugsweise wiederkehrenden Struktureinheit (W0) - in die chemische Struktur des erfindungsgemäßen Homopolymeren oder Copolymeren mittels einer zweiten bevorzugten Verfahrensvariante (*Verfahrensvariante 2*) erzielt werden:

### Verfahrensvariante 2

Alternativ ist es auch möglich, dass zum Einbau der Struktureinheit (W1) oder (W0) bei der vorzugsweise radikalischen Polymerisation ein entsprechendes nichtphosphorhaltiges Monomer zum Einsatz kommt, d.h. wenigstens ein ethylenisch ungesättigtes Monomer eingesetzt wird, welches neben wenigstens einer vorhandenen Kohlenstoff-Kohlenstoff-Doppelbindung keine funktionelle Gruppe enthält, welche wenigstens ein Phosphoratom aufweist.

Vorzugsweise erfolgt der Einbau der wiederkehrenden Struktureinheit (W1) oder (W0) in die chemische Struktur des erfindungsgemäß eingesetzten Homopolymeren oder Copolymeren daher, indem zur Herstellung des Homopolymeren oder Copolymeren mittels einer vorzugsweise radikalischen Polymerisationsreaktion wenigstens ein ethylenisch ungesättigtes Monomer eingesetzt wird, welches neben wenigstens einer vorhandenen vorzugsweise endständigen Kohlenstoff-Kohlenstoff-Doppelbindung keine funktionelle Gruppe enthält, welche wenigstens ein Phosphoratom aufweist, sondern wenigstens eine funktionelle Gruppe aufweist, die nach Herstellung des Homopolymeren oder Copolymeren vorzugsweise mittels einer polymeranalogen Reaktion wie beispielsweise einer Phosphorylierung in eine funktionelle Gruppe überführt wird, welche wenigstens ein Phosphoratom aufweist.

In einer bevorzugten Ausführungsform erfolgt der Einbau der Struktureinheiten (W1) und (W2) oder (W0) und gegebenenfalls (W3) in die chemische Struktur des erfindungsgemäß eingesetzten Copolymeren, indem zur Herstellung des Copolymeren mittels einer vorzugsweise radikalischen Polymerisationsreaktion wenigstens zwei voneinander verschiedene ethylenisch ungesättigte Monomere eingesetzt werden, wobei wenigstens eines dieser Monomere neben wenigstens einer vorhandenen vorzugsweise endständigen Kohlenstoff-Kohlenstoff-Doppelbindung wenigstens eine freie oder gegebenenfalls geschützte OH-Gruppe aufweist, und wobei die nach der Co-Polymerisationsreaktion im Copolymeren enthaltenen freien oder geschützten OH-Gruppen gegebenenfalls nach ihrer Entschützung teilweise mit wenigstens einem Phosphorylierungsmittel zu funktionellen Gruppen umgesetzt werden, welche wenigstens ein Phosphoratom aufweisen.

In einer weiteren bevorzugten Ausführungsform erfolgt der Einbau der Struktureinheiten (W1) und (W2) oder der Struktureinheit (W0) sowie (W3) in die chemische Struktur des erfindungsgemäß eingesetzten Homopolymeren oder Copolymeren, indem zur Herstellung des erfindungsgemäß eingesetzten Copolymeren mittels einer vorzugsweise radikalischen Polymerisationsreaktion wenigstens ein erstes ethylenisch ungesättigtes Monomer eingesetzt wird, welches neben wenigstens einer vorhandenen vorzugsweise endständigen Kohlenstoff-Kohlenstoff-Doppelbindung wenigstens eine freie oder gegebenenfalls geschützte OH-Gruppe aufweist, und wenigstens ein weiteres von dem ersten ethylenisch ungesättigten Monomer verschiedenes ethylenisch ungesättigtes Monomer eingesetzt wird, welches neben wenigstens einer vorhandenen vorzugsweise endständigen Kohlenstoff-Kohlenstoff-Doppelbindung weder eine freie oder gegebenenfalls geschützte OH-Gruppe noch eine wenigstens ein Phosphoratom aufweisende funktionelle Gruppe aufweist, wobei die nach der Polymerisationsreaktion im Homopolymeren oder Copolymeren enthaltenen freien oder gegebenenfalls geschützten OH-Gruppen gegebenenfalls nach ihrer Entschützung teilweise mit wenigstens einem Phosphorylierungsmittel zu funktionellen Gruppen umgesetzt werden, welche wenigstens ein Phosphoratom aufweisen.

Gemäß der *Verfahrensvariante 2* ist das erfindungsgemäß eingesetzte Homopolymere oder Copolymere vorzugsweise erhältlich durch radikalische Polymerisation von
(b1) wenigstens zwei voneinander verschiedenen zur Ausbildung der Struktureinheit (W2) befähigten ethylenisch ungesättigten Monomeren, welche jeweils unabhängig voneinander wenigstens eine gegenüber einer Isocyanat-Gruppe reaktive funktionelle Gruppe aufweisen, vorzugsweise jeweils unabhängig voneinander wenigstens eine gegebenenfalls geschützte Hydroxyl-Gruppe und/oder wenigstens eine gegebenenfalls geschützte Carboxyl-Gruppe aufweisen, und gegebenenfalls wenigstens einem zur Ausbildung der Struktureinheit (W3) befähigten ethylenisch ungesättigten Monomeren,
   oder
   von wenigstens einem zur Ausbildung der Struktureinheit (W2) befähigten ethylenisch ungesättigten Monomeren, welches wenigstens eine gegenüber einer Isocyanat-Gruppe reaktive funktionelle Gruppe, vorzugsweise wenigstens eine gegebenenfalls geschützte Hydroxyl-Gruppe aufweist, und wenigstens einem zur Ausbildung der Struktureinheit (W3) befähigten ethylenisch ungesättigten Monomeren,
   und
(b2) partieller Umsetzung, vorzugsweise durch Phosphorylierung, der in den Struktureinheiten (W2) des nach Schritt (b1) erhältlichen Homopolymeren oder Copolymeren enthaltenen, gegenüber Isocyanat-Gruppen reaktiven funktionellen Gruppen, vorzugsweise Hydroxyl-Gruppen, in funktionelle Gruppen, die wenigstens ein Phosphoratom aufweisen, zur Ausbildung von Struktureinheiten (W1) oder (W0) innerhalb des Homopolymeren oder Copolymeren.

Die reaktive Hydroxyl-Gruppe bzw. Carboxyl-Gruppe kann dabei jeweils auch in geschützter Form vorliegen.

Die Struktureinheit (W0) kann alternativ auch durch radikalische Co-Polymerisation von
(c) wenigstens einem zur Ausbildung der Struktureinheit (W0) befähigten ethylenisch ungesättigten Monomeren, welches sowohl wenigstens eine funktionelle Gruppe enthält, die wenigstens ein Phosphoratom aufweist, als auch wenigstens eine gegenüber einer Isocyanat-Gruppe reaktive funktionelle Gruppe aufweist, und gegebenenfalls wenigstens einem zur Ausbildung der Struktureinheit (W3) befähigten ethylenisch ungesättigten Monomeren, erhalten werden.

Gemäß der *Verfahrensvariante 2* ist das erfindungsgemäß eingesetzte Homopolymere oder Copolymere besonders bevorzugt erhältlich durch radikalische Polymerisation von
(b1 a) wenigstens zwei voneinander verschiedenen zur Ausbildung der Struktureinheit (W2) befähigten ethylenisch ungesättigten Monomeren, welche jeweils wenigstens eine gegenüber einer Isocyanat-Gruppe reaktive gegebenenfalls geschützte Hydroxyl-Gruppe aufweisen, und gegebenenfalls wenigstens einem zur Ausbildung der Struktureinheit (W3) befähigten ethylenisch ungesättigten Monomeren, oder von
   wenigstens einem zur Ausbildung der Struktureinheit (W2) befähigten ethylenisch ungesättigten Monomeren, welches wenigstens eine gegenüber einer Isocyanat-Gruppe reaktive gegebenenfalls geschützte Hydroxyl-Gruppe aufweist, und wenigstens einem zur Ausbildung der Struktureinheit (W3) befähigten ethylenisch ungesättigten Monomeren,
   und
(b2a) partieller Phosphorylierung der in den Struktureinheiten (W2) des nach Schritt (b1a) erhältlichen Homopolymeren oder Copolymeren enthaltenen Hydroxyl-Gruppen zur Ausbildung von Struktureinheiten (W1) oder (W0) innerhalb des Homopolymeren oder Copolymeren.

Die reaktive Hydroxyl-Gruppe kann dabei jeweils auch in geschützter Form vorliegen.

Das gemäß der *Verfahrensvariante* 2 in Schritt (b1) bzw. (b1 a) eingesetzte zur Ausbildung der Struktureinheit (W2) befähigte ethylenisch ungesättigte Monomer kann dabei als wenigstens eine gegenüber einer Isocyanat-Gruppe reaktive funktionelle Gruppe eine entsprechende Gruppe aufweisen, die in freier oder in mittels einer Schutzgruppe geschützter Form vorliegt. Die Schutzgruppe wird vorzugsweise während oder vor Durchführung des Schritts (b2) bzw. (b2a) entfernt. Geeignete Schutzgruppen sind dem Fachmann bekannt.

Das gemäß der *Verfahrensvariante 2* in Schritt (b1) bzw. (b1 a) eingesetzte zur Ausbildung der Struktureinheit (W2) befähigte ethylenisch ungesättigte Monomer kann dabei auch zwei gegenüber einer Isocyanat-Gruppe reaktive funktionelle Gruppen aufweisen, wie beispielsweise zwei OH-Gruppen, von denen wenigstens eine oder beide im Schritt (b2) phosphoryliert werden können.

Schritt (b2) bzw. (b2a) wird vorzugsweise mit wenigstens einem Phosphorylierungsmittel durchgeführt. Jedes übliche dem Fachmann bekannte Phosphorylierungsmittel kann dabei eingesetzt werden. Bevorzugte erfindungsgemäß eingesetzte Phosphorylierungsmittel sind ausgewählt aus der Gruppe bestehend aus Phosphorpentoxid (P₄O₁₀), Phosphorsäure, Polyphosphorsäure und Phosphoroxychlorid.

Dabei wird das Phosphorylierungsmittel vorzugsweise in solchen molaren Mengen eingesetzt, dass die im Homopolymer oder Copolymer, welches vorzugsweise nach Schritt (b1) bzw. (b1 a) erhältlich ist, enthaltenen gegenüber Isocyanat-Gruppen reaktiven funktionellen Gruppen wie beispielsweise Hydroxyl-Gruppen nur partiell phosphoryliert werden, damit das erfindungsgemäß eingesetzte Homopolymere oder Copolymere wenigstens sowohl aus Struktureinheiten (W1) als auch (W2) oder aus wenigstens einer Struktureinheit (W0) aufgebaut ist.

Vorzugsweise leitet sich die Struktureinheit (W1) oder (W0) des nach *Verfahrensvariante 2* erhältlichen erfindungsgemäß eingesetzten Homopolymeren oder Copolymeren von wenigstens einem ethylenisch ungesättigten Monomeren ab, welches ausgewählt ist aus der Gruppe bestehend aus

Alkyl(meth)acrylaten, Cycloalkyl(meth)acrylaten, Aryl(meth)acrylaten und Alkylaryl(meth)acrylaten, wobei die Alkyl-Reste, Cycloalkyl-Reste, Aryl-Reste bzw. Alkylaryl-Reste dieser (Meth)acrylate jeweils wenigstens eine OH-Gruppe oder wenigstens eine geschützte OH-Gruppe aufweisen,

Alkyl(meth)acrylamiden, Cycloalkyl(meth)acrylamiden, Aryl(meth)acrylamiden und Alkylaryl(meth)acrylamiden, wobei die Alkyl-Reste, Cycloalkyl-Reste, Aryl-Reste bzw. Alkylaryl-Reste dieser (Meth)acrylamide jeweils wenigstens eine OH-Gruppe oder wenigstens eine geschützte OH-Gruppe aufweisen,
Allylalkohol, Vinylalkohol, Hydroxyalkylvinylethern und Hydroxyalkylallylethern,
wobei die OH-Gruppen nach Herstellung des vorzugsweise nach Schritt (b1) bzw. (b1 a) erhältlichen Homopolymeren oder Copolymeren gegebenenfalls nach ihrer Entschützung partiell mit wenigstens einem Phosphorylierungsmittel umgesetzt werden.

Alkyl(meth)acrylate sind diesbezüglich vorzugsweise Alkyl(meth)acrylate von unverzweigten oder verzweigten aliphatischen Alkoholen mit 2 bis 36, vorzugsweise 2 bis 22, besonders bevorzugt 2 bis 12, Kohlenstoffatomen wie zum Beispiel Methyl(meth)acrylat, Ethyl(meth)acrylat, n-Butyl(meth)acrylat, i-Butyl(meth)acrylat, t-Butyl(meth)acrylat, Lauryl(meth)acrylat, 2-Ethylhexyl(meth)acrylat, Stearyl(meth)acrylat, wobei die Alkyl-Reste dieser (Meth)acrylate jeweils wenigstens eine OH-Gruppe oder wenigstens eine geschützte OH-Gruppe aufweisen.

Cycloalkyl(meth)acrylate sind diesbezüglich vorzugsweise Cycloalkyl(meth)acrylate von cycloaliphatischen Alkoholen mit 3 oder 4 bis 22, vorzugsweise 3 oder 4 bis 12, Kohlenstoffatomen wie zum Beispiel Cyclohexyl(meth)acrylat oder Isobornyl(meth)acrylat, wobei die Cycloalkyl-Reste dieser (Meth)acrylate jeweils wenigstens eine OH-Gruppe oder wenigstens eine geschützte OH-Gruppe aufweisen.

Aryl(meth)acrylate sind diesbezüglich vorzugsweise Aryl(meth)acrylate von aromatischen Alkoholen mit 6 bis 22, vorzugsweise 6 bis 12, Kohlenstoffatomen, wobei die Aryl-Reste jeweils unsubstituiert oder bis zu vierfach substituiert sein können, wie zum Beispiel 4-Nitrophenylmethacrylat oder Phenyl(meth)acrylat, und wobei die Aryl-Reste dieser (Meth)acrylate jeweils wenigstens eine OH-Gruppe oder wenigstens eine geschützte OH-Gruppe aufweisen.

Alkylaryl(meth)acrylate sind diesbezüglich vorzugsweise Alkylaryl(meth)acrylate von Alkoholen mit 6 bis 22, vorzugsweise 6 bis 12, Kohlenstoffatomen, die sowohl einen aliphatischen als auch einen aromatischen Rest aufweisen, wobei die Aryl-Reste jeweils unsubstituiert oder bis zu vierfach substituiert sein können, wie zum Beispiel Benzyl(meth)acrylat, und wobei die Alkylaryl-Reste dieser (Meth)acrylate jeweils wenigstens eine OH-Gruppe oder wenigstens eine geschützte OH-Gruppe aufweisen.

Hydroxyalkylvinylether und Hydroxyalkylallylether weisen vorzugsweise eine Alkylkette mit 2 bis 36, vorzugsweise 2 bis 12, Kohlenstoffatomen auf. Hydroxyalkylvinylether sind gegenüber Hydroxyalkylallylethern bevorzugt.

Besonders bevorzugt leitet sich die Struktureinheit (W1) oder (W0) des nach *Verfahrensvariante 2* erhältlichen erfindungsgemäß eingesetzten Homopolymeren oder Copolymeren von wenigstens einem ethylenisch ungesättigten Monomeren ab, welches ausgewählt ist aus der Gruppe bestehend aus

Alkyl(meth)acrylaten, wobei die Alkyl-Reste dieser (Meth)acrylate jeweils wenigstens eine OH-Gruppe oder wenigstens eine geschützte OH-Gruppe aufweisen, insbesondere ausgewählt aus der Gruppe bestehend aus Hydroxyethyl(meth)acrylat, Hydroxypropyl(meth)acrylat und Hydroxybutyl(meth)acrylat,
wobei die OH-Gruppen nach Herstellung des vorzugsweise nach Schritt (b1) bzw. (b1 a) erhältlichen Homopolymeren oder Copolymeren gegebenenfalls nach ihrer Entschützung partiell mit wenigstens einem Phosphorylierungsmittel umgesetzt werden.

Hydroxyethyl(meth)acrylat umfasst erfindungsgemäß vorzugsweise sowohl 1-Hydroxyethyl(meth)acrylat als auch 2-Hydroxyethyl(meth)acrylat. Hydroxypropyl-(meth)acrylat umfasst erfindungsgemäß vorzugsweise sowohl 2-Hydroxypropyl(meth)acrylat als auch 3-Hydroxypropyl(meth)acrylat. Hydroxybutyl-(meth)acrylat umfasst erfindungsgemäß vorzugsweise sowohl 1-Hydroxybutyl(meth)-acrylat, 2-Hydroxybutyl(meth)acrylat, 3-Hydroxybutyl(meth)acrylat als auch 4-Hydroxybutyl(meth)acrylat.

Die dabei zum Einbau der Struktureinheit (W1) oder (W0) in das nach *Verfahrensvariante 2* erhältliche erfindungsgemäß eingesetzte Homopolymere oder Copolymere eingesetzten jeweils wenigstens eine gegebenenfalls geschützte OH-Gruppe aufweisenden ethylenisch ungesättigten Monomeren können jeweils auch in kettenverlängerter Form eingesetzt werden können: Beispiele für kettenverlängerte Varianten der jeweils wenigstens eine gegebenenfalls geschützte OH-Gruppe aufweisenden ethylenisch ungesättigten Monomere sind
(i) alkoxylierte Formen dieser Monomere, welche beispielsweise erhältlich sind durch Umsetzung der genannten Monomere mit Ethylenoxid, Propylenoxid und/oder Butylenoxid, insbesondere mit Ethylenoxid und/oder Propylenoxid oder durch Umsetzungen mit Glycidol,
(ii) mit Lactonen kettenverlängerte Formen, welche beispielsweise erhältlich sind durch Umsetzung der OH-Funktion der Monomere mittels einer ringöffnenden Polymerisation mit Lactonen, insbesondere ε-Caprolacton und/oder δ-Valerolacton, unter Erhalt von Caprolacton- und/oder Valerolacton-modifizierten Monomeren, insbesondere entsprechende Caprolacton- und/oder Valerolacton-modifizierte Hydroxyalkyl(meth)acrylate wie Caprolacton- und/oder Valerolacton-modifiziertes Hydroxyethyl(meth)acrylat, Hydroxypropyl(meth)acrylat und/oder Hydroxybutyl-(meth)acrylat, welche vorzugsweise ein zahlenmittleres Molekulargewicht von 220 bis 1200 g/mol aufweisen, und
(iii) Umsetzungen mit Oxetanen wie 3-Ethyl-3-(hydroxymethyl)oxacyclobutan, welche auch zu verzweigten Strukturen führen können.

Auch Kombinationen solcher Kettenverlängerungen (z.B. zunächst Alkoxylierung und anschließende Umsetzung mit Lactonen) ist möglich.

In einer ganz besonders bevorzugten Ausführungsform leitet sich die Struktureinheit (W1) des erfindungsgemäß eingesetzten Homopolymeren oder Copolymeren
gemäß *Verfahrensvariante* 1 von wenigstens einem ethylenisch ungesättigten Monomeren ab, welches ausgewählt ist aus der Gruppe bestehend aus

Vinylphosphonsäure, Vinylphosphonsäure in zumindest partiell mittels eines C₁₋₈-Alkyl-Alkohols veresterter Form wie zum Beispiel Vinylphosphonsäuredimethylester oder Vinylphosphonsäurediethylester, Vinylphosphorsäure in zumindest partiell mittels eines C₁₋₈-Alkyl-Alkohols veresterter Form, Alkyl(meth)acrylaten, Cycloalkyl(meth)acrylaten, Aryl(meth)acrylaten und Alkylaryl(meth)acrylaten, wobei die Alkyl-Reste, Cycloalkyl-Reste, Aryl-Reste bzw. Alkylaryl-Reste dieser (Meth)acrylate jeweils wenigstens eine wenigstens ein Phosphoratom aufweisende funktionelle Gruppe, insbesondere wenigstens eine Phosphat-Gruppe, aufweisen, und die Struktureinheit (W1) oder (W0) gemäß *Verfahrensvariante 2* von wenigstens einem ethylenisch ungesättigten Monomeren ab, welches ausgewählt ist aus der Gruppe bestehend aus

Alkyl(meth)acrylaten, Cycloalkyl(meth)acrylaten, Aryl(meth)acrylaten und Alkylaryl(meth)acrylaten, wobei die Alkyl-Reste, Cycloalkyl-Reste, Aryl-Reste bzw. Alkylaryl-Reste dieser (Meth)acrylate jeweils wenigstens eine OH-Gruppe oder wenigstens eine geschützte OH-Gruppe aufweisen, insbesondere Hydroxyethyl(meth)acrylat, Hydroxypropyl(meth)acrylat und Hydroxybutyl(meth)acrylat,

Alkyl(meth)acrylamiden, Cycloalkyl(meth)acrylamiden, Aryl(meth)acrylamiden und Alkylaryl(meth)acrylamiden, wobei die Alkyl-Reste, Cycloalkyl-Reste, Aryl-Reste bzw. Alkylaryl-Reste dieser (Meth)acrylamide jeweils wenigstens eine OH-Gruppe oder wenigstens eine geschützte OH-Gruppe aufweisen,
Allylalkohol, Vinylalkohol, Hydroxyalkylvinylethern und Hydroxyalkylallylethern,
wobei die im OH-Gruppen nach Herstellung des vorzugsweise nach Schritt (b1) bzw. (b1a) erhältlichen Homopolymeren oder Copolymeren - gegebenenfalls nach ihrer Entschützung - partiell mit wenigstens einem Phosphorylierungsmittel umgesetzt werden.

Die Struktureinheit (W0) kann vorzugsweise alternativ auch erhalten werden durch radikalische Polymerisation von
wenigstens einem ethylenisch ungesättigten Monomer ausgewählt aus der Gruppe bestehend aus Alkyl(meth)acrylaten, Cycloalkyl(meth)acrylaten, Aryl(meth)acrylaten und Alkylaryl(meth)acrylaten, wobei die Alkyl-Reste, Cycloalkyl-Reste, Aryl-Reste bzw. Alkylaryl-Reste dieser (Meth)acrylate jeweils sowohl wenigstens eine wenigstens ein Phosphoratom aufweisende funktionelle Gruppe als auch wenigstens eine OH-Gruppe oder wenigstens eine geschützte OH-Gruppe aufweisen, zur Ausbildung von Struktureinheiten (W0) innerhalb des Homopolymeren oder Copolymeren.

Insbesondere kann die Struktureinheit (W0) erhalten werden durch radikalische Polymerisation von wenigstens einem ethylenisch ungesättigten Monomer ausgewählt aus der Gruppe bestehend aus [(3-(Meth)acryloyloxy-2-hydroxypropyl)]phosphat und [(2-(Meth)acryloyloxy-3-hydroxypropyl)]phosphat, insbesondere [(2-(Meth)acryloyloxy-3-hydroxypropyl)]phosphat zur Ausbildung von Struktureinheiten (W0) innerhalb des Homopolymeren oder Copolymeren.

### Struktureinheit (W2)

Jede Struktureinheit (W2) innerhalb des erfindungsgemäß eingesetzten Homopolymeren oder Copolymeren enthält wenigstens eine gegenüber einer Isocyanat-Gruppe reaktive funktionelle Gruppe.

Vorzugsweise enthält jede Struktureinheit (W2) als wenigstens eine gegenüber einer Isocyanat-Gruppe reaktive funktionelle Gruppe wenigstens eine Gruppe ausgewählt aus der Gruppe bestehend aus gegebenenfalls geschützten Hydroxyl-Gruppen, insbesondere freien Hydroxyl-Gruppen, Thiol-Gruppen, Epoxid-Gruppen, Carboxyl-Gruppen, gegebenenfalls geschützten primären Amino-Gruppen und gegebenenfalls geschützten sekundären Amino-Gruppen, besonders bevorzugt ausgewählt aus der Gruppe bestehend aus gegebenenfalls geschützten Hydroxyl-Gruppen, insbesondere freien Hydroxyl-Gruppen, Epoxid-Gruppen, gegebenenfalls geschützten primären Amino-Gruppen und gegebenenfalls geschützten sekundären Amino-Gruppen ganz besonders bevorzugt ausgewählt aus der Gruppe bestehend aus gegebenenfalls geschützten Hydroxyl-Gruppen und gegebenenfalls geschützten primären Amino-Gruppen und gegebenenfalls geschützten sekundären Amino-Gruppen, insbesondere Hydroxyl-Gruppen.

Vorzugsweise sind 70 bis 100 mol-% der wenigstens einen gegenüber einer Isocyanat-Gruppe reaktiven funktionellen Gruppe jeder der Struktureinheiten (W2) des Homopolymeren oder Copolymeren jeweils unabhängig voneinander ausgewählt sind aus der Gruppe bestehend aus gegebenenfalls geschützten Hydroxyl-Gruppen, insbesondere freien Hydroxyl-Gruppen, Thiol-Gruppen, Epoxid-Gruppen, Carboxyl-Gruppen, gegebenenfalls geschützten primären Amino-Gruppen und gegebenenfalls geschützten sekundären Amino-Gruppen, besonders bevorzugt ausgewählt aus der Gruppe bestehend aus gegebenenfalls geschützten Hydroxyl-Gruppen, insbesondere freien Hydroxyl-Gruppen, Epoxid-Gruppen, gegebenenfalls geschützten primären Amino-Gruppen und gegebenenfalls geschützten sekundären Amino-Gruppen ganz besonders bevorzugt ausgewählt aus der Gruppe bestehend aus gegebenenfalls geschützten Hydroxyl-Gruppen und gegebenenfalls geschützten primären Amino-Gruppen und gegebenenfalls geschützten sekundären Amino-Gruppen, insbesondere Hydroxyl-Gruppen.

Vorzugsweise erfolgt der Einbau der Struktureinheit (W2) in die chemische Struktur des erfindungsgemäß eingesetzten Homopolymeren oder Copolymeren, indem zur Herstellung des erfindungsgemäßen Homopolymeren oder Copolymeren mittels einer vorzugsweise radikalischen Polymerisationsreaktion, bei der wenigstens ein ethylenisch ungesättigtes Monomer eingesetzt wird, welches neben wenigstens einer vorhandenen vorzugsweise endständigen Kohlenstoff-Kohlenstoff-Doppelbindung zudem wenigstens eine gegenüber einer Isocyanat-Gruppe reaktive funktionelle Gruppe aufweist. Vorzugsweise leitet sich die Struktureinheit (W2) des erfindungsgemäß eingesetzten Homopolymeren oder Copolymeren daher von wenigstens einem ethylenisch ungesättigten Monomeren ab, welches wenigstens eine gegenüber einer Isocyanat-Gruppe reaktive funktionelle Gruppe ausgewählt aus der Gruppe bestehend aus OH-Gruppen, primären Amino-Gruppen, sekundären Amino-Gruppen, Thiol-Gruppen, Epoxid-Gruppen und Carboxyl-Gruppen aufweist. Ganz besonders bevorzugt ist die wenigstens eine gegenüber einer Isocyanat-Gruppe reaktive funktionelle Gruppe dabei ausgewählt aus der Gruppe bestehend aus OH-Gruppen und Carboxyl-Gruppen, insbesondere OH-Gruppen.

Vorzugsweise leitet sich die Struktureinheit (W2) des erfindungsgemäß eingesetzten Homopolymeren oder Copolymeren von wenigstens einem ethylenisch ungesättigten Monomeren ab, welches ausgewählt ist aus der Gruppe bestehend aus

Alkyl(meth)acrylaten, Cycloalkyl(meth)acrylaten, Aryl(meth)acrylaten und Alkylaryl(meth)acrylaten, wobei die Alkyl-Reste, Cycloalkyl-Reste, Aryl-Reste bzw. Alkylaryl-Reste dieser (Meth)acrylate jeweils wenigstens eine OH-Gruppe oder wenigstens eine geschützte OH-Gruppe aufweisen,
Alkyl(meth)acrylamiden, Cycloalkyl(meth)acrylamiden, Aryl(meth)acrylamiden und Alkylaryl(meth)acrylamiden, wobei die Alkyl-Reste, Cycloalkyl-Reste, Aryl-Reste bzw. Alkylaryl-Reste dieser (Meth)acrylamide jeweils wenigstens eine OH-Gruppe oder wenigstens eine geschützte OH-Gruppe aufweisen,

Allylalkohol, Vinylalkohol, Hydroxyalkylvinylethern und Hydroxyalkylallylethern.

Dabei können vorzugsweise die gleichen entsprechenden Monomere eingesetzt werden, die auch zum Einbau der Struktureinheit (W1) oder (W0) in das erfindungsgemäß eingesetzte Homopolymere oder Copolymere gemäß *Verfahrensvariante 2* eingesetzt werden können.

Alkyl(meth)acrylate sind diesbezüglich vorzugsweise Alkyl(meth)acrylate von unverzweigten oder verzweigten aliphatischen Alkoholen mit 2 bis 36, vorzugsweise 2 bis 22, besonders bevorzugt 2 bis 12, Kohlenstoffatomen wie zum Beispiel Methyl(meth)acrylat, Ethyl(meth)acrylat, n-Butyl(meth)acrylat, i-Butyl(meth)acrylat, t-Butyl(meth)acrylat, Lauryl(meth)acrylat, 2-Ethylhexyl(meth)acrylat, Stearyl(meth)acrylat, wobei die Alkyl-Reste dieser (Meth)acrylate jeweils wenigstens eine OH-Gruppe oder wenigstens eine geschützte OH-Gruppe aufweisen.

Cycloalkyl(meth)acrylate sind diesbezüglich vorzugsweise Cycloalkyl(meth)acrylate von cycloaliphatischen Alkoholen mit 3 bis 22, vorzugsweise 3 bis 12, Kohlenstoffatomen wie zum Beispiel Cyclohexyl(meth)acrylat oder Isobornyl(meth)acrylat, wobei die Cycloalkyl-Reste dieser (Meth)acrylate jeweils wenigstens eine OH-Gruppe oder wenigstens eine geschützte OH-Gruppe aufweisen.

Aryl(meth)acrylate sind diesbezüglich vorzugsweise Aryl(meth)acrylate von aromatischen Alkoholen mit 6 bis 22, vorzugsweise 6 bis 12, Kohlenstoffatomen, wobei die Aryl-Reste jeweils unsubstituiert oder bis zu vierfach substituiert sein können, wie zum Beispiel 4-Nitrophenylmethacrylat oder Phenyl(meth)acrylat, und wobei die Aryl-Reste dieser (Meth)acrylate jeweils wenigstens eine OH-Gruppe oder wenigstens eine geschützte OH-Gruppe aufweisen.

Alkylaryl(meth)acrylate sind diesbezüglich vorzugsweise Alkylaryl(meth)acrylate von Alkoholen mit 6 bis 22, vorzugsweise 6 bis 12, Kohlenstoffatomen, die sowohl einen aliphatischen als auch einen aromatischen Rest aufweisen, wobei die Aryl-Reste jeweils unsubstituiert oder bis zu vierfach substituiert sein können, wie zum Beispiel Benzyl(meth)acrylat, und wobei die Alkylaryl-Reste dieser (Meth)acrylate jeweils wenigstens eine OH-Gruppe oder wenigstens eine geschützte OH-Gruppe aufweisen.

Hydroxyalkylvinylether und Hydroxyalkylallylether weisen vorzugsweise eine Alkylkette mit 2 bis 36, vorzugsweise 2 bis 12, Kohlenstoffatomen auf. Hydroxyalkylvinylether sind gegenüber Hydroxyalkylallylethern bevorzugt.

Besonders bevorzugt leitet sich die Struktureinheit (W2) des erfindungsgemäß eingesetzten Homopolymeren oder Copolymeren von wenigstens einem ethylenisch ungesättigten Monomeren ab, welches ausgewählt ist aus der Gruppe bestehend aus

Alkyl(meth)acrylaten, wobei die Alkyl-Reste, dieser (Meth)acrylate jeweils wenigstens eine OH-Gruppe oder wenigstens eine geschützte OH-Gruppe aufweisen, am meisten bevorzugt ausgewählt aus der Gruppe bestehend aus Hydroxyethyl(meth)acrylat, Hydroxypropyl(meth)acrylat und Hydroxybutyl-(meth)acrylat.

Die dabei zum Einbau der Struktureinheit (W2) in das erfindungsgemäß eingesetzte Homopolymere oder Copolymere eingesetzten jeweils wenigstens eine gegebenenfalls geschützte OH-Gruppe aufweisenden ethylenisch ungesättigten Monomeren können jeweils auch in kettenverlängerter Form eingesetzt werden können: Beispiele für kettenverlängerte Varianten der jeweils wenigstens eine gegebenenfalls geschützte OH-Gruppe aufweisenden ethylenisch ungesättigten Monomere sind
(i) alkoxylierte Formen dieser Monomere, welche beispielsweise erhältlich sind durch Umsetzung der genannten Monomere mit Ethylenoxid, Propylenoxid und/oder Butylenoxid, insbesondere mit Ethylenoxid und/oder Propylenoxid oder durch Umsetzungen mit Glycidol,
(ii) mit Lactonen kettenverlängerte Formen, welche beispielsweise erhältlich sind durch Umsetzung der OH-Funktion der Monomere mittels einer ringöffnenden Polymerisation mit Lactonen, insbesondere ε-Caprolacton und/oder δ-Valerolacton, unter Erhalt von Caprolacton- und/oder Valerolacton-modifizierten Monomeren, insbesondere entsprechende Caprolacton- und/oder Valerolacton-modifizierte Hydroxyalkyl(meth)acrylate wie Caprolacton- und/oder Valerolacton-modifiziertes Hydroxyethyl(meth)acrylat, Hydroxypropyl(meth)acrylat und/oder Hydroxybutyl-(meth)acrylat, welche vorzugsweise ein zahlenmittleres Molekulargewicht von 220 bis 1200 g/mol aufweisen, und
(iii) Umsetzungen mit Oxetanen wie 3-Ethyl-3-(hydroxymethyl)oxacyclobutan, welche auch zu verzweigten Strukturen führen können.

Auch Kombinationen solcher Kettenverlängerungen (z.B. zunächst Alkoxylierung und anschließende Umsetzung mit Lactonen) ist möglich.

In einer anderen bevorzugten Ausführungsform leitet sich die Struktureinheit (W2) des erfindungsgemäßen Homopolymeren oder Copolymeren von wenigstens einem ethylenisch ungesättigten Monomeren ab, welches wenigstens eine gegenüber einer Isocyanat-Gruppe reaktive funktionelle Carboxyl-Gruppe aufweist und welches vorzugsweise ausgewählt aus der Gruppe bestehend aus

(Meth)acrylsäure, Carboxyethyl(meth)acrylat, Itaconsäure, Fumarsäure, Maleinsäure, Citraconsäure, Crotonsäure, Zimtsäure sowie ungesättigte Fettsäuren mit vorzugsweise 12 bis 22 Kohlenstoffatomen, welche jeweils gegebenenfalls, sofern sie mehr als eine Carboxyl-Gruppe aufweisen, auch in einer partiell veresterten Form vorliegen können, wobei zur partiellen Veresterung vorzugsweise ein C₁₋₁₀-Alkohol eingesetzt werden kann.

Vorzugsweise leitet sich die Struktureinheit (W2) des erfindungsgemäßen Homopolymeren oder Copolymeren von wenigstens einem ethylenisch ungesättigten Monomeren ab, welches wenigstens eine gegenüber einer Isocyanat-Gruppe reaktive funktionelle Carboxyl-Gruppe aufweist und welches ausgewählt ist aus der Gruppe bestehend aus Acrylsäure und Methacrylsäure.

In einer weiteren bevorzugten Ausführungsform leitet sich die Struktureinheit (W2) des erfindungsgemäßen Homopolymeren oder Copolymeren von wenigstens einem ethylenisch ungesättigten Monomeren ab, welches wenigstens eine gegenüber einer Isocyanat-Gruppe reaktive funktionelle Amino-Gruppe - gegebenenfalls. in geschützter Form - aufweist und welches vorzugsweise ausgewählt ist aus der Gruppe bestehend aus

Alkyl(meth)acrylaten, Cycloalkyl(meth)acrylaten, Aryl(meth)acrylaten und Alkylaryl(meth)acrylaten, wobei die Alkyl-Reste, Cycloalkyl-Reste, Aryl-Reste bzw. Alkylaryl-Reste dieser (Meth)acrylate jeweils wenigstens eine primäre oder sekundäre, bevorzugt wenigstens eine sekundäre Aminogruppe-Gruppe aufweisen,

Alkyl(meth)acrylamiden, Cycloalkyl(meth)acrylamiden, Aryl(meth)acrylamiden und Alkylaryl(meth)acrylamiden, wobei die Alkyl-Reste, Cycloalkyl-Reste, Aryl-Reste bzw. Alkylaryl-Reste dieser (Meth)acrylamide jeweils wenigstens eine primäre oder sekundäre, bevorzugt wenigstens eine sekundäre Aminogruppe-Gruppe aufweisen,

Allylamin, Vinylformamid (welches durch polymeranaloge Reaktion in Vinylamin-Wiederholungseinheiten überführbar ist), Aminoalkylvinylethern und Aminoalkylallylethern.

Alkyl(meth)acrylate sind diesbezüglich vorzugsweise Alkyl(meth)acrylate von unverzweigten oder verzweigten aliphatischen Alkoholen mit 2 bis 36, vorzugsweise 2 bis 22, besonders bevorzugt 2 bis 12, Kohlenstoffatomen wie zum Beispiel Methyl(meth)acrylat, Ethyl(meth)acrylat, n-Butyl(meth)acrylat, i-Butyl(meth)acrylat, t-Butyl(meth)acrylat, Lauryl(meth)acrylat, 2-Ethylhexyl(meth)acrylat, Stearyl(meth)acrylat, wobei die Alkyl-Reste dieser (Meth)acrylate jeweils wenigstens primäre oder sekundäre, bevorzugt wenigstens eine sekundäre Aminogruppe-Gruppe aufweisen.

Cycloalkyl(meth)acrylate sind diesbezüglich vorzugsweise Cycloalkyl(meth)acrylate von cycloaliphatischen Alkoholen mit 3 bis 22, vorzugsweise 3 bis 12, Kohlenstoffatomen wie zum Beispiel Cyclohexyl(meth)acrylat oder Isobornyl(meth)acrylat, wobei die Cycloalkyl-Reste dieser (Meth)acrylate jeweils wenigstens eine primäre oder sekundäre, bevorzugt wenigstens eine sekundäre Aminogruppe-Gruppe aufweisen.

Aryl(meth)acrylate sind diesbezüglich vorzugsweise Aryl(meth)acrylate von aromatischen Alkoholen mit 6 bis 22, vorzugsweise 6 bis 12, Kohlenstoffatomen, wobei die Aryl-Reste jeweils unsubstituiert oder bis zu vierfach substituiert sein können und wobei die Aryl-Reste dieser (Meth)acrylate jeweils wenigstens eine primäre oder sekundäre, bevorzugt wenigstens eine sekundäre Aminogruppe-Gruppe aufweisen.

Alkylaryl(meth)acrylate sind diesbezüglich vorzugsweise Alkylaryl(meth)acrylate von Alkoholen mit 6 bis 22, vorzugsweise 6 bis 12, Kohlenstoffatomen, die sowohl einen aliphatischen als auch einen aromatischen Rest aufweisen, wobei die Aryl-Reste jeweils unsubstituiert oder bis zu vierfach substituiert sein können, wie zum Beispiel Benzyl(meth)acrylat, und wobei die Alkylaryl-Reste dieser (Meth)acrylate jeweils wenigstens eine primäre oder sekundäre, bevorzugt wenigstens eine sekundäre Aminogruppe-Gruppe aufweisen.

Besonders bevorzugt leitet sich die Struktureinheit (W2) des erfindungsgemäß eingesetzten Homopolymeren oder Copolymeren von wenigstens einem ethylenisch ungesättigten Monomeren ab, welches ausgewählt ist aus der Gruppe bestehend aus

Alkyl(meth)acrylaten, wobei die Alkyl-Reste, dieser (Meth)acrylate jeweils wenigstens eine primäre oder sekundäre, bevorzugt wenigstens eine sekundäre Aminogruppe-Gruppe aufweisen, am meisten bevorzugt ausgewählt aus der Gruppe bestehend aus N-Alkylaminoethyl(meth)acrylaten, N-Alkylaminopropyl(meth)acrylaten und N-Alkylaminobutyl-(meth)acrylaten, wobei als N-Alkylreste insbesondere lineare oder verzweigte C₁₋₈-Alkyl-Reste sind; insbesondere bevorzugt ist N-*tert*-Butyl-aminoethyl(meth)acrylat.

In einer weiteren besonders bevorzugten Ausführungsform leitet sich die Struktureinheit (W2) des erfindungsgemäßen Homopolymeren oder Copolymeren von wenigstens einem ethylenisch ungesättigten Monomeren ab, welches wenigstens eine gegenüber einer Isocyanat-Gruppe reaktive funktionelle Carboxyl-Gruppe oder wenigstens eine gegenüber einer Isocyanat-Gruppe reaktive funktionelle Hydroxyl-Gruppe aufweist, und welches vorzugsweise ausgewählt aus der Gruppe bestehend aus

Alkyl(meth)acrylaten, Cycloalkyl(meth)acrylaten, Aryl(meth)acrylaten und Alkylaryl(meth)acrylaten, wobei die Alkyl-Reste, Cycloalkyl-Reste, Aryl-Reste bzw. Alkylaryl-Reste dieser (Meth)acrylate jeweils wenigstens eine OH-Gruppe oder wenigstens eine geschützte OH-Gruppe aufweisen,

Alkyl(meth)acrylamiden, Cycloalkyl(meth)acrylamiden, Aryl(meth)acrylamiden und Alkylaryl(meth)acrylamiden, wobei die Alkyl-Reste, Cycloalkyl-Reste, Aryl-Reste bzw. Alkylaryl-Reste dieser (Meth)acrylamide jeweils wenigstens eine OH-Gruppe oder wenigstens eine geschützte OH-Gruppe aufweisen,

Allylalkohol, Vinylalkohol, Hydroxyalkylvinylethern und Hydroxyalkylallylethern,
insbesondere Alkyl(meth)acrylaten, wobei die Alkyl-Reste, dieser (Meth)acrylate jeweils wenigstens eine OH-Gruppe oder wenigstens eine geschützte OH-Gruppe aufweisen, beispielsweise Hydroxyethyl(meth)acrylat, Hydroxypropyl(meth)acrylat und/oder Hydroxybutyl-(meth)acrylat,
(Meth)acrylsäure, Carboxyethyl(meth)acrylat, Itaconsäure, Fumarsäure, Maleinsäure, Citraconsäure, Crotonsäure, Zimtsäure sowie ungesättigte Fettsäuren mit vorzugsweise 12 bis 22 Kohlenstoffatomen, welche jeweils gegebenenfalls, sofern sie mehr als eine Carboxyl-Gruppe aufweisen, auch in einer partiell veresterten Form vorliegen können, wobei zur partiellen Veresterung vorzugsweise ein C₁₋₁₀-Alkohol eingesetzt werden kann
Es ist jedoch nicht zwingend erforderlich, dass der Einbau der Struktureinheit (W2) in die chemische Struktur des erfindungsgemäß eingesetzten C Homopolymeren oder Copolymeren dadurch erfolgt, dass zur Herstellung des Homopolymeren oder Copolymeren mittels einer vorzugsweise radikalischen Polymerisationsreaktion wenigstens ein ethylenisch ungesättigtes Monomer eingesetzt wird, welches neben wenigstens einer vorhandenen Kohlenstoff-Kohlenstoff-Doppelbindung zudem wenigstens eine gegenüber einer Isocyanat-Gruppe reaktive funktionelle Gruppe aufweist.

Alternativ ist es auch möglich, dass wenigstens ein Monomer bei der Polymerisation zum Einsatz kommt, d.h. wenigstens ein ethylenisch ungesättigtes Monomer eingesetzt wird, welches keine wenigstens eine gegenüber einer Isocyanat-Gruppe reaktive funktionelle Gruppe wie beispielsweise eine OH-Gruppe aufweist. Die in (W2) enthaltene wenigstens eine gegenüber einer Isocyanat-Gruppe reaktive funktionelle Gruppe kann in diesem Fall erst nach erfolgter vorzugsweise radikalischer Polymerisationsreaktion, bei der wenigstens ein ethylenisch ungesättigtes Monomer eingesetzt wird, in das Homopolymer- oder Copolymer-Gerüst mittels einer polymeranalogen Reaktion eingebaut werden.

Eine besonders bevorzugte Variante dieser Methode ist die Herstellung des erfindungsgemäß eingesetzten Homopolymeren oder Copolymeren durch Einsatz wenigstens einer ethylenisch ungesättigten Verbindung mit wenigstens einer mittels einer Ester-Gruppe geschützten OH-Gruppe in der Polymerisation, welche dann, nach ihrer Entschützung, beispielsweise durch eine Hydrolyse-Reaktion der Ester-Gruppe, eine gegenüber einer Isocyanat-Gruppe reaktive funktionelle Gruppe darstellt, nämlich eine freie OH-Gruppe.

Eine weitere bevorzugte Variante dieser Methode ist die Herstellung des erfindungsgemäß eingesetzten Homopolymeren oder Copolymeren durch Einsatz wenigstens einer ethylenisch ungesättigten Verbindung mit wenigstens einer Epoxid-Gruppe - wie zum Beispiel bei Einsatz von Glycidyl(meth)acrylat - in der Polymerisation, welche dann, beispielsweise durch eine Ringöffnungsreaktion mittels eines geeigneten Amins, in eine freie OH-Gruppe überführt werden kann. Dies ist nachfolgend beispielhaft schematisch dargestellt:

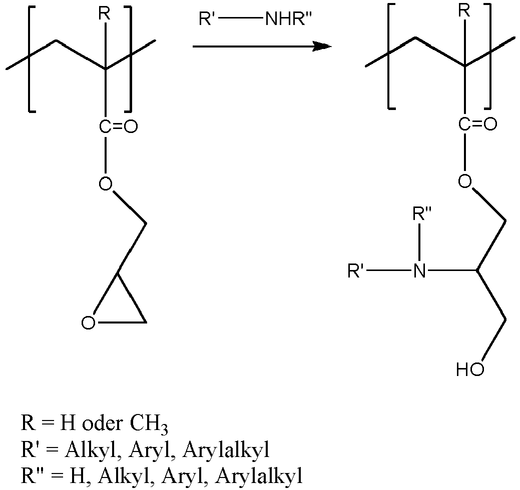

Eine weitere bevorzugte Variante dieser Methode ist die Herstellung des erfindungsgemäß eingesetzten Homopolymeren oder Copolymeren durch Einsatz wenigstens einer ethylenisch ungesättigten Verbindung mit wenigstens einer Anhydrid-Gruppe - wie zum Beispiel bei Einsatz von Maleinsäureanhydrid - in der Polymerisation, welche dann, beispielsweise durch eine Umsetzung mit einem geeigneten Aminoalkohol, zu einer freien OH-Gruppe, d.h. einer gegenüber einer Isocyanat-Gruppe reaktiven funktionellen Gruppe umgesetzt werden kann. Je nach Reaktionsbedingungen eine wird dabei eine wenigstens eine OH-Gruppe aufweisende Amid-, Diamid- oder Imid-Gruppe innerhalb des erfindungsgemäßen Copolymeren gebildet. Dies ist nachfolgend schematisch beispielhaft dargestellt:

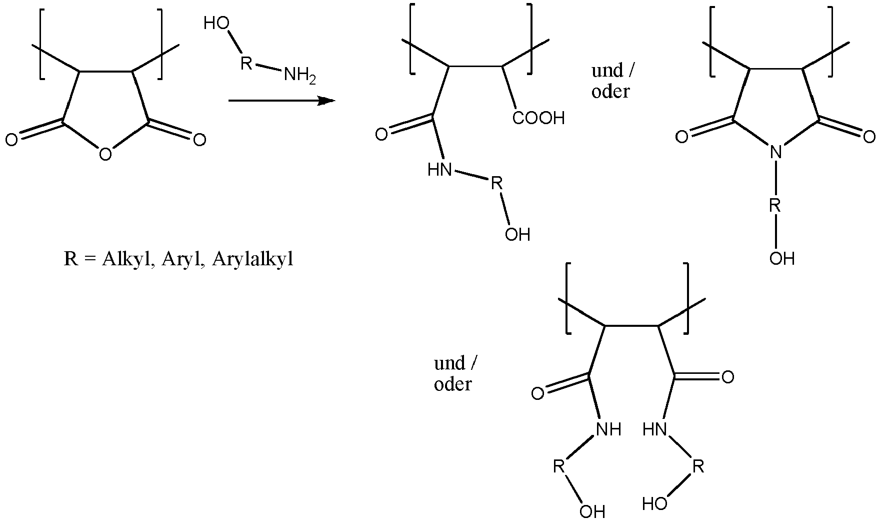

### Struktureinheit (W3)

Das erfindungsgemäß eingesetzte Homopolymer oder Copolymer umfasst wenigstens zwei voneinander verschiedene Struktureinheiten (W1) und (W2) oder wenigstens eine Struktureinheit (W0). Vorzugsweise umfasst das erfindungsgemäß eingesetzte Homopolymere oder Copolymere wenigstens eine dritte Struktureinheit (W3), die von den Struktureinheiten (W1) und (W2) bzw. (W0) verschieden ist. In diesem Fall handelt es sich bei dem erfindungsgemäß eingesetzten Homo- oder Copolymer um ein Copolymer. Durch die chemische Natur der dritten Struktureinheit (W3) kann beispielsweise gezielt die Verträglichkeit des Copolymeren mit Lacksystemen wie bestimmten Beschichtungszusammensetzungen, in denen der Einsatz des Copolymeren als Haftungs-verstärkendes Additiv erfolgen soll, eingestellt werden.

Vorzugsweise erfolgt der Einbau der Struktureinheit (W3) in die chemische Struktur des erfindungsgemäß eingesetzten Copolymeren, indem zur Herstellung des Copolymeren mittels einer vorzugsweise radikalischen Polymerisationsreaktion wenigstens ein ethylenisch ungesättigtes Monomer eingesetzt wird, welches neben wenigstens einer vorhandenen Kohlenstoff-Kohlenstoff-Doppelbindung keine der funktionellen Gruppen der Struktureinheiten (W1) und (W2) oder (W0) aufweist. Die weitere Struktureinheit (W3) ist von den Struktureinheiten (W1) und (W2) bzw. (W0) verschieden und weist vorzugsweise keine gegenüber einer Isocyanat-Gruppe reaktive funktionelle Gruppe auf und enthält vorzugsweise keine funktionelle Gruppe, die wenigstens ein Phosphoratom aufweist. Die Struktureinheit (W3) kann basisch oder neutral sein. Für den Fall, dass sie basisch ist, weist die Struktureinheit (W3) vorzugsweise tertiäre Amino-Gruppen, d.h. gegenüber Isocyanat-Gruppen nichtreaktive Aminogruppen auf. Bevorzugt sind die Struktureinheiten (W3) innerhalb des Copolymeren neutral, d.h. sie enthalten weder saure noch basische Gruppierungen.

Vorzugsweise leitet sich die von (W1) und (W2) bzw. (W0) verschiedene Struktureinheit (W3) von einem ethylenisch ungesättigten Monomer, besonders bevorzugt von einem (Meth)acrylat-Monomer oder einem (Meth)acrylat-haltigen Monomer ableitet, welches, wenn es als Monomer zur Herstellung eines daraus erhältlichen Homopolymers eingesetzt wird, ein Homopolymer ausbildet, welches eine Glasübergangstemperatur (Tg) von weniger als 50°C, besonders bevorzugt von weniger als 25°C aufweist. Dem Fachmann sind der Begriff der Glasübergangstemperatur sowie Methoden zur Bestimmung der Glasübergangstemperatur bekannt, beispielsweise aus P. Peyer, Glass transition temperatures of polymers, 1989, Wiley VCH Verlag. Vorzugsweise erfolgt die Bestimmung der Glasübergangstemperatur mittels dynamischer Differenzkalorimetrie (DSC) gemäß ISO 11357-2.

Vorzugsweise erfolgt der Einbau der Struktureinheit (W3) in die chemische Struktur des erfindungsgemäß eingesetzten Copolymeren, indem zur Herstellung des Copolymeren mittels einer vorzugsweise radikalischen Polymerisationsreaktion wenigstens ein ethylenisch ungesättigtes Monomer eingesetzt wird, welches ausgewählt ist aus der Gruppe bestehend aus

Alkyl(meth)acrylaten, Cycloalkyl(meth)acrylaten, Aryl(meth)acrylaten, Heteroaryl(meth)acrylaten und Alkylaryl(meth)acrylaten, wobei die Alkyl-Reste, Cycloalkyl-Reste, Aryl-Reste, Heteroaryl-Reste bzw. Alkylaryl-Reste dieser (Meth)acrylate gegebenenfalls jeweils wenigstens eine tertiäre Amino-Gruppe und/oder wenigstens eine Alkoxy-Gruppe aufweisen können,
Alkyl(meth)acrylamiden wie beispielsweise (Meth)acrylamid, Cycloalkyl(meth)acrylamiden, Aryl(meth)acrylamiden und Alkylaryl(meth)acryamiden, wobei die Alkyl-Reste, Cycloalkyl-Reste, Aryl-Reste bzw. Alkylaryl-Reste dieser (Meth)acrylamide gegebenenfalls jeweils wenigstens eine tertiäre Amino-Gruppe aufweisen können wie beispielsweise im Fall von N,N-Dimethylaminopropyl(meth)acrylamid,

Mono(meth)acrylaten von oligomeren oder polymeren Ethern ohne freie OH-Gruppe, (Meth)acrylaten von halogenierten Alkoholen, oxiranhaltige (Meth)acrylate, Styrol und substituierten Styrolen, wobei die Styrole nicht mit Isocyanat-reaktiven Gruppen substituiert sind, vorzugsweise alpha-Methylstyrol und/oder oder 4-Methylstyrol, (Meth)acrylnitril, Vinylgruppen aufweisenden nicht basischen, cycloaliphatischen heterozyklischen Verbindungen mit wenigstens einem N-Atom als Ringglied, wie beispielsweise N-Vinylpyrrolidon und/oder N-Vinylcaprolactam, Vinylgruppen aufweisenden nicht basischen, heteroaromatischen Verbindungen mit wenigstens einem N-Atom als Ringglied, wie beispielsweise 4-Vinylpyridin, 2-Vinylpyridin oder Vinylimidazol, Vinylester von Mono-Carbonsäuren, vorzugsweise von Mono-Carbonsäuren mit 1 bis 20 Kohlenstoffatomen, wie beispielsweise Vinylacetat, Maleinsäureanhydrid und deren Diester, Maleinimide, z.B. N-Phenylmaleinimid und N-substituierte Maleinimide mit unverzweigten, verzweigten oder cycloaliphatischen Alkylgruppen mit vorzugsweise 1 bis 22 Kohlenstoffatomen, wobei jedoch keine Isocyanat-reaktiven Gruppen als Substituenten möglich sind, besonders bevorzugt N-Ethylmaleinimid und/oder N-Octylmaleinimid, N-Alkyl- und N,N-dialkylsubstituierte Acrylamide mit unverzweigten oder verzweigten aliphatischen oder cycloaliphatischen Alkylgruppen mit vorzugsweise 1 bis 22 Kohlenstoffatomen, beispielsweise N-(t-Butyl)acrylamid.

Alkyl(meth)acrylate sind diesbezüglich vorzugsweise Alkyl(meth)acrylate von unverzweigten oder verzweigten, gesättigten oder ungesättigten aliphatischen Alkoholen mit 2 bis 36, vorzugsweise 2 bis 22, besonders bevorzugt 2 bis 12, Kohlenstoffatomen wie zum Beispiel Methyl(meth)acrylat, Ethyl(meth)acrylat, n-Butyl(meth)acrylat, i-Butyl(meth)acrylat, t-Butyl(meth)acrylat, Lauryl(meth)acrylat, 2-Ethylhexyl(meth)acrylat, Stearyl(meth)acrylat, Allyl(meth)acrylat oder Tridecyl(meth)acrylat. Gegebenenfalls kann die Alkyl-Gruppe dieser (Meth)acrylate mit wenigstens einer tertiären Amino-Gruppe wie beispielsweise im Fall von N,N-Dimethylaminoethyl(meth)acrylat oder N,N-Dimethylaminopropyl(meth)acrylat und/oder wenigstens einer Alkoxy-Gruppe wie beispielsweise im Fall von Methoxyethoxyethyl(meth)acrylat, 1-Butoxypropyl(meth)acrylat, Cyclohexyloxy-methyl(meth)acrylat, Methoxymethoxyethyl(meth)acrylat, Benzyloxymethyl-(meth)acrylat, 2-Butoxyethyl(meth)acrylat, 2-Ethoxyethyl(meth)acrylat, Allyloxymethyl(meth)acrylat, 1-Ethoxybutyl(meth)acrylat, 1-Ethoxyethyl(meth)acrylat, und Ethoxymethyl(meth)acrylat substituiert sein.

Cycloalkyl(meth)acrylate sind diesbezüglich vorzugsweise Cycloalkyl(meth)acrylate von cycloaliphatischen Alkoholen mit 3 bis 22, vorzugsweise 3 bis 12, Kohlenstoffatomen wie zum Beispiel Cyclohexyl(meth)acrylat oder Isobornyl(meth)acrylat. Gegebenenfalls kann die Cycloalkyl-Gruppe dieser (Meth)acrylate mit wenigstens einer tertiären Amino-Gruppe und/oder wenigstens einer Alkoxy-Gruppe substituiert sein.

Aryl(meth)acrylate sind diesbezüglich vorzugsweise Aryl(meth)acrylate von aromatischen Alkoholen mit 6 bis 22, vorzugsweise 6 bis 12, Kohlenstoffatomen, wobei die Aryl-Reste jeweils unsubstituiert oder bis zu vierfach substituiert sein können, jedoch nicht mit Isocyanat-reaktiven Gruppen, wie zum Beispiel 4-Nitrophenylmethacrylat oder Phenyl(meth)acrylat. Gegebenenfalls kann die Aryl-Gruppe dieser (Meth)acrylate mit wenigstens einer tertiären Amino-Gruppe und/oder wenigstens einer Alkoxy-Gruppe substituiert sein.

Heteroaryl(meth)acrylate sind diesbezüglich vorzugsweise Heteroaryl(meth)acrylate von aromatischen Alkoholen mit 6 bis 22, vorzugsweise 6 bis 12, Kohlenstoffatomen, wobei die Heteroryl-Reste jeweils unsubstituiert oder bis zu vierfach substituiert sein können, jedoch nicht mit Isocyanat-reaktiven Gruppen, wie zum Beispiel Furfuryl(meth)acrylat. Gegebenenfalls kann die Heteroaryl-Gruppe dieser (Meth)acrylate mit wenigstens einer tertiären Amino-Gruppe und/oder wenigstens einer Alkoxy-Gruppe substituiert sein.

Alkylaryl(meth)acrylate sind diesbezüglich vorzugsweise Alkylaryl(meth)acrylate von Alkoholen mit 6 bis 22, vorzugsweise 6 bis 12, Kohlenstoffatomen, die sowohl einen aliphatischen als auch einen aromatischen Rest aufweisen, wobei die Aryl-Reste jeweils unsubstituiert oder bis zu vierfach substituiert sein können, jedoch nicht mit Isocyanat-reaktiven Gruppen, wie zum Beispiel Benzyl(meth)acrylat. Gegebenenfalls kann die Alkyl- und/oder Aryl-Gruppe dieser (Meth)acrylate mit wenigstens einer tertiären Amino-Gruppe und/oder wenigstens einer Alkoxy-Gruppe substituiert sein.

Mono(meth)acrylate von oligomeren oder polymeren Ethern ohne freie OH-Gruppe sind diesbezüglich vorzugsweise ausgewählt aus der Gruppe bestehend aus endgruppenverschlossenen Polyethylenglykolen, Polypropylenglycolen, gemischten Polyethylen/propylenglycolen, beispielsweise Poly(ethylenglycol)-methylether(meth)acrylat und/oder Poly(propylenglycol)methylether(meth)acrylat.

(Meth)acrylate von halogenierten Alkoholen sind diesbezüglich vorzugsweise Perfluoralkyl(meth)acrylate mit 6 bis 20 Kohlenstoffatomen.

Besonders bevorzugt erfolgt der Einbau der Struktureinheit (W3) in die chemische Struktur des erfindungsgemäß eingesetzten Copolymeren, indem zur Herstellung des Copolymeren mittels einer vorzugsweise radikalischen Polymerisationsreaktion wenigstens ein ethylenisch ungesättigtes Monomer eingesetzt wird, welches ausgewählt ist aus der Gruppe bestehend aus

Alkyl(meth)acrylaten, Cycloalkyl(meth)acrylaten, Aryl(meth)acrylaten, Heteroaryl(meth)acrylaten und Alkylaryl(meth)acrylaten, wobei die Alkyl-Reste, Cycloalkyl-Reste, Aryl-Reste, Heteroaryl-Reste bzw. Alkylaryl-Reste dieser (Meth)acrylate gegebenenfalls jeweils wenigstens eine tertiäre Amino-Gruppe und/oder wenigstens eine Alkoxy-Gruppe aufweisen können.

Vorzugsweise leitet sich die Struktureinheit (W3) des erfindungsgemäß eingesetzten Copolymeren von wenigstens einem ethylenisch ungesättigten Monomeren ab ausgewählt aus der Gruppe bestehend aus Alkyl(meth)acrylaten, Aryl(meth)acrylaten und Arylalkyl(meth)acrylaten, wobei die Alkyl-Reste, bzw. Aryl-Reste, bzw. Alkylaryl-Reste dieser (Meth)acrylate gegebenenfalls jeweils wenigstens eine tertiäre Amino-Gruppe und/oder wenigstens eine Alkoxy-Gruppe aufweisen können.

In einer bevorzugten Ausführungsform erfolgt der Einbau der Struktureinheit (W3) in die chemische Struktur des erfindungsgemäß eingesetzten Copolymeren, indem zur Herstellung des Copolymeren mittels einer vorzugsweise radikalischen Polymerisationsreaktion wenigstens ein ethylenisch ungesättigtes Monomer eingesetzt wird, welches ausgewählt ist aus der Gruppe bestehend aus ethylenisch ungesättigten, vorzugsweise aliphatischen Monomeren, die gegebenenfalls jeweils wenigstens eine tertiäre Aminogruppe und/oder wenigstens eine Vinylgruppe aufweisende, vorzugsweise aromatische Heterozyklen mit wenigstens einem protonierbaren N-Atom als Ringglied, sofern keine Reaktivität dieser Heterozyklen gegenüber Isocyanat-Gruppen vorhanden ist.

In einer weiteren bevorzugten Ausführungsform erfolgt der Einbau der Struktureinheit (W3) in die chemische Struktur des erfindungsgemäß eingesetzten Copolymeren, indem zur Herstellung des Copolymeren mittels einer vorzugsweise radikalischen Polymerisationsreaktion wenigstens ein ethylenisch ungesättigtes Monomer eingesetzt wird, welches ausgewählt ist aus der Gruppe bestehend aus Alkyl(meth)acrylaten, Aryl(meth)acrylaten, Arylalkyl(meth)acrylaten, Alkoxyalkyl(meth)acrylaten mit einem Alkoxyalkylrest enthaltend 4 bis 16 C-Atome, und Styrol.

Insbesondere bevorzugt erfolgt der Einbau der Struktureinheit (W3) in die chemische Struktur des erfindungsgemäß eingesetzten Copolymeren, indem zur Herstellung des Copolymeren mittels einer vorzugsweise radikalischen Polymerisationsreaktion wenigstens ein ethylenisch ungesättigtes Monomer eingesetzt wird, welches ausgewählt ist aus der Gruppe bestehend aus Alkyl(meth)acrylaten, insbesondere ausgewählt aus der Gruppe bestehend aus Methyl(meth)acrylat, Ethyl(meth)acrylat, n-Butyl(meth)acrylat, i-Butyl(meth)acrylat, t-Butyl(meth)acrylat, Lauryl(meth)acrylat, 2-Ethylhexyl(meth)acrylat, Stearyl(meth)acrylat, Allyl(meth)acrylat, Tridecyl(meth)acrylat, und Benzyl(meth)acrylat.

In einer besonders bevorzugten Ausführungsform ist das erfindungsgemäß eingesetzte Homopolymer oder Copolymer erhältlich durch radikalische Co-Polymerisation von
wenigstens einem ethylenisch ungesättigten Monomer ausgewählt aus der Gruppe bestehend aus Vinylphosphonsäure, Vinylphosphonsäure in zumindest partiell mittels eines C₁₋₈-Alkyl-Alkohols veresterter Form, Vinylphosphorsäure in zumindest partiell mittels eines C₁₋₈-Alkyl-Alkohols veresterter Form, Alkyl(meth)acrylaten, Cycloalkyl(meth)acrylaten, Aryl(meth)acrylaten und Alkylaryl(meth)acrylaten, wobei die Alkyl-Reste, Cycloalkyl-Reste, Aryl-Reste bzw. Alkylaryl-Reste dieser (Meth)acrylate jeweils wenigstens eine wenigstens ein Phosphoratom aufweisende funktionelle Gruppe aufweisen, zur Ausbildung von Struktureinheiten (W1) innerhalb des Copolymeren,
   und
wenigstens einem ethylenisch ungesättigten Monomer ausgewählt aus der Gruppe bestehend aus Alkyl(meth)acrylaten, Cycloalkyl(meth)acrylaten, Aryl(meth)acrylaten und Alkylaryl(meth)acrylaten, wobei die Alkyl-Reste, Cycloalkyl-Reste, Aryl-Reste bzw. Alkylaryl-Reste dieser (Meth)acrylate jeweils wenigstens eine OH-Gruppe oder wenigstens eine geschützte OH-Gruppe aufweisen, Alkyl(meth)acrylamiden, Cycloalkyl(meth)acrylamiden, Aryl(meth)acrylamiden und Alkylaryl(meth)acrylamiden, wobei die Alkyl-Reste, Cycloalkyl-Reste, Aryl-Reste bzw. Alkylaryl-Reste dieser (Meth)acrylamide jeweils wenigstens eine OH-Gruppe oder wenigstens eine geschützte OH-Gruppe aufweisen, Allylalkohol, Vinylalkohol und Hydroxyalkylvinylethern, zur Ausbildung von Struktureinheiten (W2) innerhalb des Copolymeren
und gegebenenfalls wenigstens einem ethylenisch ungesättigten Monomer ausgewählt aus der Gruppe bestehend aus Alkyl(meth)acrylaten, Cycloalkyl(meth)acrylaten, Aryl(meth)acrylaten, Heteroaryl(meth)acrylaten und Alkylaryl(meth)acrylaten, wobei die Alkyl-Reste, Cycloalkyl-Reste, Aryl-Reste, Heteroaryl-Reste bzw. Alkylaryl-Reste dieser (Meth)acrylate gegebenenfalls jeweils wenigstens eine tertiäre Amino-Gruppe und/oder wenigstens eine Alkoxy-Gruppe aufweisen können, zur Ausbildung von Struktureinheiten (W3) innerhalb des Copolymeren, oder
durch radikalische Co-Polymerisation von wenigstens einem ethylenisch ungesättigten Monomer ausgewählt aus der Gruppe bestehend aus Alkyl(meth)acrylaten, Cycloalkyl(meth)acrylaten, Aryl(meth)acrylaten und Alkylaryl(meth)acrylaten, wobei die Alkyl-Reste, Cycloalkyl-Reste, Aryl-Reste bzw. Alkylaryl-Reste dieser (Meth)acrylate jeweils wenigstens eine OH-Gruppe oder wenigstens eine geschützte OH-Gruppe aufweisen, Alkyl(meth)acrylamiden, Cycloalkyl(meth)acrylamiden, Aryl(meth)acrylamiden und Alkylaryl(meth)acrylamiden, wobei die Alkyl-Reste, Cycloalkyl-Reste, Aryl-Reste bzw. Alkylaryl-Reste dieser (Meth)acrylamide jeweils wenigstens eine OH-Gruppe oder wenigstens eine geschützte OH-Gruppe aufweisen, Allylalkohol, Vinylalkohol und Hydroxyalkylvinylethern, zur Ausbildung von Struktureinheiten (W2) innerhalb des Copolymeren,
und wenigstens einem ethylenisch ungesättigten Monomer ausgewählt aus der Gruppe bestehend aus Alkyl(meth)acrylaten, Cycloalkyl(meth)acrylaten, Aryl(meth)acrylaten, Heteroaryl(meth)acrylaten und Alkylaryl(meth)acrylaten, wobei die Alkyl-Reste, Cycloalkyl-Reste, Aryl-Reste, Heteroaryl-Reste bzw. Alkylaryl-Reste dieser (Meth)acrylate gegebenenfalls jeweils wenigstens eine tertiäre Amino-Gruppe und/oder wenigstens eine Alkoxy-Gruppe aufweisen können, zur Ausbildung von Struktureinheiten (W3) innerhalb des Copolymeren,
und partieller Phosphorylierung der in den Struktureinheiten (W2) des nach radikalischer Co-Polymerisation erhältlichen Copolymeren enthaltenen Hydroxyl-Gruppen zur Ausbildung von Struktureinheiten (W1) oder (W0) innerhalb des Copolymeren
   oder
durch Polymerisation von wenigstens einem ethylenisch ungesättigten Monomer ausgewählt aus der Gruppe bestehend aus Alkyl(meth)acrylaten, Cycloalkyl(meth)acrylaten, Aryl(meth)acrylaten und Alkylaryl(meth)acrylaten, wobei die Alkyl-Reste, Cycloalkyl-Reste, Aryl-Reste bzw. Alkylaryl-Reste dieser (Meth)acrylate jeweils sowohl wenigstens eine wenigstens ein Phosphoratom aufweisende funktionelle Gruppe als auch wenigstens eine OH-Gruppe oder wenigstens eine geschützte OH-Gruppe aufweisen, zur Ausbildung von Struktureinheiten (W0) innerhalb des Copolymeren,
und gegebenenfalls wenigstens einem ethylenisch ungesättigten Monomer ausgewählt aus der Gruppe bestehend aus Alkyl(meth)acrylaten, Cycloalkyl(meth)acrylaten, Aryl(meth)acrylaten, Heteroaryl(meth)acrylaten und Alkylaryl(meth)acrylaten, wobei die Alkyl-Reste, Cycloalkyl-Reste, Aryl-Reste, Heteroaryl-Reste bzw. Alkylaryl-Reste dieser (Meth)acrylate gegebenenfalls jeweils wenigstens eine tertiäre Amino-Gruppe und/oder wenigstens eine Alkoxy-Gruppe aufweisen können, zur Ausbildung von Struktureinheiten (W3) innerhalb des Copolymeren.

In einer ganz besonders bevorzugten Ausführungsform ist das erfindungsgemäß eingesetzte Homopolymer oder Copolymer erhältlich durch radikalische Co-Polymerisation von
wenigstens einem ethylenisch ungesättigten Monomer ausgewählt aus der Gruppe bestehend aus Vinylphosphonsäure, Vinylphosphonsäure in zumindest partiell mittels eines C₁₋₈-Alkyl-Alkohols veresterter Form, Vinylphosphorsäure in zumindest partiell mittels eines C₁₋₈-Alkyl-Alkohols veresterter Form, 2-(Meth)acryloyloxyethylphosphat, 3-(Meth)acryloyloxypropylphosphat, 4-(Meth)acryloyloxybutylphosphat, 10-Methacryloyloxydecyldihydrogenphosphat, Ethyl-2-[4-(dihydroxyphosphoryl)-2-oxabutyl]acrylat und 2,4,6-Trimethylphenyl-2-[4-(dihydroxyphosphoryl)-2-oxabutyl]acrylat, zur Ausbildung von Struktureinheiten (W1) innerhalb des Copolymeren,
   und
wenigstens einem ethylenisch ungesättigten Monomer ausgewählt aus der Gruppe bestehend aus Hydroxyethyl(meth)acrylat, Hydroxypropyl(meth)acrylat und Hydroxybutyl(meth)acrylat zur Ausbildung von Struktureinheiten (W2) innerhalb des Copolymeren,
und gegebenenfalls wenigstens einem ethylenisch ungesättigten Monomer ausgewählt aus der Gruppe bestehend aus Methyl(meth)acrylat, Ethyl(meth)acrylat, n-Butyl(meth)acrylat, i-Butyl(meth)acrylat, t-Butyl(meth)acrylat, Lauryl(meth)acrylat, 2-Ethylhexyl(meth)acrylat, Stearyl(meth)acrylat, Allyl(meth)acrylat, Tridecyl(meth)acrylat, und Benzyl(meth)acrylat, zur Ausbildung von Struktureinheiten (W3) innerhalb des Copolymeren,
   oder
durch radikalische Co-Polymerisation von wenigstens einem ethylenisch ungesättigten Monomer ausgewählt aus der Gruppe bestehend aus Hydroxyethyl(meth)acrylat, Glycidyl(meth)acrylat, Hydroxypropyl(meth)acrylat und Hydroxybutyl(meth)acrylat zur Ausbildung von Struktureinheiten (W2) innerhalb des Copolymeren,
und wenigstens einem ethylenisch ungesättigten Monomer ausgewählt aus der Gruppe bestehend aus Methyl(meth)acrylat, Ethyl(meth)acrylat, n-Butyl(meth)acrylat, i-Butyl(meth)acrylat, t-Butyl(meth)acrylat, Lauryl(meth)acrylat, 2-Ethylhexyl(meth)acrylat, Stearyl(meth)acrylat, Allyl(meth)acrylat, Tridecyl(meth)acrylat, und Benzyl(meth)acrylat, zur Ausbildung von Struktureinheiten (W3) innerhalb des Copolymeren,
und partieller Phosphorylierung der in den Struktureinheiten (W2) des nach radikalischer Co-Polymerisation erhältlichen Copolymeren enthaltenen gegebenenfalls geschützten Hydroxyl-Gruppen zur Ausbildung von Struktureinheiten (W1) oder (W0) innerhalb des Copolymeren
   oder
durch radikalische Polymerisation von wenigstens einem ethylenisch ungesättigten Monomer ausgewählt aus der Gruppe bestehend aus [(3-(Meth)acryloyloxy-2-hydroxypropyl)]phosphat und [(2-(Meth)acryloyloxy-3-hydroxypropyl)]phosphat zur Ausbildung von Struktureinheiten (W0) innerhalb des Homopolymeren oder Copolymeren,
und gegebenenfalls wenigstens einem ethylenisch ungesättigten Monomer ausgewählt aus der Gruppe bestehend aus Methyl(meth)acrylat, Ethyl(meth)acrylat, n-Butyl(meth)acrylat, i-Butyl(meth)acrylat, t-Butyl(meth)acrylat, Lauryl(meth)acrylat, 2-Ethylhexyl(meth)acrylat, Stearyl(meth)acrylat, Allyl(meth)acrylat, Tridecyl(meth)acrylat, und Benzyl(meth)acrylat, zur Ausbildung von Struktureinheiten (W3) innerhalb des Homopolymeren oder Copolymeren.

In einer insbesondere bevorzugten Ausführungsform ist das erfindungsgemäß eingesetzte Copolymer erhältlich durch radikalische Co-Polymerisation von
wenigstens einem ethylenisch ungesättigten Monomer ausgewählt aus der Gruppe bestehend aus Hydroxyethyl(meth)acrylat, Glycidyl(meth)acrylat, Hydroxypropyl(meth)acrylat und Hydroxybutyl(meth)acrylat zur Ausbildung von Struktureinheiten (W2) innerhalb des Copolymeren
   und
wenigstens einem ethylenisch ungesättigten Monomer ausgewählt aus der Gruppe bestehend aus Methyl(meth)acrylat, Ethyl(meth)acrylat, n-Butyl(meth)acrylat, 2-Ethylhexyl(meth)acrylat zur Ausbildung von Struktureinheiten (W3) innerhalb des Copolymeren,
und partieller Phosphorylierung der in den Struktureinheiten (W2) des nach radikalischer Co-Polymerisation erhältlichen Copolymeren enthaltenen gegebenenfalls geschützten Hydroxyl-Gruppen zur Ausbildung von Struktureinheiten (W1) oder (W0) innerhalb des Copolymeren,
oder durch radikalische Co-Polymerisation von
wenigstens einem ethylenisch ungesättigten Monomer ausgewählt aus der Gruppe bestehend aus 2-(Meth)acryloyloxyethylphosphat, 3-(Meth)acryloyloxypropylphosphat, 4-(Meth)acryloyloxybutylphosphat, zur Ausbildung von Struktureinheiten (W1) innerhalb des Copolymeren,
   und
wenigstens einem ethylenisch ungesättigten Monomer ausgewählt aus der Gruppe bestehend aus Hydroxyethyl(meth)acrylat, Hydroxypropyl(meth)acrylat und Hydroxybutyl(meth)acrylat zur Ausbildung von Struktureinheiten (W2) innerhalb des Copolymeren,
   und
wenigstens einem ethylenisch ungesättigten Monomer ausgewählt aus der Gruppe bestehend aus Methyl(meth)acrylat, Ethyl(meth)acrylat, n-Butyl(meth)acrylat, 2-Ethylhexyl(meth)acrylat zur Ausbildung von Struktureinheiten (W3) innerhalb des Copolymeren
oder durch radikalische Co-Polymerisation von
[(2-(Meth)acryloyloxy-3-hydroxypropyl)]phosphat zur Ausbildung von Struktureinheiten (W0) innerhalb des Copolymeren
und
wenigstens einem ethylenisch ungesättigten Monomer ausgewählt aus der Gruppe bestehend aus Methyl(meth)acrylat, Ethyl(meth)acrylat, n-Butyl(meth)acrylat, 2-Ethylhexyl(meth)acrylat zur Ausbildung von Struktureinheiten (W3) innerhalb des Copolymeren.

### Verfahren

Bei dem erfindungsgemäß eingesetzten Homopolymer oder Copolymer handelt es sich vorzugsweise um ein Homopolymer oder Copolymer, welches durch Polymerisation von vorzugsweise wenigstens zwei ethylenisch ungesättigten Verbindungen als Monomeren erhältlich ist. Als Polymerisationstechniken zur Herstellung der erfindungsgemäßen Homopolymere oder Copolymere sind alle aus dem Stand der Technik üblichen und dem Fachmann bekannten Polymerisationstechniken zur Polymerisation ethylenisch-ungesättigter Monomere anwendbar. Die Polymerisation solcher Monomere erfolgt dabei vorzugsweise radikalisch, kationisch oder anionisch. Besonders bevorzugt ist eine radikalische Polymerisation zur Herstellung des erfindungsgemäß eingesetzten Homopolymeren oder Copolymeren.

Zur Herstellung der erfindungsgemäß eingesetzten Homopolymere oder Copolymere können sogenannte lebende oder kontrollierte Polymerisationsverfahren eingesetzt werden, beispielsweise kontrollierte radikalische Polymerisationsverfahren oder eine Gruppentransferpolymerisation. Beispiele für die Gruppentransferpolymerisation finden sich zum Beispiel in bei O.W. Webster in "Group Transfer Polymerization", in "Encyclopedia of Polymer Science and Engineering", Band 7, H. F. Mark, N. M. Bikales, C. G. Overberger and G. Menges, Eds., Wiley Interscience, New York 1987, Seite 580 ff., sowie in O.W. Webster, Adv. Polym. Sci. 2004, 167, 1-34. Beispiele für kontrollierte radikalische Polymerisationsverfahren sind die Atom Transfer Radical Polymerization (ATRP), welche z.B. in Chem. Rev. 2001, 101, 2921 und in Chem. Rev. 2007, 107, 2270-2299 beschrieben ist; der "Reversible Addition Fragmentation Chain Transfer Process" (RAFT), der bei Verwendung bestimmter Polymerisationsregler auch "MADIX" (macromolecular design via the interchange of xanthates) und "Addition Fragmentation Chain Transfer" genannt wird und welcher beispielsweise in Polym. Int. 2000, 49, 993, Aust. J. Chem 2005, 58, 379, J. Polym. Sci. Part A: Polym. Chem. 2005, 43, 5347, Chem. Lett. 1993, 22, 1089, J. Polym. Sci., Part A 1989, 27, 1741 sowie 1991, 29, 1053 sowie 1993, 31, 1551 sowie 1994, 32, 2745 sowie 1996, 34, 95 sowie 2003, 41, 645 sowie 2004, 42, 597 sowie 2004, 42, 6021 und auch in Macromol. Rapid Commun. 2003, 24, 197, in Polymer 2005, 46, 8458-8468 sowie Polymer 2008, 49, 1079-1131 und in US 6 291 620, WO 98/01478, WO 98/58974 und WO 99/31144 beschrieben ist; die kontrollierten Polymerisation mit Nitroxylverbindungen als Polymerisationsreglern (NMP), wie beispielsweise in Chem. Rev. 2001, 101, 3661 offenbart; die kontrollierte radikalische Polymerisation mit Tetraphenylethan, wie beispielsweise in Macromol. Symp. 1996, 111, 63 beschrieben; die kontrollierte radikalische Polymerisation mit 1,1-Diphenylethen als Polymerisationsregler wie beispielsweise in Macromolecular Rapid Communications, 2001, 22, 700 beschrieben; die kontrollierte radikalische Polymerisation mit Organotellur-, Organoantimon- und Organobismuth-Kettenüberträgern, wie in Chem. Rev. 2009, 109, 5051-5068 beschrieben; die kontrollierte radikalische Polymerisation mit Inifertern beispielsweise in Makromol. Chem. Rapid. Commun. 1982, 3, 127 offenbart; die kontrollierte radikalische Polymerisation mit Organokobaltkomplexen, wie beispielsweise aus J. Am. Chem. Soc. 1994, 116, 7973, aus Journal of Polymer Science: Part A: Polymer Chemistry, Vol. 38, 1753-1766 (2000), aus Chem. Rev. 2001, 101, 3611-3659 sowie aus Macromolecules 2006, 39, 8219-8222 bekannt; die Reversible Chain Transfer Catalyzed Polymerization, wie in Polymer 2008, 49, 5177 offenbart; der Degenerative Chain Transfer mit Iod-Verbindungen wie zum Beispiel in Macromolecules 2008, 41, 6261, in Chem. Rev. 2006, 106, 3936-3962 oder in US 7 034 085 beschrieben; die kontrollierte radikalische Polymerisation in Gegenwart von Thioketonen wird beispielsweise in Chem. Commun., 2006, 835-837 und in Macromol. Rapid Commun. 2007, 28, 746-753 beschrieben.

Vorzugsweise erfolgt die Polymerisation in einem geeigneten organischen Lösemittel. Besonders bevorzugte Lösemittel sind Ester wie 1-Methoxy-2-Propylacetat und/oder n-Butylacetat, und/oder aromatische Lösemittel wie Toluol, Xylol, Ethylbenzol und/oder Trimethylbenzol.

### Haftungs-Verstärkung

Das erfindungsgemäß eingesetzte Homopolymere oder Copolymere eignet sich als Haftungs-verstärkendes Additiv. Ein Gegenstand der vorliegenden Erfindung ist daher die Verwendung des erfindungsgemäß eingesetzten Homopolymeren oder Copolymeren als Haftvermittler bzw. Haftungs-verstärkendes Additiv.

Vorzugsweise erfolgt die erfindungsgemäße Verwendung in der Art, dass das Homopolymer oder Copolymer als Haftungs-verstärkendes Additiv zur Haftvermittlung zwischen einem gegebenenfalls mit wenigstens einer Schicht beschichteten Substrat und wenigstens einer auf das gegebenenfalls mit wenigstens einer Schicht beschichtete Substrat aufzubringenden Schicht eingesetzt wird.

Besonders bevorzugt erfolgt die Verwendung des Homopolymeren oder Copolymeren als Haftungs-verstärkendes Additiv in der Art, dass das Homopolymere oder Copolymere als Haftvermittler bzw. als Haftungs-verstärkendes Additiv zwischen zwei Schichten eines wenigstens mit diesen zwei Schichten beschichteten Substrats eingesetzt wird. Dabei wird das Homopolymere oder Copolymere als Haftvermittler bzw. Haftungs-verstärkendes Additiv zwischen einem wenigstens mit einer Schicht beschichteten Substrat und wenigstens einer weiteren auf das beschichtete Substrat aufzubringenden Schicht eingesetzt, wie beispielsweise als Haftvermittler zwischen einer auf einem Substrat befindlichen Basislackschicht und einer darüber aufzubringenden Klarlackschicht. Dabei ist das erfindungsgemäß eingesetzte Homopolymere oder Copolymere vorzugsweise in der Beschichtungszusammensetzung enthalten, die zum Aufbringen der weiteren Schicht wie beispielsweise der Klarlackschicht auf das beschichtete Substrat dient. Dabei sind die wenigstens nach der Beschichtung auf dem Substrat befindlichen zwei übereinanderliegenden Schichten entweder gleich oder verschieden, vorzugsweise verschieden, voneinander. Vorzugsweise basieren die wenigstens zwei übereinanderliegenden Schichten - jeweils unabhängig voneinander - auf wenigstens einem synthetischen, halbsynthetischen und/oder natürlichen Polymeren, welches vorzugsweise als Bindemittel innerhalb der jeweiligen Schicht eingesetzt wird.

Vorzugsweise liegt das Homopolymere oder Copolymere als Haftungs-verstärkendes Additiv als ein Bestandteil einer Beschichtungszusammensetzung vor, d.h. vorzugsweise erfolgt die erfindungsgemäße Verwendung dabei so, dass das Homopolymere oder Copolymere ein Bestandteil einer Beschichtungszusammensetzung ist.

Besonders bevorzugt ist eine Verwendung, in der das Homopolymere oder Copolymere als Haftungs-verstärkendes Additiv als Bestandteil einer Beschichtungszusammensetzung zum Aufbringen einer vorzugsweise äußeren Schicht auf ein mit wenigstens einer Schicht beschichtetes Substrat, insbesondere auf ein mit einem Mehrschichtaufbau wie beispielsweise einem Mehrschichtlackaufbau versehenes Substrat eingesetzt wird. Auf die auf das Substrat aufgebrachte und das erfindungsgemäß eingesetzte Homopolymere oder Copolymere als Haftungs-verstärkendes Additiv als Bestandteil enthaltene Beschichtungszusammensetzung kann gegebenenfalls eine weitere Lackschicht wie eine Klarlackschicht aufgebracht werden, insbesondere wenn die das erfindungsgemäß eingesetzte Homopolymere oder Copolymere als Haftungs-verstärkendes Additiv enthaltene Beschichtungszusammensetzung zum Aufbringen einer Reparaturlackschicht oder Wartungslackschicht eingesetzt wird.

Das Homopolymere oder Copolymere kann ein Bestandteil der wenigstens einen auf das beschichtete Substrat aufzubringenden weiteren Schicht sein, wie beispielsweise ein Bestandteil einer Klarlackschicht, die auf ein mit wenigstens einer Basislackschicht beschichteten Substrat aufgebracht wird. In diesem Fall erfolgt eine Haftvermittlung zwischen der Basislackschicht und der Klarlackschicht aufgrund der haftvermittelnden Wirkung des in der aufzubringenden Klarlackschicht enthaltenen Copolymeren. Alternativ kann das erfindungsgemäß eingesetzte Homopolymere oder Copolymere ein Bestandteil einer Beschichtungszusammensetzung sein, welche in Form einer Haftvermittlerschicht zwischen dem wenigstens mit einer Schicht beschichteten Substrat und der darauf aufzubringenden weiteren Schicht eingesetzt wird.

Alternativ erfolgt die Verwendung des Homopolymeren oder Copolymeren als Haftungs-verstärkendes Additiv in der Art, dass das Homopolymere oder Copolymere als Haftvermittler zwischen wenigstens einer auf ein Substrat aufzubringenden Schicht und dem Substrat selbst eingesetzt wird. Auch in diesem Fall erfolgt die erfindungsgemäße Verwendung dabei vorzugsweise so, dass das Homopolymere oder Copolymere ein Bestandteil einer Beschichtungszusammensetzung ist, wobei das Homopolymere oder Copolymere entweder ein Bestandteil einer Beschichtungszusammensetzung sein kann, welche in Form einer Haftvermittlerschicht zwischen Substrat und der aufzubringenden Schicht aufgebracht wird oder ein Bestandteil einer Beschichtungszusammensetzung ist, die zur Herstellung der auf das Substrat aufzubringenden Schicht eingesetzt wird.

Durch den Einsatz der erfindungsgemäß eingesetzten Homopolymeren oder Copolymeren als Haftungs-verstärkendes Additiv, insbesondere als Bestandteil einer Beschichtungszusammensetzung umfassend ein solches Haftungs-verstärkendes Additiv, gelingt es überraschenderweise, die Haftung zwischen dem unbeschichteten Substrat und einer darauf aufzubringenden Beschichtung (Primerhaftung) oder zwischen wenigstens einer auf einem Substrat befindlichen Beschichtung und einer darauf aufzubringenden Beschichtung (Zwischenhaftung), insbesondere jeweils unabhängig basierend auf wenigstens einem synthetischen, halbsynthetischen und/oder natürlichen Polymeren, deutlich zu verbessern und damit schädigenden Einflüssen, wie beispielsweise Verwitterung oder optischer Makeln entscheidend vorzubeugen.

Die Beschichtung des Substrats kann vorzugsweise nach allen aus dem Stand der Technik bekannten Auftragungsverfahren, wie z.B. Streichen, Besprühen, Spritzen, Rollen, Rakeln, Tauchen erfolgen. Die Beschichtung des Substrats umfasst vorzugsweise eine einseitige Beschichtung des Substrats. Grundsätzlich kann das eingesetzte Substrat aber auch beidseitig beschichtet werden, wobei im Fall einer beidseitigen Beschichtung die jeweiligen Beschichtungen nicht identisch sein müssen. Beispielsweise kann eine Seite eines Substrats mit einer Schicht beschichtet sein und die andere Seite des Substrats eine andere Beschichtung aufweisen.

Als erfindungsgemäß einzusetzendes Substrat eignet sich vorzugsweise ein Substrat ausgewählt aus der Gruppe bestehend aus den Materialien Metall, Glas, Keramik, Holz und Kunststoff, wobei das Substrat jeweils bereits wenigstens eine Beschichtung wie beispielsweise eine Lackierung aufweisen kann. Die zu beschichtende Substratoberfläche kann eben oder uneben sein, wie beispielsweise gebogen, gewölbt, gewellt, geknickt oder in sonstiger Weise ungleichmäßig gestaltet sein. So stellt beispielsweise auch die Oberfläche eines Drahtes eine flächenförmige Oberfläche eines Körpers im erfindungsgemäßen Sinne und damit ein Substrat dar. Vorzugsweise erfolgt - wie vorstehend ausgeführt - die Verwendung des erfindungsgemäß eingesetzten Homopolymeren oder Copolymeren als Haftungs-verstärkendes Additiv in der Art, dass das Homopolymere oder Copolymere als Haftungs-verstärkendes Additiv zwischen zwei Schichten eines mit wenigstens zwei übereinanderliegenden Schichten beschichteten Substrats eingesetzt wird, wie beispielsweise als Haftvermittler zwischen einer auf einem Substrat befindlichen Basislackschicht und einer darüber befindlichen Klarlackschicht. Dabei können die wenigstens zwei übereinanderliegenden Schichten nacheinander auf das Substrat aufgebracht werden: so kann z.B. zunächst eine Basislackschicht auf das Substrat aufgebracht werden und im Anschluss eine Klarlackschicht, welche vorzugsweise das erfindungsgemäß eingesetzte Homopolymere oder Copolymere enthält. Wird das Homopolymere oder Copolymere als Bestandteil einer Haftvermittlerschicht eingesetzt, so kann diese nach Aufbringen der Basislackschicht aufgebracht werden und im Anschluss dann die Klarlackschicht. Dabei kann die Basislackschicht zunächst vor Aufbringen der weiteren Schicht(en) vollständig gehärtet werden oder alternativ nur unvollständig oder gar nicht vor Aufbringen der weiteren Schicht(en) gehärtet werden. Im letzteren Fall erfolgt dann eine gemeinsame Aushärtung aller Schichten, nachdem sie aufgetragen sind.

Bei Beschichtungsaufbauten umfassend zwei oder mehr Schichten können diese Schichten unmittelbar nacheinander aufgetragen werden (wie in einem MehrschichtLackaufbau typisch) oder aber es kann zwischen der Lackierung der einen Schicht und der Überlackierung mit der nächstfolgenden Schicht ein längerer zeitlicher Abstand vorliegen (z.B. bei Reparaturarbeiten oder Wartungsarbeiten, die erst bei Bedarf zur Ausbesserung von Schäden aufgetragen werden); dabei kann auch eine Reparaturlackierung selbst wieder einen Mehrschichtaufbau aufweisen, d.h. aus mehr als einer Lackschicht bestehen, wobei das erfindungsgemäße Homopolymere oder Copolymere als Haftvermittler zwischen diesen Lackschichten eingesetzt werden kann.

### Beschichtungszusammensetzung

Ein weiterer Gegenstand der vorliegenden Erfindung ist eine Beschichtungszusammensetzung umfassend wenigstens ein erfindungsgemäß eingesetztes Homopolymere oder Copolymere als Haftungs-verstärkendes Additiv als Komponente (A). Vorzugsweise umfasst die erfindungsgemäße Beschichtungszusammensetzung zudem wenigstens ein Bindemittel (B).

Ein weiterer Gegenstand der vorliegenden Erfindung ist eine Beschichtungszusammensetzung umfassend
(A) wenigstens ein zur Verwendung als Haftungs-verstärkendes Additiv erfindungsgemäß eingesetztes Homopolymere oder Copolymere in einer Menge in einem Bereich von 0,1 bis 15 Gew.-%, bezogen auf das Gesamtgewicht der Beschichtungszusammensetzung, und
(B) wenigstens ein Bindemittel in einer Menge in einem Bereich von 20 bis 99 Gew.-%, bezogen auf das Gesamtgewicht der Beschichtungszusammensetzung, insbesondere wenigsten ein Bindemittel (B) ausgewählt aus der Gruppe bestehend aus Polyurethanen und Polyharnstoffen und Mischungen davon.

Somit ist beispielsweise ein weiterer Gegenstand der vorliegenden Erfindung eine Beschichtungszusammensetzung umfassend
(A) wenigstens ein durch Polymerisation von ethylenisch ungesättigten Monomeren erhältliches Homopolymer oder Copolymer als Haftungs-verstärkendes Additiv, welches aufgebaut ist aus wenigstens einer Struktureinheit (W0) und gegebenenfalls wenigstens einer weiteren von (W0) verschiedenen Struktureinheit (W3),
   wobei
   jede Struktureinheit (W0) sowohl wenigstens eine funktionelle Gruppe enthält, die wenigstens ein Phosphoratom aufweist, als auch wenigstens eine gegenüber einer Isocyanat-Gruppe reaktive funktionelle Gruppe aufweist,
   und das Homopolymere oder Copolymere, bezogen auf die Gesamtmenge der wenigstens einen Struktureinheit (W0) sowie gegebenenfalls (W3) innerhalb der Polymerhauptkette des Homopolymeren oder Copolymeren, folgende Anteile in mol-% aufweist:
   ▪ 1 bis 100 mol-% der Struktureinheiten (W0) und
   ▪ 0 bis 99 mol-% der Struktureinheiten (W3),
   oder welches aufgebaut ist aus wenigstens zwei voneinander verschiedenen Struktureinheiten (W1) und (W2) und gegebenenfalls wenigstens einer weiteren (W1) und (W2) verschiedenen Struktureinheit (W3),
   wobei
   jede Struktureinheit (W1) wenigstens eine funktionelle Gruppe enthält, die wenigstens ein Phosphoratom aufweist, und gegebenenfalls wenigstens ein Teil der Struktureinheiten (W1) zudem wenigstens eine gegenüber einer Isocyanat-Gruppe reaktive funktionelle Gruppe aufweist, und
   jede Struktureinheit (W2) wenigstens eine gegenüber einer Isocyanat-Gruppe reaktive funktionelle Gruppe aufweist, wobei keine der Struktureinheiten (W2) Phosphoratome enthält,
   und das Homopolymere oder Copolymere, bezogen auf die Gesamtmenge der wenigstens zwei Struktureinheiten (W1) und (W2) sowie gegebenenfalls (W3) innerhalb der Polymerhauptkette des Homopolymeren oder Copolymeren, folgende Anteile in mol-% aufweist:
   ▪ 1 bis 80 mol-% der Struktureinheiten (W1),
   ▪ 1 bis 80 mol-% der Struktureinheiten (W2) und
   ▪ 0 bis 98 mol-% der Struktureinheiten (W3),
   in einer Menge in einem Bereich von 0,1 bis 15 Gew.-%, bezogen auf das Gesamtgewicht der Beschichtungszusammensetzung, und
(B) wenigstens ein Bindemittel in einer Menge in einem Bereich von 20 bis 99 Gew.-%, bezogen auf das Gesamtgewicht der Beschichtungszusammensetzung.

Alle im Zusammenhang mit der Verwendung des erfindungsgemäß eingesetzten Homopolymeren oder Copolymeren als Haftungs-verstärkendes Additiv bzw. Haftvermittler hierin vorstehend beschriebenen bevorzugten Ausführungsformen sind auch bevorzugte Ausführungsformen des erfindungsgemäß eingesetzten Homopolymeren oder Copolymeren als Bestandteil (A) der erfindungsgemäßen Beschichtungszusammensetzung.

Der Begriff "umfassend" im Sinne der vorliegenden Erfindung, wie beispielsweise im Zusammenhang mit der erfindungsgemäßen Beschichtungszusammensetzung, hat in einer bevorzugten Ausführungsform die Bedeutung "bestehend aus". Dabei können hinsichtlich der erfindungsgemäßen Beschichtungszusammensetzung in dieser bevorzugten Ausführungsform eine oder mehrere der weiteren nachstehend genannten optional in der erfindungsgemäßen Beschichtungszusammensetzung enthaltenen Komponenten in der Beschichtungszusammensetzung enthalten sein. Alle Komponenten können dabei jeweils in ihren vorstehend und nachstehend genannten bevorzugten Ausführungsformen in der erfindungsgemäßen Beschichtungszusammensetzung enthalten sein.

Vorzugsweise addieren sich die Anteile in Gew.-% aller in der erfindungsgemäßen Beschichtungszusammensetzung enthaltenen Komponenten und Additive auf insgesamt 100 Gew.-%, bezogen auf das Gesamtgewicht der Beschichtungszusammensetzung.

Die erfindungsgemäße Beschichtungszusammensetzung kann auf allen üblichen Substraten aufgebracht werden, insbesondere auf den vorstehend genannten Substraten. Als besonders bevorzugtes Substrat eignet sich ein bereits beschichtetes Substrat, d.h. durch Aufbringen der erfindungsgemäßen Beschichtungszusammensetzung wird ein insgesamt wenigstens mit zwei vorzugsweise übereinanderliegenden Schichten beschichtetes Substrat erhalten. Das Substrat kann dabei vorzugsweise bereits mit einer Beschichtung wie einem Lack, vorzugsweise einer Beschichtung basierend auf einem Polyurethan, Polyester, Polyamid, Polyharnstoff, Polyvinylchlorid, Polystyrol, Polycarbonat, Poly(meth)acrylat, Epoxidharz, Phenol-Formaldehydharz, MelaminFormaldehydharz, Phenolharz, und/oder Silikonharze beschichtet sein, besonders bevorzugt mit einer Beschichtung basierend auf wenigstens eine Poly(meth)acrylat, insbesondere auf wenigstens einem Polyacrylat. Zur Herstellung der auf dem Substrat vor Aufbringen der erfindungsgemäßen Beschichtungszusammensetzung bereits befindlichen Schicht wird insbesondere bevorzugt eine wässrige Acrylat-Dispersion eingesetzt. Vorzugsweise ist die auf dem Substrat vor Aufbringen der erfindungsgemäßen Beschichtungszusammensetzung bereits befindliche Schicht eine Basislackschicht.

Vorzugsweise ist die erfindungsgemäße Beschichtungszusammensetzung eine Beschichtungszusammensetzung zur Herstellung einer Klarlackschicht, einer Reparaturlackschicht oder einer Serienlackschicht, besonders bevorzugt zur Herstellung einer Klarlackschicht oder einer Reparaturlackschicht.

Nach Aufbringen der erfindungsgemäßen Beschichtungszusammensetzung auf ein beschichtetes Substrat kann diese eine von wenigstens zwei übereinanderliegenden Schichten des dann mit wenigstens zwei übereinanderliegenden Schichten beschichteten Substrats sein. In diesem Fall erfolgt eine Haftvermittlung zwischen der durch Einsatz der Beschichtungszusammensetzung aufgebrachten Schicht und der bereits auf dem Substrat befindlichen Schicht aufgrund der haftvermittelnden Wirkung des in der Beschichtungszusammensetzung enthaltenen Homopolymeren oder Copolymeren. Alternativ kann das erfindungsgemäß eingesetzte Homopolymere oder Copolymere ein Bestandteil einer Beschichtungszusammensetzung sein, welche auf ein unbeschichtetes Substrat aufgebracht wird.

Alternativ kann das erfindungsgemäß eingesetzte Homopolymer oder Copolymer ein Bestandteil einer Beschichtungszusammensetzung sein, welche in Form einer Haftvermittlerschicht zwischen wenigstens zwei übereinanderliegenden Schichten eines mit wenigstens zwei übereinanderliegenden Schichten beschichteten Substrats eingesetzt wird. In diesem Fall kann die erfindungsgemäße Beschichtungszusammensetzung als eine Beschichtungszusammensetzung zur Herstellung einer Haftvermittlerschicht eingesetzt werden. Vorzugsweise umfasst die Beschichtungszusammensetzung in diesem Fall wenigstens ein Benetzungsmittel und/oder Verlaufshilfsmittel.

Alle üblichen dem Fachmann bekannten Bindemittel (B) eignen sich als BindemittelKomponente der erfindungsgemäßen Beschichtungszusammensetzung. Als in der erfindungsgemäßen Beschichtungszusammensetzung enthaltenes Bindemittel eignen sich vorzugsweise wenigstens ein Bindemittel basierend auf wenigstens einem synthetischen, halbsynthetischen oder natürlichen Polymeren oder einer Mischung aus wenigstens zwei dieser Polymeren.

Das Bindemittel (B) kann in einem Verdünnungsmittel wie wenigstens einem organischen Lösemittel und/oder Wasser, vorzugsweise in wenigstens einem organischen Lösemittel, gelöst oder dispergiert vorliegen.

Das erfindungsgemäß eingesetzte Bindemittel (B) weist vorzugsweise vernetzbare funktionelle Gruppen auf. Jede übliche dem Fachmann bekannte vernetzbare funktionelle Gruppe kommt dabei in Betracht. Insbesondere sind die vernetzbaren funktionellen Gruppen ausgewählt aus der Gruppe bestehend aus Hydroxyl-Gruppen, Amino-Gruppen, Carbonsäure-Gruppen, ungesättigten KohlenstoffDoppelbindungen, Isocyanaten, Polyisocyanaten und Epoxiden. Besonders bevorzugt sind Isocyanate und Polyisocyanate. Das Bindemittel ist vorzugsweise exotherm oder endotherm vernetzbar bzw. härtbar. Vorzugsweise ist das Bindemittel in einem Temperaturbereich von -20°C bis zu 250°C, vorzugsweise von 18°C bis 200°C, vernetzbar bzw. härtbar.

Vorzugsweise kann als Bindemittel (B) wenigstens ein Polymer ausgewählt aus der Gruppe bestehend aus Polyurethanen, Polyestern, Polyamiden, Polyharnstoffen, Polyvinylchloriden, Polystyrolen, Polycarbonaten, Poly(meth)acrylaten, Epoxidharzen, Phenol-Formaldehydharzen, Melamin-Formaldehydharzen, Phenolharzen und Silikonharzen eingesetzt werden, wobei vorzugsweise 70 bis 100 Gew.-% des in der Beschichtungszusammensetzung enthaltenen Bindemittels (B) aus wenigstens einem der vorstehend genannten Polymeren ausgewählt sind.

Besonders bevorzugt ist das Bindemittel (B) ausgewählt aus der Gruppe bestehend aus Polyurethanen und Polyharnstoffen, wobei vorzugsweise 70 bis 100 Gew.-% des in der Beschichtungszusammensetzung enthaltenen Bindemittels (B) aus wenigstens einem der vorstehend genannten Polymeren ausgewählt sind.

In einer anderen bevorzugten Ausführungsform kann als Bindemittel (B) wenigstens ein Polymer ausgewählt aus der Gruppe bestehend aus Polyurethanen, Polyestern, Polyamiden, Polyharnstoffen, Polyvinylchloriden, Polystyrolen, Polycarbonaten, Poly(meth)acrylaten, Epoxidharzen, Phenol-Formaldehydharzen, Melamin-Formaldehydharzen, Phenolharzen und Silikonharzen, insbesondere ausgewählt aus der Gruppe bestehend aus Polyharnstoffen und Polyurethanen, eingesetzt werden, wobei das Bindemittel in diesem Fall vorzugsweise in einer Menge von 25 bis 95 Gew.-%, ganz besonders bevorzugt in einer Menge von 30 bis 90 Gew.-%, und insbesondere bevorzugt in einer Menge von 40 bis 80 Gew.-%, bezogen auf das Gesamtgewicht der Beschichtungszusammensetzung vorhanden ist. Ganz besonders bevorzugt wird als Bindemittel (B) wenigstens ein Polyurethan eingesetzt und insbesondere enthält die erfindungsgemäße Beschichtungszusammensetzung das Bindemittel in diesem Fall vorzugsweise in einer Menge von 25 bis 95 Gew.-%, ganz besonders bevorzugt in einer Menge von 30 bis 90 Gew.-%, insbesondere bevorzugt in einer Menge von 40 bis 80 Gew.-%, bezogen auf das Gesamtgewicht der Beschichtungszusammensetzung.

Besonders bevorzugt kann als Bindemittel (B) ein Bindemittel eingesetzt werden, welches unter Beteiligung von Isocyanat und/oder oligomerisierten Isocyanat-Gruppen ausgehärtet wird, ganz besonders bevorzugt wenigstens ein entsprechendes Polyurethan und/oder wenigstens ein entsprechender Polyharnstoff (z.B. sogenannte "Polyaspartic-Bindemittel"). Bei Polyaspartic-Bindemitteln handelt es sich um Verbindungen, die aus Reaktion von aminofunktionellen Verbindungen, insbesondere sekundären Aminen, mit Isocyanaten umgesetzt werden.

Wird als Bindemittel (B) wenigstens ein Polyurethan eingesetzt, so eignen sich als ein solches Bindemittel insbesondere Polyurethan-basierte Harze, die durch eine Polyadditionsreaktion zwischen hydroxylgruppenhaltigen Verbindungen wie Polyolen (wie z.B. Hydroxylgruppen von hydroxylgruppenhaltigen Polyestern oder hydroxylgruppenhaltigen Polyethern sowie Mischungen und Copolymeren davon) und wenigstens einem Polyisocyanat (aromatische und aliphatische Isocyanate, Di-, Tri- und/oder Polyisocyanate). Dabei ist üblicherweise ein stöchiometrischer Umsatz der OH-Gruppen der Polyole mit den NCO-Gruppen der Polyisocyanate erforderlich. Jedoch kann das einzusetzende stöchiometrische Verhältnis auch variiert werden, da das Polyisocyanat in solchen Mengen zu der Polyol-Komponente gegeben werden kann, dass es zu einer "Übervernetzung" oder zu einer "Untervernetzung" kommen kann. Neben einer Reaktion von NCO-Gruppen mit OH-Gruppen (bei Polyurethan-Bindemitteln) oder Aminogruppen (bei Polyharnstoff-Bindemitteln) kann als weitere Reaktion zur Vernetzung z.B. auch die Di- und Trimerisierung von Isocyanaten (zu Uretdionen oder Isocyanuraten) auftreten.

Werden als Bindemittel (B) Epoxidharze, d.h. Epoxid-basierte Harze eingesetzt, so eignen sich vorzugsweise solche Epoxid-basierten Harze, die aus Glycidylethern hergestellt werden, welche endständige Epoxidgruppen und innerhalb des Moleküls Hydroxylgruppen als funktionelle Gruppen aufweisen. Vorzugsweise sind diese Umsetzungsprodukte von Bisphenol A und Epichlorhydrin bzw. Bisphenol F mit Epichlorhydrin und Mischungen davon, welche auch in Gegenwart von sogenannten Reaktivverdünnern (d.h. niedermolekularer Epoxid-funktioneller Verbindungen wie z.B. Alkyl- oder Arylglycidethern) eingesetzt werden. Die Härtung bzw. Vernetzung derartiger Epoxid-basierter Harze erfolgt üblicherweise durch eine Polymerisation der Epoxidgruppen des Epoxidringes, durch eine Polyadditionsreaktion in Form einer Anlagerung anderer reaktiver Verbindungen als Härter in stöchiometrischen Mengen an die Epoxidgruppen, wobei dementsprechend pro Epoxidgruppe die Gegenwart eines aktiven Wasserstoffäquivalents erforderlich ist (d.h. pro Epoxid-Äquivalent zur Aushärtung ein H-aktives-Äquivalent benötigt wird), oder durch eine Polykondensation über die Epoxid- und die Hydroxylgruppen. Geeignete Härter sind beispielsweise Polyamine, insbesondere (hetero)aliphatische, (hetero)aromatische und (hetero) cycloaliphatische Polyamine, Polyamidoamine, Polyaminoamide sowie Polycarbonsäuren und ihre Anhydride.

Vorzugsweise enthält die erfindungsgemäße Beschichtungszusammensetzung das Bindemittel in einer Menge von 20 bis 99 Gew.-%, besonders bevorzugt in einer Menge von 25 bis 95 Gew.-%, ganz besonders bevorzugt in einer Menge von 30 bis 90 Gew.-%, insbesondere bevorzugt in einer Menge von 40 bis 80 Gew.-%, bezogen auf das Gesamtgewicht der Beschichtungszusammensetzung.

Vorzugsweise weist das erfindungsgemäß eingesetzte Bindemittel einen nicht-flüchtigen Anteil, d.h. einen Festkörper-Anteil, von 30 bis 90 Gew.-%, besonders bevorzugt von 40 bis 85 Gew.-%, ganz besonders bevorzugt von 50 bis 80 Gew.-%, jeweils bezogen auf das Gesamtgewicht des Bindemittels auf. Die Bestimmung des Festkörper-Anteils erfolgt nach der nachstehend beschriebenen Methode.

Vorzugsweise weist die erfindungsgemäße Beschichtungszusammensetzung einen nicht-flüchtigen Anteil, d.h. einen Festkörper-Anteil, von 10 bis 90 Gew.-%, besonders bevorzugt von 15 bis 85 Gew.-%, ganz besonders bevorzugt von 25 bis 80 Gew.-%, insbesondere bevorzugt von 30 bis 80 Gew.-%, am meisten bevorzugt von 40 bis 80 Gew.-%, jeweils bezogen auf das Gesamtgewicht der Beschichtungszusammensetzung auf. Die Bestimmung des Festkörper-Anteils erfolgt nach der nachstehend beschriebenen Methode.

Die erfindungsgemäße Beschichtungszusammensetzung kann gegebenenfalls wenigstens einen Härter umfassen, welcher vorzugsweise zur Vernetzung geeignet ist. Solche Härter sind dem Fachmann bekannt. Zur Beschleunigung der Vernetzung können der Beschichtungszusammensetzung geeignete Katalysatoren zugesetzt werden. Alle dem Fachmann bekannten üblichen Härter können zur Herstellung der erfindungsgemäßen Beschichtungszusammensetzung eingesetzt werden.

Wird als Bindemittel wenigstens ein Polyurethan eingesetzt, so wird die zur Herstellung des Polyurethans eingesetzte wenigstens eine Isocyanat-Verbindung vorzugsweise als Härter bezeichnet.

Vorzugsweise enthält die erfindungsgemäße Beschichtungszusammensetzung den Härter in einer Menge von 2 bis 100 Gew.-%, vorzugsweise in einer Menge von 2 bis 80 Gew.-%, besonders bevorzugt in einer Menge von 2 bis 50 Gew.-%, jeweils bezogen auf das Gesamtgewicht des Bindemittels.

Vorzugsweise enthält die erfindungsgemäße Beschichtungszusammensetzung den Katalysator in einer Menge von 0,001 bis 20 Gew.-%, besonders bevorzugt in einer Menge von 0,002 bis 15 Gew.-%, ganz besonders bevorzugt in einer Menge von 0,004 bis 10 Gew,-%, insbesondere in einer Menge von 0,006 bis 5 Gew.-% oder in einer Menge von 0,010 bis 3 Gew.-%, jeweils bezogen auf das Gesamtgewicht der Beschichtungszusammensetzung.

Vorzugsweise ist das erfindungsgemäß eingesetzte Homopolymere oder Copolymere in der erfindungsgemäßen Beschichtungszusammensetzung in einer Menge in einem Bereich von 0,1 bis 15 Gew.-% oder in einem Bereich von 0,2 bis 12 Gew.-%, besonders bevorzugt in einem Bereich von 0,3 bis 10 Gew.-%, ganz besonders bevorzugt in einem Bereich von 0,4 bis 8 Gew.-%, insbesondere bevorzugt in einem Bereich von 0,5 bis 6 Gew.-%, am meisten bevorzugt in einem Bereich von 0,6 bis 5 Gew.-% oder von 0,7 bis 4 Gew.-% oder von 0,8 bis 3 Gew.-%, jeweils bezogen auf das Gesamtgewicht der Beschichtungszusammensetzung, enthalten.

In einer anderen bevorzugten Ausführungsform ist das erfindungsgemäß eingesetzte Homopolymere oder Copolymere in der erfindungsgemäßen Beschichtungszusammensetzung in einer Menge in einem Bereich von ≤ 10 Gew.-% oder in einem Bereich von ≤ 9 Gew.-%, besonders bevorzugt in einem Bereich von ≤ 8 Gew.-%, ganz besonders bevorzugt in einem Bereich von ≤ 7Gew.-%, insbesondere bevorzugt in einem Bereich von ≤ 6 Gew.-%, am meisten bevorzugt in einem Bereich von ≤ 5 Gew.-% oder von ≤ 4 Gew.-% oder von ≤ 3 Gew.-%, jeweils bezogen auf das Gesamtgewicht der Beschichtungszusammensetzung, enthalten.

Die erfindungsgemäße Beschichtungszusammensetzung kann je nach erwünschtem Anwendungszweck, der dekorativ und/oder technisch sein kann, ein oder mehrere üblicherweise eingesetzte weitere Additive enthalten. Vorzugsweise sind diese Additive ausgewählt aus der Gruppe bestehend aus Antioxidantien, Antistatika, Emulgatoren, Verlaufshilfsmitteln, Löslichkeitsvermittlern, Entschäumungsmitteln, Benetzungsmitteln, Stabilisierungsmitteln, vorzugsweise Hitze- und/oder Wäreme-Stabilisatoren, Prozess-Stabilisatoren und UV- und/oder Licht-Stabilisatoren, Lichtschutzmitteln, Entlüftern, Inhibitoren, Katalysatoren, Wachsen, Netz- und Dispergiermitteln, Flexibilisierungsmitteln, Flammschutzmitteln, Lösemitteln, Reaktivverdünnern, Trägermedien, Harze, Wachse, Hydrophobierungsmitteln, Hydrophilierungsmitteln, Ruß, Metalloxiden und/oder Halbmetalloxiden, Verdickern, Thixotropiermitteln, Schlagzähmachern, Blähmitteln, Prozesshilfsmitteln, Weichmachern, pulver- und faserförmige Feststoffen, vorzugsweise pulver- und faserförmige Feststoffen ausgewählt aus der Gruppe bestehend aus Füllstoffen, Glasfasern, Verstärkern und Pigmenten, und Gemischen aus den vorstehend genannten weiteren Additiven. Der Additiv-Gehalt in der erfindungsgemäßen Beschichtungszusammensetzung kann je nach Verwendungszweck sehr breit variieren. Vorzugsweise liegt der Gehalt, bezogen auf das Gesamtgewicht der erfindungsgemäßen Beschichtungszusammensetzung bei 0,01 bis 15,0 Gew.-%, noch bevorzugter bei 0,05 bis 10,0 Gew.-%, besonders bevorzugt bei 0,1 bis 8,0 Gew.-%, ganz besonders bevorzugt bei 0,1 bis 6,0 Gew.-%, insbesondere bei 0,1 bis 4,0 Gew.-% und am meisten bevorzugt bei 0,1 bis 3,0 Gew.-%.

Weiterhin können die Beschichtungszusammensetzungen, vorzugsweise im ausgehärteten Zustand, bedruckt und/oder geprägt sein.

Die vorliegende Erfindung betrifft weiterhin ein Verfahren zur Herstellung der erfindungsgemäßen Beschichtungszusammensetzung. Die erfindungsgemäße Beschichtungszusammensetzung kann dadurch hergestellt werden, dass die jeweiligen Komponenten der Beschichtungszusammensetzung, die oben beschrieben worden sind, beispielsweise mittels automatisierter Dosier- und Mischanlagen, Schnellrührer, Rührkessel, Rührwerksmühlen, Dissolver, Kneter, oder In-Line-Dissolver gemischt und dispergiert und/oder gelöst werden.

### Verwendung der Beschichtungszusammensetzung

Die erfindungsgemäße Beschichtungszusammensetzung eignet sich insbesondere als Klarlackierung, Serienlackierung, Reparaturlackierung und/oder Wartungslackierung.

Ein weiterer Gegenstand der vorliegenden Erfindung ist daher eine Verwendung der erfindungsgemäßen Beschichtungszusammensetzung als Klarlack, Serienlack, Reparaturlack oder Wartungslack.

Dabei wird die erfindungsgemäße Beschichtungszusammensetzung vorzugsweise zumindest teilweise, d.h. punktuell oder vollständig auf die zu beschichtende Oberfläche eines vorzugsweise bereits beschichteten, besonders bevorzugt bereits wenigstens mit einer Basislackschicht beschichteten, Substrats, aufgetragen.

### Beschichtetes Substrat

Ein weiterer Gegenstand der Erfindung ist ein Verfahren zur Herstellung eines wenigstens teilweise mit der erfindungsgemäßen Beschichtungszusammensetzung beschichteten Substrats. Dabei wird vorzugsweise eine erfindungsgemäße Beschichtungszusammensetzung, vorzugsweise eine Beschichtungszusammensetzung zur Herstellung einer Haftvermittlerschicht oder einer Klarlackschicht oder Reparaturlackschicht oder einer Wartungslackschicht, insbesondere einer Klarlackschicht, auf ein Substrat, insbesondere auf ein bereits mit wenigstens einer Beschichtung wie einer Lackschicht, vorzugsweise einer Basislackschicht, beschichtetes Substrat aufgebracht, und im Anschluss physikalisch getrocknet, eingebrannt und/oder ausgehärtet bzw. vernetzt. Wird die erfindungsgemäße Beschichtungszusammensetzung als eine Beschichtungszusammensetzung zur Herstellung einer Haftvermittlerschicht eingesetzt, so kann nach dem Aufbringen dieser eine Klarlackschicht aufgebracht werden. Dabei kann die Haftvermittlerschicht zunächst vor Aufbringen der weiteren Klarlackschicht vollständig gehärtet werden oder alternativ nur unvollständig oder gar nicht vor Aufbringen der weiteren Klarlackschicht gehärtet werden. Im letzteren Fall erfolgt dann eine gemeinsame Aushärtung aller Schichten, nachdem sie aufgetragen worden sind.

Ein weiterer Gegenstand der Erfindung ist ein wenigstens teilweise mit der erfindungsgemäßen Beschichtungszusammensetzung beschichtetes Substrat, welches vorzugsweise durch das vorstehend genannte Verfahren erhältlich ist.

### Bestimmungsmethoden

### 1. Bestimmung der Haftungseigenschaften zwischen einer auf einem Substrat applizierten Basislackschicht und einer auf dieser Basislackschicht applizierten Klarlackschicht

Ein als Substrat eingesetztes KTL-Blech der Firma Krüppel (Abmessung 10 cm x 20 cm) wird mit Hilfe von Schleifpapier (der Firma 3M, Scrotch-Brite) vorbehandelt und durch Waschen mit Ethylacetat gereinigt. Ein Basislack wie beispielsweise ein erfindungsgemäß eingesetzter Basislack M3 wird auf ein solches KLT-Blech durch Spritzapplikation mit einer HVLP-Pistole (high volume low pressure) appliziert und bei einer Temperatur im Bereich von 18 bis 23°C über eine Dauer von 30 Minuten getrocknet. Direkt im Anschluss wird ein Klarlack wie beispielsweise ein durch Einarbeiten einer Härter-Lösung gemäß Tabelle 2 sowie einer Verdünner-Lösung gemäß Tabelle 3 in eine der Mischungen M1 B1, M1 B3, M1 B4, M1 B5, M1 B6, M1 B7, M1B8 und M1V1 erhaltener Klarlack auf das mit dem Basislack beschichtete KTL-Blech durch Spritzapplikation mit einer HVLP-Pistole appliziert und über eine Dauer von 10 Minuten bei einer Temperatur im Bereich von 18 bis 23°C und im Anschluss über eine Dauer von 30 Minuten bei einer Temperatur von 60°C in einen Ofen getrocknet. Das so erhaltene beschichtete Blech wird über eine Dauer von 5 Tagen bei einer Temperatur im Bereich von 18 bis 23°C und im Anschluss über eine Dauer von 5 Tagen bei einer Temperatur von 70°C in einem Ofen gelagert. Nach Entnahme aus dem Ofen lässt man das Blech 30 Minuten lang abkühlen.

Im Anschluss wird in das beschichtete Blech mit einer Ritzstichel nach Sikkens (Modell: Erichsen 463, 1 mm Klingenbreite) ein Andreaskreuz (Balkenlänge: 10 cm, Winkel: 30°) bis hin zum Substrat eingeritzt. Direkt im Anschluss wird eine Dampfstrahlprüfung durchgeführt. Diese wird mittels eines Walter LTA 1-H-A-L-P Steam-Jet-Testers bei einer Wassertemperatur von 60°C, einem Winkel von 30°, einem Wasserdruck von 60 bar über einer Zeitdauer von 1 Minute sowie einem Abstand zum beschichteten Substrat von 10 cm durchgeführt. Ein entsprechender Dampfstrahl wird dabei in entsprechendem Abstand auf den Ritzbereich des beschichteten Substrats gerichtet.

Die Haftungseigenschaften werden bewertet, indem die Breite einer durch die Dampfstrahlbehandlung hervorgerufenen Delamination entlang des Ritzes in [mm] mit einem Lineal gemessen wird. Dies ist in Figur 1 veranschaulicht: darin haben die Bezugszeichen 1 bis 4 die folgenden Bedeutungen:
1: beschichtetes KTL-Blech
2: eingeritztes Andreaskreuz
3: Breite der durch die Dampfstrahlbehandlung hervorgerufenen Delamination entlang des Ritzes in [mm]
4: delaminierte Fläche

Für den Fall einer unregelmäßigen Ablösung wird jeweils die maximale Breite der Ablösung in [mm] bestimmt, welche in Figur 1 Bezugszeichen 3 entspricht.

### 2. Bestimmung der nicht-flüchtigen Anteile

Die Bestimmung der nicht-flüchtigen Anteile, d.h. des Festkörpergehalts erfolgt gemäß DIN EN ISO 3251 bei einer Temperatur von 150°C über eine Dauer von 20 Minuten.

### 3. Bestimmung des zahlenmittleren Molekulargewichts

Die Bestimmung des zahlenmittleren Molekulargewichts (Mₙ) erfolgt mittels Gel-Permeations-Chromatographie (GPC). Die Bestimmungsmethode erfolgt dabei gemäß DIN 55672-1. Neben dem zahlenmittleren Molekulargewicht können mit dieser Methode zudem das gewichtsmittlere Molekulargewicht (M_{w}) sowie die Polydispersität (Verhältnis von gewichtsmittlerem Molekulargewicht (M_{w}) zu zahlenmittlerem Molekulargewicht (Mₙ)) bestimmt werden.

Es werden 100 ± 50 mg einer Probe (bezogen auf den Festkörper-Anteil der Probe) mittels einer Analysenwaage abgewogen und in 10 mL ± 1 mL mobiler Phase gelöst, wobei darauf zu achten ist, dass die in DIN 55672-1 angegebenen Konzentrationsgrenzen nicht über- bzw. unterschritten werden. Als mobile Phase wird Tetrahydrofuran (Qualität p.A., filtriert über einen 0,45 µm-Membranfilter) eingesetzt, welches 500 mg/L ± 50 mg/L Schwefelblüte enthält. 2-3 mL der Probe werden über einen 0,45 µm-Einmalfilter in ein Autosampler-Fläschchen filtriert und dieses verschlossen. Von jeder Probe wird eine Doppelbestimmung durchgeführt.

Die Bestimmung des zahlenmittleren Molekulargewichts (Mₙ) erfolgt gegen linear aufgebaute, engverteilte Polystyrol-Standards unterschiedlichen Molekulargewichten Mp im Bereich von 162 bis 1 000 000 g/mol. Dabei wird vor Beginn einer jeden Bestimmung eine Kalibration gegen diese Polystyrol-Standards durchgeführt. Dazu werden die Polystyrol-Standards in einer Menge von 10 ± 2 mg mittels einer Analysenwaage abgewogen und in 20 mL ± 1 mL mobiler Phase gelöst. Als mobile Phase wird Tetrahydrofuran (Qualität p.A., filtriert über einen 0,45 µm-Membranfilter) eingesetzt, welches 500 mg/L ± 50 mg/L Schwefelblüte enthält. Die fertigen Standard-Lösungen werden über einen 0,45 µm-Einmalfilter filtriert. Mehrere Standards werden zu einer Mischung vereinigt und chromatographiert. Aus den Kalibrierpunkten (Retentionszeiten und Molekulargewichte Mp) der Standards wird eine Kalibrierkurve (Regression 3. Ordnung) konstruiert.

Als Gerät wird ein System mit folgenden Komponenten eingesetzt:
- HPLC - Pumpe WATERS 600 oder Separation Module Waters 2695, jeweils der Firma Waters
- Online Degasser ERC-Series 300, DEGASYS DG-1310, Degassex DG 4400 oder Separation Module Waters 2695,
- automatischer Probengeber WATERS 717 oder Separation Module Waters 2695
- Differential - Refraktometer WATERS 410, WATERS 2410 oder WATERS 2414,
- UV/VIS Detektor WATERS 2487, Waters 486 oder WATERS 2996
- Datensystem WATERS Empower,
- Kombination aus drei GPC-Trennsäulen (Styragelsäulen der Firma Waters) mit einer Dimension von 300 mm·7,8 mm ID/Säule, mit einer Teilchengröße von 5 µm und einer Porengröße HR4, HR2 bzw. HR1.

Folgende Einstellungen werden dabei verwendet:

| | |
|---|---|
| Injektionsvolumen: 100 µl - 200 µl | |
| Flussrate (Durchfluss): 1 ml/min | |
| Laufzeit: 45 min | |
| Refraktometereinstellung: | Empfindlichkeit: 32 (SENS 32), Polarität + (positiv) |
| | und Temperatur: 40°C (jeweils für WATERS 410, |
| | WATERS 2410 oder |
| | WATERS 2414) |

Die Auswertung, insbesondere die Bestimmung von Mₙ erfolgt softwaregestützt mit dem Datensystem WATERS Empower. Basislinienpunkte und Auswertegrenzen werden gemäß DIN 55672-1 festgelegt.

Die nachfolgenden Beispiele und Vergleichsbeispiele dienen der Erläuterung der Erfindung, sind jedoch nicht einschränkend auszulegen.

Sofern nicht anders angeführt, handelt es sich bei den Prozentangaben jeweils um Gewichtsprozente.

### Beispiele und Vergleichsbeispiele

### 1. Herstellung von erfindungsgemäß eingesetzten Copolymeren

Die Herstellung der erfindungsgemäß eingesetzten Copolymere kann gegebenenfalls unter Zusatz wenigstens eines organischen Lösemittels wie beispielsweise 1-Methoxy-2-propylacetat, n-Butylacetat, Toluol und/oder Xylol erfolgen.

Der Umsatz der jeweiligen zur Herstellung der erfindungsgemäß eingesetzten Copolymere durchgeführten Polymerisationsreaktionen kann mittels NMR-Spektroskopie untersucht werden: in allen Fällen wurden die Bedingungen der Polymerisation so gewählt, dass der Umsatz aller eingesetzten ethylenischungesättigten Monomere bei mindestens 99,8% lag.

Die nachfolgend verwendeten Abkürzungen haben die folgenden Bedeutungen:

| | |
|---|---|
| PMA: | 1-Methoxy-2-propylacetat |
| AMBN: | 2,2'-Azobis[2-methylbutyronitril] |

### Beispiel B1

### Stufe 1:

In einem Dreihalskolben mit Rührer, Rückflusskühler und Gaseinlass werden unter Stickstoff-Strom 200 g 1-Methoxy-2-propylacetat vorgelegt und auf 130°C erwärmt. Mit einer Dosierrate von 0,6 mL/min wird bei dieser Temperatur eine Mischung von 130,24 g Methylmethacrylat, 38,12 g Hydroxyethylmethacrylat und 18,96 g AMBN zudosiert. Man rührt ca. 60 min bei 130°C nach. Hiernach erfolgt eine Nachinitiierung mit 6 g AMBN. Man rührt eine weitere Stunde bei 130°C. Es wird nochmals nachinitiiert mit 4 g AMBN. Man rührt eine weitere Stunde bei 130°C. Es wird nochmals nachinitiiert mit 4 g AMBN. Man rührt eine weitere Stunde bei 130°C. Erhaltenes Produkt: nicht-flüchtige Anteile: 49,8 %.

### Stufe 2:

In einem Dreihalskolben mit Rührer, Rückflusskühler und Gaseinlass werden unter Stickstoff-Strom 50,0 g der Stufe 1 und 4,55 g 1-Methoxy-2-propylacetat eingewogen und es wird auf 80°C erwärmt. Anschließend wird innerhalb von ca. 10 min 4,75 g Polyphosphorsäure zudosiert. Man lässt noch 4 h bei 80°C reagieren. Erhaltenes Produkt: nicht-flüchtige Anteile: 50,4%.

### Beispiel B2:

### Stufe 1:

In einem Dreihalskolben mit Rührer, Rückflusskühler und Gaseinlass werden unter Stickstoff-Strom 200 g 1-Methoxy-2-propylacetat und 10,9 g Laurylmercaptan vorgelegt und auf 130°C erwärmt. Mit einer Dosierrate von 0,6 mL/min wird bei dieser Temperatur eine Mischung von 130,24 g Methylmethacrylat, 38,12 g Hydroxyethylmethacrylat und 12,64 g AMBN zudosiert. Man rührt ca. 60 min bei 130°C nach. Hiernach erfolgt eine Nachinitiierung mit 4 g AMBN. Man rührt eine weitere Stunde bei 130°C. Es wird nochmals nachinitiiert mit 4 g AMBN. Man rührt eine weitere Stunde bei 130°C. Es wird nochmals nachinitiiert mit 4 g AMBN. Man rührt eine weitere Stunde bei 130°C. Erhaltenes Produkt: nicht-flüchtige Anteile: 49,6 %.

### Stufe 2:

In einem Dreihalskolben mit Rührer, Rückflusskühler und Gaseinlass werden unter Stickstoff-Strom 50,0 g der Stufe 1 und 4,55 g 1-Methoxy-2-propylacetat eingewogen und es wird auf 80°C erwärmt. Anschließend wird innerhalb von ca. 10 min 4,75 g Polyphosphorsäure zu dosiert. Man lässt noch 4 h bei 80°C reagieren. Erhaltenes Produkt: nicht-flüchtige Anteile: 50,2%.

### Beispiel B3

### Stufe 1:

In einem Dreihalskolben mit Rührer, Rückflusskühler und Gaseinlass werden unter Stickstoff-Strom 200 g 1-Methoxy-2-propylacetat vorgelegt und auf 130°C erwärmt. Mit einer Dosierrate von 0,6 mL/min wird bei dieser Temperatur eine Mischung von 118,88 g Methylmethacrylat, 52,20 g Hydroxyethylmethacrylat und 17,28 g AMBN zudosiert. Man rührt noch ca. 60 min bei 130°C. Hiernach erfolgt eine Nachinitiierung mit 6 g AMBN. Man rührt eine weitere Stunde bei 130°C. Es wird nochmals nachinitiiert mit 4 g AMBN. Man rührt eine weitere Stunde bei 130°C Es wird nochmals nachinitiiert mit 4 g AMBN. Man rührt eine weitere Stunde bei 130°C. Erhaltenes Produkt: nicht-flüchtige Anteile: 49,0 %.

### Stufe 2:

In einem Dreihalskolben mit Rührer, Rückflusskühler und Gaseinlass werden unter Stickstoff-Strom 50,0 g der Stufe 1 und 3,21 g 1-Methoxy-2-propylacetat eingewogen und es wird auf 80°C erwärmt. Anschließend wird innerhalb von ca. 10 min 3,79 g Polyphosphorsäure zudosiert. Man lässt noch 4 h bei 80°C reagieren. Erhaltenes Produkt: nicht-flüchtige Anteile: 50,4%.

### Beispiel B4:

### Stufe 1:

In einem Dreihalskolben mit Rührer, Rückflusskühler und Gaseinlass werden unter Stickstoff-Strom 149,92 g Xylol vorgelegt und auf 130°C erwärmt. Mit einer Dosierrate von 0,60 mL/min wird bei dieser Temperatur eine Mischung von 156,4 g n-Butylacrylat, 45,88 g Hydroxyethylmethacrylat und 17,16 g AMBN zudosiert. Man rührt ca. 60 min bei 130°C nach. Hiernach erfolgt eine Nachinitiierung mit 3,36 g AMBN. Man rührt eine weitere Stunde bei 130°C. Es wird nochmals nachinitiiert mit 3,36 g AMBN. Man rührt eine weitere Stunde bei 130°C Es wird nochmals nachinitiiert mit 3,36 g AMBN. Man rührt eine weitere Stunde bei 130°C. Erhaltenes Produkt: nichtflüchte Anteile: 65,5%.

### Stufe 2:

In einem Dreihalskolben mit Rührer, Rückflusskühler und Gaseinlass werden unter Stickstoff-Strom 50,0 g der Stufe 1 und 6,67 g Xylol eingewogen und es wird auf 80°C erwärmt. Anschließend wird innerhalb von ca. 10 min 3,13 g Polyphosphorsäure zudosiert. Man lässt noch 4 h bei 80°C reagieren. Erhaltenes Produkt: nicht-flüchtige Anteile: 62,1%.

### Beispiel B5

### Stufe 1:

In einem Dreihalskolben mit Rührer, Rückflusskühler und Gaseinlass werden unter Stickstoff-Strom 142,6 g Xylol vorgelegt und auf 130°C erwärmt. Mit einer Dosierrate von 0,6 mL/min wird bei dieser Temperatur eine Mischung von 181,68 g 2-Ethylhexylacrylat, 37,12 g Hydroxyethylmethacrylat und 13,86 g AMBN zudosiert. Man rührt noch ca. 60 min bei 130°C. Hiernach erfolgt eine Nachinitiierung von 2,71 g AMBN. Man rührt eine weitere Stunde bei 130°C. Es wird nochmals nachinitiiert mit 2,71g AMBN. Man rührt eine weitere Stunde bei 130°C Es wird nochmals nachinitiiert mit 2,71 g AMBN. Man rührt eine weitere Stunde bei 130°C. Erhaltenes Produkt: nicht-flüchtige Anteile: 65,9%.

### Stufe 2:

In einem Dreihalskolben mit Rührer, Rückflusskühler und Gaseinlass werden unter Stickstoff-Strom 50,0 g der Stufe 1 und 6,61 g Xylol eingewogen und es wird auf 80°C erwärmt. Anschließend wird innerhalb von ca. 10 min 2,54 g Polyphosphorsäure zudosiert. Man lässt noch 4 h bei 80°C reagieren. Erhaltenes Produkt: nicht-flüchtige Anteile: 66,5%.

### Beispiel B6

### Stufe 1:

In einem Dreihalskolben mit Rührer, Rückflusskühler und Gaseinlass werden unter Stickstoff-Strom 138,76 g Xylol vorgelegt und auf 130°C erwärmt. Mit einer Dosierrate von 0,6 mL/min wird bei dieser Temperatur eine Mischung von 115,76 g n-Butylacrylat, 53,04 g Benzylacrylat, 45,28 g Hydroxyethylmethacrylat und 16,92 g AMBN zudosiert. Man rührt ca. 60 min bei 130°C nach. Hiernach erfolgt eine Nachinitiierung mit 3,31g AMBN. Man rührt eine weitere Stunde bei 130°C. Es wird nochmals nachinitiiert mit 3,31g AMBN. Man rührt eine weitere Stunde bei 130°C. Es wird nochmals nachinitiiert mit 3,31g AMBN. Man rührt eine weitere Stunde bei 130°C. Erhaltenes Produkt: nicht-flüchtige Anteile: 65,7%.

### Stufe 2:

In einem Dreihalskolben mit Rührer, Rückflusskühler und Gaseinlass werden unter Stickstoff-Strom 50,0 g der Stufe 1 und 6,73 g Xylol eingewogen und es wird auf 80°C erwärmt. Anschließend wird innerhalb von ca. 10 min 2,97 g Polyphosphorsäure zudosiert. Man lässt noch 4 h bei 80°C reagieren. Erhaltenes Produkt: nicht-flüchtige Anteile: 69,5%.

### Beispiel B7

### Stufe 1:

In einem Dreihalskolben mit Rührer, Rückflusskühler und Gaseinlass werden unter Stickstoff-Strom 140,48 g Xylol vorgelegt und auf 130°C erwärmt. Mit einer Dosierrate von 0,6 mL/min wird bei dieser Temperatur eine Mischung von 106,40 g n-Butylacrylat, 68,16 g Ethyltriglykolmethacrylat, 41,60 g Hydroxyethylmethacrylat und 15,54 g AMBN zudosiert. Man rührt ca. 60 min bei 130°C nach. Hiernach erfolgt eine Nachinitiierung mit 3,04 g AMBN. Man rührt eine weitere Stunde bei 130°C. Es wird nochmals nachinitiiert mit 3,04 g AMBN. Man rührt eine weitere Stunde bei 130°C Es wird nochmals nachinitiiert mit 3,04 g AMBN. Man rührt eine weitere Stunde bei 130°C. Erhaltenes Produkt: nicht-flüchtige Anteile: 64,8%.

### Stufe 2:

In einem Dreihalskolben mit Rührer, Rückflusskühler und Gaseinlass werden unter Stickstoff-Strom 50,0 g der Stufe 1 und 5,85 g Xylol eingewogen und es wird auf 80°C erwärmt. Anschließend wird innerhalb von ca. 10 min 2,87 g Polyphosphorsäure zudosiert. Man lässt noch 4 h bei 80°C reagieren. Erhaltenes Produkt: nicht-flüchtige Anteile: 62,1%.

### Beispiel B8

### Stufe 1:

In einem Dreihalskolben mit Rührer, Rückflusskühler und Gaseinlass werden unter Stickstoff-Strom 138,92g Xylol und 24,4 g 4-Methyl-2,4-diphenyl-1-penten vorgelegt und auf 130°C erwärmt. Mit einer Dosierrate von 0,6 mL/min (ca. 360min) wird bei dieser Temperatur eine Mischung von 108,88 g n-Butylacrylat, 65,24 g Butyldiglykolmethacrylat, 42,6 g Hydroxyethylmethacrylat und 10,6 g AMBN zudosiert. Man rührt ca. 60 min bei 130°C nach. Hiernach erfolgt eine Nachinitiierung mit 3,12 g AMBN. Man rührt eine weitere Stunde bei 130°C. Es wird nochmals nachinitiiert mit 3,12g AMBN. Man rührt eine weitere Stunde bei 130°C. Es wird nochmals nachinitiiert mit 3,12 g AMBN. Man rührt eine weitere Stunde bei 130°C. Erhaltenes Produkt: nicht-flüchtige Anteile: 66,1%.

### Stufe 2:

In einem Dreihalskolben mit Rührer, Rückflusskühler und Gaseinlass werden unter Stickstoff-Strom 50,0 g der Stufe 1 und 7,00 g Xylol eingewogen und es wird auf 80°C erwärmt. Anschließend wird innerhalb von ca. 10 min 2,88 g Polyphosphorsäure zudosiert. Man lässt noch 4 h bei 80°C reagieren. Erhaltenes Produkt: nicht-flüchtige Anteile: 63,0%.

### Beispiel B9:

### Stufe 1:

In einem Dreihalskolben mit Rührer, Rückflusskühler und Gaseinlass werden unter Stickstoff-Strom 200 g 1-Methoxy-2-propylacetat vorgelegt und auf 130°C erwärmt. Mit einer Dosierrate von 0,6 mL/min wird bei dieser Temperatur eine Mischung von 130,24 g Methylmethacrylat, 42,23 g Hydroxybutylacrylat und 18,96 g AMBN zudosiert. Man rührt ca. 60 min bei 130°C nach. Hiernach erfolgt eine Nachinitiierung mit 6 g AMBN. Man rührt eine weitere Stunde bei 130°C. Es wird nochmals nachinitiiert mit 4 g AMBN. Man rührt eine weitere Stunde bei 130°C. Es wird nochmals nachinitiiert 4 g AMBN. Man rührt eine weitere Stunde bei 130°C. Erhaltenes Produkt: nicht-flüchtiger Anteil: 49,9 %.

### Stufe 2:

In einem Dreihalskolben mit Rührer, Rückflusskühler und Gaseinlass werden unter Stickstoff-Strom 50,0 g der Stufe 1 und 4,55 g 1-Methoxy-2-propylacetat eingewogen und es wird auf 80°C erwärmt. Anschließend wird innerhalb von ca. 10 min 3,17 g Polyphosphorsäure zudosiert. Man lässt noch 4 h bei 80°C reagieren. Erhaltenes Produkt: nicht-flüchtige Anteile: 49,2%.

### Beispiel B10:

### Stufe 1:

In einem Dreihalskolben mit Rührer, Rückflusskühler und Gaseinlass werden unter Stickstoff-Strom 200,0 g 1-Methoxy-2-propylacetat vorgelegt und auf 130°C erwärmt. Mit einer Dosierrate von 0,6 mL/min wird bei dieser Temperatur eine Mischung von 130,24 g Methylmethacrylat, 19,06 g Hydroxyethylmethacrylat, 21,11 g Hydroxybutylacrylat und 18,96 g AMBN zudosiert. Man rührt ca. 60 min bei 130°C nach. Hiernach erfolgt eine Nachinitiierung mit 6 g AMBN. Man rührt eine weitere Stunde bei 130°C. Es wird nochmals nachinitiiert mit 4 g AMBN. Man rührt eine weitere Stunde bei 130°C. Es wird nochmals nachinitiiert 4 g AMBN. Man rührt eine weitere Stunde bei 130°C. Erhaltenes Produkt: Nicht-flüchtige Anteile: 49,7 %.

### Stufe 2:

In einem Dreihalskolben mit Rührer, Rückflusskühler und Gaseinlass werden unter Stickstoff-Strom 50,0 g der Stufe 1 und 4,55 g 1-Methoxy-2-propylacetat eingewogen und es wird auf 80°C erwärmt. Anschließend wird innerhalb von ca. 10 min 3,96 g Polyphosphorsäure zudosiert. Man lässt noch 4 h bei 80°C reagieren. Erhaltenes Produkt: nicht-flüchtige Anteile: 49,7%.

### Beispiel B11:

In einem Dreihalskolben mit Rührer, Rückflusskühler und Gaseinlass werden unter Stickstoff-Strom 536 g 1-Methoxy-2-propylacetat vorgelegt und auf 130°C erwärmt. Mit einer Dosierrate von 1,0 mL/min werden bei dieser Temperatur gleichzeitig 224,29 g n-Butylacrylat, 54,08 g Hydroxybutylacrylat, 78,80 g Ethylenglycolmonomethacrylat-Monophosphat und 40,0 g AMBN zudosiert. Man rührt ca. 60 min bei 130°C nach. Hiernach erfolgt eine Nachinitiierung mit 6 g AMBN. Man rührt eine weitere Stunde bei 130°C. Es wird nochmals nachinitiiert mit 6 g AMBN. Man rührt eine weitere Stunde bei 130°C. Es wird nochmals nachinitiiert 4 g AMBN. Man rührt eine weitere Stunde bei 130°C. Erhaltenes Produkt: Nicht-flüchtige Anteile: 40,3%.

### Beispiel B12:

In einem Dreihalskolben mit Rührer, Rückflusskühler und Gaseinlass werden unter Stickstoff-Strom 310 g 1-Methoxy-2-propylacetat vorgelegt und auf 130°C erwärmt. Mit einer Dosierrate von 1,8 mL/min werden bei dieser Temperatur gleichzeitig 99,15 g Ethylhexylmethacrylat, 64,09 g n-Butylacrylat, 22,77 g Hydroxyethylmethacrylat, 15,76 g Ethylenglycolmonomethacrylat-Monophosphat, 2,70 g Vinylphosphonsäure und 20 g tert-Butyl-2-ethylperoxyhexanoat zudosiert. Man rührt ca. 60 min bei 130°C nach. Hiernach erfolgt eine Nachinitiierung mit 6 g tert-Butyl-2-ethylperoxyhexanoat. Man rührt eine weitere Stunde bei 130°C. Es wird nochmals nachinitiiert mit 6 g tert-Butyl-2-ethylperoxyhexanoat. Man rührt eine weitere Stunde bei 130°C. Es wird noch dreimal nachinitiiert mit jeweils 3 g tert-Butyl-2-ethylperoxyhexanoat. Man rührt eine weitere Stunde bei 130°C. Erhaltenes Produkt: nicht-flüchtige Anteile: 39,6 %.

### Beispiel B13:

In einem Dreihalskolben mit Rührer, Rückflusskühler und Gaseinlass werden unter Stickstoff-Strom 255 g 1-Methoxy-2-propylacetat vorgelegt und auf 130°C erwärmt. Mit einer Dosierrate von 1,5 mL/min werden bei dieser Temperatur gleichzeitig 115,35 g n-Butylacrylat, 25,44 g Laurylmethacrylat, 8,61 g Methacrylsäure, 21,01 g Ethylenglycolmonomethacrylat-Monophosphat und 20 g AMBN zudosiert. Man rührt ca. 60 min bei 130°C nach. Hiernach erfolgt eine Nachinitiierung mit 8 g AMBN. Man rührt eine weitere Stunde bei 130°C. Es wird nochmals nachinitiiert mit 6 g AMBN. Man rührt eine weitere Stunde bei 130°C. Es wird nochmals nachinitiiert 4 g AMBN. Man rührt eine weitere Stunde bei 130°C. Erhaltenes Produkt: nicht-flüchtige Anteile: 39,9%.

### Beispiel B14:

In einem Dreihalskolben mit Rührer, Rückflusskühler und Gaseinlass werden unter Stickstoff-Strom 203,0 g 1-Methoxy-2-propylacetat vorgelegt und auf 130°C erwärmt. Mit einer Dosierrate von 1,5 mL/min werden bei dieser Temperatur gleichzeitig 89,72 g n-Butylacrylat, 42,66 g n-Butylmethacrylat, 18,02 g Acrylsäure, 15,76 g Ethylenglycolmonomethacrylat-Monophosphat und 21 g AMBN zudosiert. Man rührt ca. 60 min bei 130°C nach. Hiernach erfolgt eine Nachinitiierung mit 8 g AMBN. Man rührt eine weitere Stunde bei 130°C. Es wird nochmals nachinitiiert mit 6 g AMBN. Man rührt eine weitere Stunde bei 130°C. Es wird nochmals nachinitiiert 4 g AMBN. Man rührt eine weitere Stunde bei 130°C. Erhaltenes Produkt: nicht-flüchtige Anteile: 45,2 %.

### Beispiel B15:

In einem Dreihalskolben mit Rührer, Rückflusskühler und Gaseinlass werden unter Stickstoff-Strom 260 g 1-Methoxy-2-propylacetat vorgelegt und auf 130°C erwärmt. Mit einer Dosierrate von 1,5 mL/min werden bei dieser Temperatur gleichzeitig 128,17 g n-Butylacrylat, 34,00 g eines Hydroxyethylacrylat-gestarteten Polymers von ε-Caprolacton (dem Produkt einer ring-öffnenden Polymerisation von ε-Caprolacton mit Hydroxyethylacrylat als Kettenstarter ; Molekulargewicht = 340 g/mol), 21,01 g Ethylenglycolmonomethacrylat-Monophosphat und 20 g AMBN zudosiert. Man rührt ca. 60 min bei 130°C nach. Hiernach erfolgt eine Nachinitiierung mit 8 g AMBN. Man rührt eine weitere Stunde bei 130°C. Es wird nochmals nachinitiiert mit 6 g AMBN. Man rührt eine weitere Stunde bei 130°C. Es wird nochmals nachinitiiert 4 g AMBN. Man rührt eine weitere Stunde bei 130°C. Erhaltenes Produkt: nicht-flüchtige Anteile: 40,0%.

### Beispiel B16:

In einem Dreihalskolben mit Rührer, Rückflusskühler und Gaseinlass werden unter Stickstoff-Strom 188 g 1-Methoxy-2-propylacetat vorgelegt und auf 130°C erwärmt. Mit einer Dosierrate von 1,5 mL/min werden bei dieser Temperatur gleichzeitig 115,35 g n-Butylacrylat, 56,86 g eines Hydroxyethylmethacrylat-gestarteten Polymers von Ethylenoxid (dem Produkt einer ring-öffnenden Polymerisation von Ethylenoxid mit Hydroxyethylacrylat als Kettenstarter ; Molekulargewicht = 284 g/mol), 15,76 g Ethylenglycolmonomethacrylat-Monophosphat und 20 g AMBN zudosiert. Man rührt ca. 60 min bei 130°C nach. Hiernach erfolgt eine Nachinitiierung mit 8 g AMBN. Man rührt eine weitere Stunde bei 130°C. Es wird nochmals nachinitiiert mit 6 g AMBN. Man rührt eine weitere Stunde bei 130°C. Es wird nochmals nachinitiiert 4 g AMBN. Man rührt eine weitere Stunde bei 130°C. Erhaltenes Produkt: nicht-flüchtige Anteile: 49,7%.

### 2. Verwendung der Copolymere als Haftvermittler

**2.1** Die nachfolgend eingesetzten Lösemittel sind kommerziell erhältlich: Butylactetat und Butylglykolacetat (Firma Brenntag), Xylol in Form eines Isomerengemisches (Firma Overlack), 1-Methoxy-2-propylacetat (als Dowanol PMA der Firma Dow Chemicals), Solvesso 100 (Gemisch aromatischer Kohlenwasserstoffe der Firma Exxon Mobil).

**2.2** Bei den nachfolgend eingesetzten Rohstoffen handelt es sich um folgende kommerziell erhältlichen Produkte:

### Rohstoffe zur Herstellung eines Klarlacks

- Setalux 1753 SS-70:: Acrylat-Polyol, 70%ig in Butylacetat, der Firma Nuplex Resins
- Tinuvin 1130:: Hydroxyphenylbenzotriazol, eingesetzt als UV-Absorber der Firma Ciba
- Tinuvin 292:: HALS, eingesetzt als Lichtschutzmittel, der Firma Ciba
- BYK-331:: silikonhaltiges Oberflächenadditiv der Firma Byk Chemie
- BYK-358 N:: Acrylat-Additiv der Firma Byk Chemie
- TinStab BL 277:: Dibutylzinndilaurat (DBTL) der Firma Acros Chemicals, eingesetzt als Katalysator, 1 %-ig in Butylacetat
- Tolonate HDT-90:: Polyisocyanat der Firma Perstorp, eingesetzt als Härter

### Rohstoffe zur Herstellung eines Basislacks

- Setaqua 6760:: Acrylat-Dispersion mit einem 38%igen Festkörperanteil der Firma Nuplex Resins als Bindemittel
- DISPERBYK-180:: Netz- und Dispergieradditiv der Firma Byk Chemie
- Stapa IL Hydrolan 2154:: Aluminium-Effektpigment der Firma Eckart
- BYK-028:: Entschäumungsmittel der Firma Byk Chemie
- BYK-347:: Silikontensid als Benetzungsmittel der Firma Byk Chemie
- DMEA:: Dimethylethanolamin der Firma Merck, eingesetzt als Neutralisationsmittel (10%ig in H₂O)
- AQUATIX-8421: Wachsdispersion der Firma Byk Chemie

### Rohstoffe zur Herstellung eines Vergleichsbeispiels

- Lubrizol 2063:: freie Säure eines komplexen Carboxyl-Phosphat-Esters der Firma Lubrizol Corporation, 60%ig, kommerziell erhältlicher Haftvermittler

### 2.3 Allgemeine Arbeitsvorschrift zur Herstellung eines Klarlacks

Eine Mischung M1 enthaltend Setalux 1753 SS-70 als Polyol-Komponente und die in Tabelle 1 genannten weiteren Bestandteile wird durch Zusammengeben und Rühren der einzelnen Komponenten in der nachstehenden Reihenfolge hergestellt:

**Tabelle 1.**

| **Mischung M1** | **Menge [g]** |
|---|---|
| Setalux 1753 SS-70 | 476,0 |
| Butylacetat | 60,0 |
| Xylol | 86,0 |
| 1-Methoxy-2-propylacetat | 120,0 |
| Solvesso 100 | 18,0 |
| Butylglykolacetat | 4,0 |
| Tinuvin 292 | 7,8 |
| Tinuvin 1130 | 2,7 |
| BYK-331 | 5,0 |
| BYK-358 N | 3,0 |
| TinStab BL 277 | 8,0 |

Dieser Mischung M1 wird jeweils ein Copolymer der Beispiele B1, B3, B4, B5, B6, B7 oder B8 oder ein Vergleichsprodukt V1 (Lubrizol 2063) zugesetzt. Es werden so insgesamt 8 Mischungen enthalten (M1 B1, M1 B3, M1 B4, M1 B5, M1 B6, M1 B7, M1 B8 und M1V1). Das jeweilige Copolymer bzw. V1 wird dabei jeweils in so einer Menge zu M1 gegeben, dass die resultierende Mischung M1 B1, M1 B3, M1 B4, M1 B5, M1 B6, M1B7, M1B8 bzw. M1V1 jeweils 3 Gew.-%, bezogen auf das Gesamtgewicht der resultierenden Mischung, des erfindungsgemäß eingesetzten Copolymeren oder des Vergleichsprodukts V1 enthält. Die jeweils entstandene Mischung wird im Anschluss über eine Dauer von 10 min bei einer Temperatur im Bereich von 18-23°C in einem Rüttler (Skandex-Rüttler) homogenisiert und dann über eine Dauer von ca. 14 Stunden bei einer Temperatur im Bereich von 18-23°C gelagert.

Eine Härter-Lösung gemäß Tabelle 2 sowie eine Verdünner-Lösung gemäß Tabelle 3 werden direkt vor der Applikation (s. Punkt **2.5**) durch Rühren mit einem Spatel in die jeweilige Mischung M1B1, M1B3, M1B4, M1B5, M1B6, M1B7, M1B8 und M1V1 eingearbeitet. Die jeweilige Einarbeitung der Verdünner-Lösung erfolgt, um mit einem DIN 4-Becher eine Einstellung einer 25-28" Spritzviskosität zu erzielen. Ferner wird eine Härter-Lösung gemäß Tabelle 2 sowie eine Verdünner-Lösung gemäß Tabelle 3 direkt vor der Applikation (s. Punkt **2.5**) durch Rühren mit einem Spatel in eine Mischung M1 eingearbeitet, welcher weder ein erfindungsgemäß eingesetztes Copolymer noch ein Vergleichsprodukt V1 zugemischt wurde (Nullprobe).

**Tabelle 2.**

| **Härter-Lösung** | **Menge [g]** |
|---|---|
| Tolonate HDT-90 | 188,0 |
| Butylacetat | 19,0 |
| 1-Methoxy-2-propylacetat | 2,5 |

**Tabelle 3.**

| **Verdünner-Lösung** | **Menge [g]** |
|---|---|
| Xylol | 500 |
| 1-Methoxy-2-propylacetat | 300 |
| Butylacetat | 200 |

### 2.4 Allgemeine Arbeitsvorschrift zur Herstellung eines wässrigen Basislacks

Eine Mischung M2 enthaltend Stapa IL Hydrolan 2154 als Effektpigment und die in Tabelle 4 genannten weiteren Bestandteile wird durch Zusammengeben und Rühren der einzelnen Komponenten hergestellt.

**Tabelle 4.**

| **Mischung M2** | **Menge [Gew**.**-%]** |
|---|---|
| Deionisiertes Wasser | 28,4 |
| Butylglykol | 28,4 |
| DISPERBYK-180 | 1,2 |
| Stapa IL Hydrolan 2154 | 42,0 |

Die Mischung M2 weist einen Festkörperanteil (Anteil an Aluminium-Effektpigmenten) von 25,2 Gew.-%, bezogen auf das Gesamtgewicht von M2, auf.

Die Mischung M2 wird als ein Bestandteil zur Herstellung eines wässrigen Basislacks M3 enthaltend Setaqua 6760 als Bindemittel neben den in Tabelle 5 genannten weiteren Bestandteilen durch Zusammengeben und Rühren der einzelnen Komponenten in der nachstehenden Reihenfolge in eine Mischung eingearbeitet.

**Tabelle 5.**

| **Wässriger Basislack M3** | **Menge [Gew**.**-%]** |
|---|---|
| Setaqua 6760 (38%) | 43,8 |
| BYK-028 | 0,5 |
| BYK-347 | 0,5 |
| Deionisiertes Wasser | 10,0 |
| DMEA | 0,16 |
| Mischung M2 | 13,0 |
| Deionisiertes Wasser | 10,0 |
| DMEA | 3,4 |
| AQUATIX 8421 | 5,5 |
| Deionisiertes Wasser | 13,1 |
| | 100,0 |

### 2.5 Allgemeine Arbeitsvorschrift zur Applikation der Basislacks und der Klarlacke

KTL-Bleche der Firma Krüppel (Abmessung 10 cm x 20 cm) werden mit Hilfe von Schleifpapier (der Firma 3M, Scrotch-Brite) vorbehandelt und durch Waschen mit Ethylacetat gereinigt. Der Basislack (Mischung M3) wird jeweils auf insgesamt 9 KTL-Bleche jeweils durch Spritzapplikation mit einer HVLP-Pistole (high volume low pressure) appliziert und bei einer Temperatur im Bereich von 18 bis 23°C über eine Dauer von 30 Minuten getrocknet. Die Trockenschichtdicke des Basislacks liegt dabei jeweils im Bereich von 18 bis 23 µm und wird bestimmt mittels Einsatzes eines Schichtdickenmessgeräts (Byko-Test 4500 der Firma Byk-Gardner). Direkt im Anschluss wird der jeweilige Klarlack, der jeweils - wie unter Punkt 2.3 beschrieben - durch Einarbeiten einer Härter-Lösung gemäß Tabelle 2 sowie einer Verdünner-Lösung gemäß Tabelle 3 in jede der Mischungen M1 B1, M1 B3, M1 B4, M1 B5, M1 B6, M1 B7, M1B8, M1V1 und M1 erhalten wird, auf jeweils eine der 9 jeweils mit einem Basislack beschichteten KTL-Blech durch Spritzapplikation mit einer HVLP-Pistole appliziert und über eine Dauer von 10 Minuten bei einer Temperatur im Bereich von 18 bis 23°C und im Anschluss über eine Dauer von 30 Minuten bei einer Ofentemperatur von 60° getrocknet. Die Trockenschichtdicke des Klarlacks liegt dabei jeweils im Bereich von 35-40 µm und wird bestimmt mittels Einsatzes eines Schichtdickenmessgeräts (Byko-Test 4500 der Firma Byk-Gardner).

### 2.6 Ermittlung der Haftungseigenschaften

Die wie unter Punkt **2.5** beschrieben erhaltenen beschichteten Bleche werden über eine Dauer von 5 Tagen bei einer Temperatur im Bereich von 18 bis 23°C und im Anschluss über eine Dauer von 5 Tagen bei einer Temperatur von 70°C in einem Ofen gelagert. Nach Entnahme aus dem Ofen lässt man die Bleche 30 Minuten lang abkühlen. Im Anschluss wird in jedes beschichtete Blech mit einer Ritzstichel nach Sikkens (Modell: Erichsen 463, 1 mm Klingenbreite) ein Andreaskreuz (Balkenlänge: 10 cm, Winkel: 30°) bis hin zum Substrat, d.h. zum KTL-Blech, eingeritzt. Direkt im Anschluss wird eine Dampfstrahlprüfung durchgeführt. Diese wird mittels eines Walter LTA 1-H-A-L-P Steam-Jet-Testers bei einer Wassertemperatur von 60 °C, einem Winkel von 30°, einem Wasserdruck von 60 bar über einer Zeitdauer von 1 Minute sowie einem Abstand zum beschichteten Substrat von 10 cm durchgeführt.

Ein entsprechender Dampfstrahl wird dabei in entsprechendem Abstand und Winkel auf den Ritzbereich des beschichteten Substrats gerichtet.

In allen Fällen wurde ein Adhäsionsbruch, d.h. eine Delamination, zwischen Basislackschicht und Klarlackschicht festgestellt. Eine Ablösung der Basislackschicht vom KTL-Blech als Substrat wurde in keinem Fall beobachtet.

Die Haftungseigenschaften werden bewertet, indem die Breite einer durch die Dampfstrahlbehandlung hervorgerufenen Delamination entlang des Ritzes in [mm] mit einem Lineal gemäß der vorstehend beschriebenen Methode bestimmt wird. Die Ergebnisse sind in Tabelle 6 zusammengefasst.

**Tabelle 6.**

| **Klarlackschicht des beschichteten KTL-Blechs basierend auf** | **Breite der Delamination im Ritzbereich nach Dampfstrahlbehandlung [mm]** |
|---|---|
| M1 (Nullprobe) | 5 mm |
| M1B4 | 2 mm |
| M1B1 | 4 mm |
| M1B3 | 4 mm |
| M1B5 | 3 mm |
| M1B6 | 3 mm |
| M1B7 | 3 mm |
| M1B8 | 3 mm |
| M1V1 | 5 mm |

Wie aus Tabelle 6 ersichtlich ist, kann unter Verwendung des erfindungsgemäß eingesetzten Copolymeren als Haftungs-verstärkendes Additiv in M1 B1 sowie M1 B3 bis M1B8 eine Reduktion der Breite der Delaminierung um wenigstens 20% im Vergleich zu M1V1 enthaltend einen herkömmlichen Haftvermittler erzielt werden.

## Patentansprüche

1. Eine Verwendung wenigstens eines durch Polymerisation von ethylenisch ungesättigten Monomeren erhältlichen Homopolymeren oder Copolymeren,
welches aufgebaut ist aus wenigstens einer Struktureinheit (W0) und gegebenenfalls wenigstens einer weiteren von (W0) verschiedenen Struktureinheit (W3),
wobei
jede Struktureinheit (W0) sowohl wenigstens eine funktionelle Gruppe enthält, die wenigstens ein Phosphoratom aufweist, als auch wenigstens eine gegenüber einer Isocyanat-Gruppe reaktive funktionelle Gruppe aufweist,
und das Homopolymere oder Copolymere, bezogen auf die Gesamtmenge der wenigstens einen Struktureinheit (W0) sowie gegebenenfalls (W3) innerhalb der Polymerhauptkette des Homopolymeren oder Copolymeren, folgende Anteile in mol-% aufweist:
∘ 1 bis 100 mol-% der Struktureinheiten (W0) und
∘ 0 bis 99 mol-% der Struktureinheiten (W3),
oder welches aufgebaut ist aus wenigstens zwei voneinander verschiedenen Struktureinheiten (W1) und (W2) und gegebenenfalls wenigstens einer weiteren von (W1) und (W2) verschiedenen Struktureinheit (W3),
wobei
jede Struktureinheit (W1) wenigstens eine funktionelle Gruppe enthält, die wenigstens ein Phosphoratom aufweist, und gegebenenfalls wenigstens ein Teil der Struktureinheiten (W1) zudem wenigstens eine gegenüber einer Isocyanat-Gruppe reaktive funktionelle Gruppe aufweist, und
jede Struktureinheit (W2) wenigstens eine gegenüber einer Isocyanat-Gruppe reaktive funktionelle Gruppe aufweist, wobei keine der Struktureinheiten (W2) Phosphoratome enthält,
und das Homopolymere oder Copolymere, bezogen auf die Gesamtmenge der wenigstens zwei Struktureinheiten (W1) und (W2) sowie gegebenenfalls (W3) innerhalb der Polymerhauptkette des Homopolymeren oder Copolymeren, folgende Anteile in mol-% aufweist:
∘ 1 bis 80 mol-% der Struktureinheiten (W1),
∘ 1 bis 80 mol-% der Struktureinheiten (W2) und
∘ 0 bis 98 mol-% der Struktureinheiten (W3),
als Haftungs-verstärkendes Additiv.

2. Die Verwendung gemäß Anspruch 1, **dadurch gekennzeichnet, dass**
70 bis 100 mol-% der wenigstens ein Phosphoratom aufweisenden wenigstens einen funktionellen Gruppe jeder der Struktureinheiten (W1) oder (W0) des Homopolymeren oder Copolymeren jeweils unabhängig voneinander ausgewählt sind aus der Gruppe bestehend aus Phosphonsäure-Gruppen, zumindest partiell veresterten Phosphonsäure-Gruppen, zumindest partiell veresterten Phosphorsäure-Gruppen und jeweils entsprechenden Salzen dieser Gruppen,
und/oder
70 bis 100 mol-% der wenigstens einen gegenüber einer Isocyanat-Gruppe reaktiven funktionellen Gruppe jeder der Struktureinheiten (W2) oder (W0) und gegebenenfalls (W1) des Homopolymeren oder Copolymeren jeweils unabhängig voneinander ausgewählt sind der Gruppe bestehend aus gegebenenfalls geschützten Hydroxyl-Gruppen, Thiol-Gruppen, EpoxidGruppen, Carboxyl-Gruppen, gegebenenfalls geschützten primären Amino-Gruppen und gegebenenfalls geschützten sekundären Amino-Gruppen.

3. Die Verwendung gemäß Anspruch 1 oder 2, **dadurch gekennzeichnet, dass** sich die von (W0) oder von (W1) und (W2) verschiedene Struktureinheit (W3) von einem ethylenisch ungesättigten Monomer ableitet, welches, wenn es als Monomer zur Herstellung eines daraus erhältlichen Homopolymers eingesetzt wird, ein Homopolymer ausbildet, welches eine Glasübergangstemperatur (Tg) von weniger als 50°C aufweist.

4. Die Verwendung gemäß einem der vorstehenden Ansprüche, **dadurch gekennzeichnet, dass** das Homopolymer oder Copolymer erhältlich ist durch radikalische Polymerisation von
(a) wenigstens einem zur Ausbildung der Struktureinheit (W1) befähigten ethylenisch ungesättigten Monomeren, welches wenigstens eine funktionelle Gruppe enthält, die wenigstens ein Phosphoratom aufweist, wenigstens einem zur Ausbildung der Struktureinheit (W2) befähigten ethylenisch ungesättigten Monomeren, welches wenigstens eine gegenüber einer Isocyanat-Gruppe reaktive funktionelle Gruppe aufweist, und gegebenenfalls wenigstens einem zur Ausbildung der Struktureinheit (W3) befähigten ethylenisch ungesättigten Monomeren,
oder durch radikalische Polymerisation von
(b1) wenigstens zwei voneinander verschiedenen zur Ausbildung der Struktureinheit (W2) befähigten ethylenisch ungesättigten Monomeren, welche jeweils unabhängig voneinander wenigstens eine gegenüber einer Isocyanat-Gruppe reaktive funktionelle Gruppe aufweisen, und gegebenenfalls wenigstens einem zur Ausbildung der Struktureinheit (W3) befähigten ethylenisch ungesättigten Monomeren,
oder
von wenigstens einem zur Ausbildung der Struktureinheit (W2) befähigten ethylenisch ungesättigten Monomeren, welches wenigstens eine gegenüber einer Isocyanat-Gruppe reaktive funktionelle Gruppe aufweist, und wenigstens einem zur Ausbildung der Struktureinheit (W3) befähigten ethylenisch ungesättigten Monomeren,
und
(b2) partieller Umsetzung der in den Struktureinheiten (W2) des nach Schritt (b1) erhältlichen Homopolymeren oder Copolymeren enthaltenen, gegenüber Isocyanat-Gruppen reaktiven funktionellen Gruppen, in funktionelle Gruppen, die wenigstens ein Phosphoratom aufweisen, zur Ausbildung von Struktureinheiten (W1) oder (W0) innerhalb des Homopolymeren oder Copolymeren
oder durch radikalische Polymerisation von
(c) wenigstens einem zur Ausbildung der Struktureinheit (W0) befähigten ethylenisch ungesättigten Monomeren, welches sowohl wenigstens eine funktionelle Gruppe enthält, die wenigstens ein Phosphoratom aufweist, als auch wenigstens eine gegenüber einer Isocyanat-Gruppe reaktive funktionelle Gruppe aufweist, und gegebenenfalls wenigstens einem zur Ausbildung der Struktureinheit (W3) befähigten ethylenisch ungesättigten Monomeren.

5. Die Verwendung gemäß einem der vorstehenden Ansprüche, **dadurch gekennzeichnet, dass** das Homopolymer oder Copolymer erhältlich ist durch radikalische Polymerisation von
(b1 a) wenigstens zwei voneinander verschiedenen zur Ausbildung der Struktureinheit (W2) befähigten ethylenisch ungesättigten Monomeren, welche jeweils wenigstens eine gegenüber einer Isocyanat-Gruppe reaktive gegebenenfalls geschützte Hydroxyl-Gruppe aufweisen, und gegebenenfalls wenigstens einem zur Ausbildung der Struktureinheit (W3) befähigten ethylenisch ungesättigten Monomeren, oder von wenigstens einem zur Ausbildung der Struktureinheit (W2) befähigten ethylenisch ungesättigten Monomeren, welches wenigstens eine gegenüber einer Isocyanat-Gruppe reaktive gegebenenfalls geschützte Hydroxyl-Gruppe aufweist, und wenigstens einem zur Ausbildung der Struktureinheit (W3) befähigten ethylenisch ungesättigten Monomeren,
und
(b2a) partieller Phosphorylierung der in den Struktureinheiten (W2) des nach Schritt (b1a) erhältlichen Homopolymeren oder Copolymeren enthaltenen Hydroxyl-Gruppen zur Ausbildung von Struktureinheiten (W1) oder (W0) innerhalb des Homopolymeren oder Copolymeren.

6. Die Verwendung gemäß einem der vorstehenden Ansprüche, **dadurch gekennzeichnet, dass** das Homopolymer oder Copolymer erhältlich ist durch radikalische Polymerisation von
wenigstens einem ethylenisch ungesättigten Monomer ausgewählt aus der Gruppe bestehend aus Vinylphosphonsäure, Vinylphosphonsäure in zumindest partiell mittels eines C₁₋₈-Alkyl-Alkohols veresterter Form, Vinylphosphorsäure in zumindest partiell mittels eines C₁₋₈-Alkyl-Alkohols veresterter Form, Alkyl(meth)acrylaten, Cycloalkyl(meth)acrylaten, Aryl(meth)acrylaten und Alkylaryl(meth)acrylaten, wobei die Alkyl-Reste, Cycloalkyl-Reste, Aryl-Reste bzw. Alkylaryl-Reste dieser (Meth)acrylate jeweils wenigstens eine wenigstens ein Phosphoratom aufweisende funktionelle Gruppe aufweisen, zur Ausbildung von Struktureinheiten (W1) innerhalb des Copolymeren,
und
wenigstens einem ethylenisch ungesättigten Monomer ausgewählt aus der Gruppe bestehend aus Alkyl(meth)acrylaten, Cycloalkyl(meth)acrylaten, Aryl(meth)acrylaten und Alkylaryl(meth)acrylaten, wobei die Alkyl-Reste, Cycloalkyl-Reste, Aryl-Reste bzw. Alkylaryl-Reste dieser (Meth)acrylate jeweils wenigstens eine OH-Gruppe oder wenigstens eine geschützte OH-Gruppe aufweisen, Alkyl(meth)acrylamiden, Cycloalkyl(meth)acrylamiden, Aryl(meth)acrylamiden und Alkylaryl(meth)acrylamiden, wobei die Alkyl-Reste, Cycloalkyl-Reste, Aryl-Reste bzw. Alkylaryl-Reste dieser (Meth)acrylamide jeweils wenigstens eine OH-Gruppe oder wenigstens eine geschützte OH-Gruppe aufweisen, Allylalkohol, Vinylalkohol und Hydroxyalkylvinylethern, zur Ausbildung von Struktureinheiten (W2) innerhalb des Copolymeren,
und gegebenenfalls wenigstens einem ethylenisch ungesättigten Monomer ausgewählt aus der Gruppe bestehend aus Alkyl(meth)acrylaten, Cycloalkyl(meth)acrylaten, Aryl(meth)acrylaten, Heteroaryl(meth)acrylaten und Alkylaryl(meth)acrylaten, wobei die Alkyl-Reste, Cycloalkyl-Reste, Aryl-Reste, Heteroaryl-Reste bzw. Alkylaryl-Reste dieser (Meth)acrylate gegebenenfalls jeweils wenigstens eine tertiäre Amino-Gruppe und/oder wenigstens eine Alkoxy-Gruppe aufweisen können, zur Ausbildung von Struktureinheiten (W3) innerhalb des Copolymeren,
oder
durch radikalische Polymerisation von wenigstens einem ethylenisch ungesättigten Monomer ausgewählt aus der Gruppe bestehend aus Alkyl(meth)acrylaten, Cycloalkyl(meth)acrylaten, Aryl(meth)acrylaten und Alkylaryl(meth)acrylaten, wobei die Alkyl-Reste, Cycloalkyl-Reste, Aryl-Reste bzw. Alkylaryl-Reste dieser (Meth)acrylate jeweils wenigstens eine OH-Gruppe oder wenigstens eine geschützte OH-Gruppe aufweisen, Alkyl(meth)acrylamiden, Cycloalkyl(meth)acrylamiden, Aryl(meth)acrylamiden und Alkylaryl(meth)acrylamiden, wobei die Alkyl-Reste, Cycloalkyl-Reste, Aryl-Reste bzw. Alkylaryl-Reste dieser (Meth)acrylamide jeweils wenigstens eine OH-Gruppe oder wenigstens eine geschützte OH-Gruppe aufweisen, Allylalkohol, Vinylalkohol und Hydroxyalkylvinylethern, zur Ausbildung von Struktureinheiten (W2) innerhalb des Copolymeren,
und wenigstens einem ethylenisch ungesättigten Monomer ausgewählt aus der Gruppe bestehend aus Alkyl(meth)acrylaten, Cycloalkyl(meth)acrylaten, Aryl(meth)acrylaten, Heteroaryl(meth)acrylaten und Alkylaryl(meth)acrylaten, wobei die Alkyl-Reste, Cycloalkyl-Reste, Aryl-Reste, Heteroaryl-Reste bzw. Alkylaryl-Reste dieser (Meth)acrylate gegebenenfalls jeweils wenigstens eine tertiäre Amino-Gruppe und/oder wenigstens eine Alkoxy-Gruppe aufweisen können, zur Ausbildung von Struktureinheiten (W3) innerhalb des Copolymeren,
und partieller Phosphorylierung der in den Struktureinheiten (W2) des nach radikalischer Polymerisation erhältlichen Copolymeren enthaltenen Hydroxyl-Gruppen zur Ausbildung von Struktureinheiten (W1) oder (W0) innerhalb des Copolymeren,
oder durch radikalische Polymerisation von wenigstens einem ethylenisch ungesättigten Monomer ausgewählt aus der Gruppe bestehend aus Alkyl(meth)acrylaten, Cycloalkyl(meth)acrylaten, Aryl(meth)acrylaten und Alkylaryl(meth)acrylaten, wobei die Alkyl-Reste, Cycloalkyl-Reste, Aryl-Reste bzw. Alkylaryl-Reste dieser (Meth)acrylate jeweils sowohl wenigstens eine wenigstens ein Phosphoratom aufweisende funktionelle Gruppe als auch wenigstens eine OH-Gruppe oder wenigstens eine geschützte OH-Gruppe aufweisen, zur Ausbildung von Struktureinheiten (W0) innerhalb des Homopolymeren oder Copolymeren,
und gegebenenfalls wenigstens einem ethylenisch ungesättigten Monomer ausgewählt aus der Gruppe bestehend aus Alkyl(meth)acrylaten, Cycloalkyl(meth)acrylaten, Aryl(meth)acrylaten, Heteroaryl(meth)acrylaten und Alkylaryl(meth)acrylaten, wobei die Alkyl-Reste, Cycloalkyl-Reste, Aryl-Reste, Heteroaryl-Reste bzw. Alkylaryl-Reste dieser (Meth)acrylate gegebenenfalls jeweils wenigstens eine tertiäre Amino-Gruppe und/oder wenigstens eine Alkoxy-Gruppe aufweisen können, zur Ausbildung von Struktureinheiten (W3) innerhalb des Homopolymeren oder Copolymeren.

7. Die Verwendung gemäß einem der vorstehenden Ansprüche, **dadurch gekennzeichnet, dass** das Homopolymer oder Copolymer erhältlich ist durch radikalische Polymerisation von
wenigstens einem ethylenisch ungesättigten Monomer ausgewählt aus der Gruppe bestehend aus Vinylphosphonsäure, Vinylphosphonsäure in zumindest partiell mittels eines C₁₋₈-Alkyl-Alkohols veresterter Form, Vinylphosphorsäure in zumindest partiell mittels eines C₁₋₈-Alkyl-Alkohols veresterter Form, 2-(Meth)acryloyloxyethylphosphat, 3-(Meth)acryloyloxypropylphosphat, 4-(Meth)acryloyloxybutylphosphat, 10-Methacryloyloxydecyldihydrogenphosphat, Ethyl-2-[4-(dihydroxyphosphoryl)-2-oxabutyl]acrylat und 2,4,6-Trimethylphenyl-2-[4-(dihydroxyphosphoryl)-2-oxabutyl]acrylat, zur Ausbildung von Struktureinheiten (W1) innerhalb des Copolymeren,
und
wenigstens einem ethylenisch ungesättigten Monomer ausgewählt aus der Gruppe bestehend aus Hydroxyethyl(meth)acrylat, Hydroxypropyl(meth)acrylat und Hydroxybutyl(meth)acrylat zur Ausbildung von Struktureinheiten (W2) innerhalb des Copolymeren,
und gegebenenfalls wenigstens einem ethylenisch ungesättigten Monomer ausgewählt aus der Gruppe bestehend aus Methyl(meth)acrylat, Ethyl(meth)acrylat, n-Butyl(meth)acrylat, i-Butyl(meth)acrylat, t-Butyl(meth)acrylat, Lauryl(meth)acrylat, 2-Ethylhexyl(meth)acrylat, Stearyl(meth)acrylat, Allyl(meth)acrylat, Tridecyl(meth)acrylat, und Benzyl(meth)acrylat, zur Ausbildung von Struktureinheiten (W3) innerhalb des Copolymeren,
oder
durch radikalische Polymerisation von wenigstens einem ethylenisch ungesättigten Monomer ausgewählt aus der Gruppe bestehend aus Hydroxyethyl(meth)acrylat, Glycidyl(meth)acrylat, Hydroxypropyl(meth)acrylat und Hydroxybutyl(meth)acrylat zur Ausbildung von Struktureinheiten (W2) innerhalb des Copolymeren,
und wenigstens einem ethylenisch ungesättigten Monomer ausgewählt aus der Gruppe bestehend aus Methyl(meth)acrylat, Ethyl(meth)acrylat, n-Butyl(meth)acrylat, i-Butyl(meth)acrylat, t-Butyl(meth)acrylat, Lauryl(meth)acrylat, 2-Ethylhexyl(meth)acrylat, Stearyl(meth)acrylat, Allyl(meth)acrylat, Tridecyl(meth)acrylat, und Benzyl(meth)acrylat, zur Ausbildung von Struktureinheiten (W3) innerhalb des Copolymeren,
und partieller Phosphorylierung der in den Struktureinheiten (W2) des nach radikalischer Co-Polymerisation erhältlichen Copolymeren enthaltenen gegebenenfalls geschützten Hydroxyl-Gruppen zur Ausbildung von Struktureinheiten (W1) oder (W0) innerhalb des Copolymeren
oder
durch radikalische Polymerisation von wenigstens einem ethylenisch ungesättigten Monomer ausgewählt aus der Gruppe bestehend aus [(3-(Meth)acryloyloxy-2-hydroxypropyl)]phosphat und [(2-(Meth)acryloyloxy-3-hydroxypropyl)]phosphat zur Ausbildung von Struktureinheiten (W0) innerhalb des Homopolymeren oder Copolymeren,
und gegebenenfalls wenigstens einem ethylenisch ungesättigten Monomer ausgewählt aus der Gruppe bestehend aus Methyl(meth)acrylat, Ethyl(meth)acrylat, n-Butyl(meth)acrylat, i-Butyl(meth)acrylat, t-Butyl(meth)acrylat, Lauryl(meth)acrylat, 2-Ethylhexyl(meth)acrylat, Stearyl(meth)acrylat, Allyl(meth)acrylat, Tridecyl(meth)acrylat, und Benzyl(meth)acrylat, zur Ausbildung von Struktureinheiten (W3) innerhalb des Homopolymeren oder Copolymeren.

8. Die Verwendung gemäß einem der vorstehenden Ansprüche, **dadurch gekennzeichnet, dass** das Copolymer erhältlich ist durch radikalische Polymerisation von
wenigstens einem ethylenisch ungesättigten Monomer ausgewählt aus der Gruppe bestehend aus Hydroxyethyl(meth)acrylat, Glycidyl(meth)acrylat, Hydroxypropyl(meth)acrylat und Hydroxybutyl(meth)acrylat zur Ausbildung von Struktureinheiten (W2) innerhalb des Copolymeren
und
wenigstens einem ethylenisch ungesättigten Monomer ausgewählt aus der Gruppe bestehend aus Methyl(meth)acrylat, Ethyl(meth)acrylat, n-Butyl(meth)acrylat, 2-Ethylhexyl(meth)acrylat zur Ausbildung von Struktureinheiten (W3) innerhalb des Copolymeren,
und partieller Phosphorylierung der in den Struktureinheiten (W2) des nach radikalischer Co-Polymerisation erhältlichen Copolymeren enthaltenen gegebenenfalls geschützten Hydroxyl-Gruppen zur Ausbildung von Struktureinheiten (W1) oder (W0) innerhalb des Copolymeren,
oder durch radikalische Polymerisation von
wenigstens einem ethylenisch ungesättigten Monomer ausgewählt aus der Gruppe bestehend aus 2-(Meth)acryloyloxyethylphosphat, 3-(Meth)acryloyloxypropylphosphat, 4-(Meth)acryloyloxybutylphosphat, zur Ausbildung von Struktureinheiten (W1) innerhalb des Copolymeren,
und
wenigstens einem ethylenisch ungesättigten Monomer ausgewählt aus der Gruppe bestehend aus Hydroxyethyl(meth)acrylat, Hydroxypropyl(meth)acrylat und Hydroxybutyl(meth)acrylat zur Ausbildung von Struktureinheiten (W2) innerhalb des Copolymeren,
und
wenigstens einem ethylenisch ungesättigten Monomer ausgewählt aus der Gruppe bestehend aus Methyl(meth)acrylat, Ethyl(meth)acrylat, n-Butyl(meth)acrylat, 2-Ethylhexyl(meth)acrylat zur Ausbildung von Struktureinheiten (W3) innerhalb des Copolymeren
oder durch radikalische Co-Polymerisation von [(2-(Meth)acryloyloxy-3-hydroxypropyl)]phosphat zur Ausbildung von Struktureinheiten (W0) innerhalb des Copolymeren
und
wenigstens einem ethylenisch ungesättigten Monomer ausgewählt aus der Gruppe bestehend aus Methyl(meth)acrylat, Ethyl(meth)acrylat, n-Butyl(meth)acrylat, 2-Ethylhexyl(meth)acrylat zur Ausbildung von Struktureinheiten (W3) innerhalb des Copolymeren.

9. Die Verwendung gemäß einem der vorstehenden Ansprüche, **dadurch gekennzeichnet, dass**
das Copolymere, bezogen auf die Gesamtmenge der wenigstens zwei Struktureinheiten (W1) und (W2) sowie (W3) innerhalb der Polymerhauptkette des Copolymeren, folgende Anteile in mol-% aufweist:
∘ 3 bis 40 mol-% der Struktureinheiten (W1),
∘ 3 bis 40 mol-% der Struktureinheiten (W2) und
∘ 20 bis 94 mol-% der Struktureinheiten (W3),
oder dass das Copolymere, bezogen auf die Gesamtmenge der wenigstens einen Struktureinheit (W0) sowie (W3) innerhalb der Polymerhauptkette des Copolymeren, folgende Anteile in mol-% aufweist:
∘ 6 bis 80 mol-% der Struktureinheiten (W0) und
∘ 20 bis 94 mol-% der Struktureinheiten (W3).

10. Die Verwendung gemäß einem der vorstehenden Ansprüche, **dadurch gekennzeichnet, dass** das Homopolymer oder Copolymer als Haftungs-verstärkendes Additiv zur Haftvermittlung zwischen einem gegebenenfalls mit wenigstens einer Schicht beschichteten Substrat und wenigstens einer auf das gegebenenfalls mit wenigstens einer Schicht beschichtete Substrat aufzubringenden Schicht eingesetzt wird.

11. Die Verwendung gemäß einem der vorstehenden Ansprüche, **dadurch gekennzeichnet, dass** das Homopolymer oder Copolymer als Haftungs-verstärkendes Additiv als Bestandteil einer Beschichtungszusammensetzung zum Aufbringen einer Schicht auf ein mit wenigstens einer Schicht beschichtetes Substrat eingesetzt wird.

12. Eine Beschichtungszusammensetzung umfassend
(A) wenigstens ein zur Verwendung als Haftungs-verstärkendes Additiv gemäß einem der Ansprüche 1 bis 11 eingesetztes Homopolymer oder Copolymer in einer Menge in einem Bereich von 0,1 bis 15 Gew.-%, bezogen auf das Gesamtgewicht der Beschichtungszusammensetzung, und
(B) wenigstens ein Bindemittel in einer Menge in einem Bereich von 20 bis 99 Gew.-%, bezogen auf das Gesamtgewicht der Beschichtungszusammensetzung.

13. Die Beschichtungszusammensetzung gemäß Anspruch 12, **dadurch gekennzeichnet, dass** 70 bis 100 Gew.-% des in der Beschichtungszusammensetzung enthaltenen Bindemittels (B) ausgewählt sind aus der Gruppe bestehend aus Polyurethanen, Polyestern, Polyamiden, Polyharnstoffen, Polyvinylchloriden, Polystyrolen, Polycarbonaten, Poly(meth)acrylaten, Epoxidharzen und Mischungen davon.

14. Eine Verwendung der Beschichtungszusammensetzung gemäß Anspruch 12 oder 13 als Klarlack, Serienlack, Reparaturlack oder Wartungslack.

15. Ein wenigstens teilweise mit der Beschichtungszusammensetzung gemäß Anspruch 12 oder 13 beschichtetes Substrat.

## Claims

1. Use of at least one homopolymer or copolymer obtainable by polymerization of ethylenically unsaturated monomers,
which is composed of at least one structural unit (W0) and optionally at least one further structural unit (W3) different from (W0),
wherein
each structural unit (W0) both contains at least one functional group which contains at least one phosphorus atom, and also contains at least one functional group reactive towards an isocyanate group,
and the homopolymer or copolymer, based on the total quantity of the at least one structural unit (W0) and optionally (W3) within the polymer main chain of the homopolymer or copolymer, contains the following proportions in mol.%:
∘ 1 to 100 mol.% of the structural units (W0) and
∘ 0 to 99 mol.% of the structural units (W3),
or which is composed of at least two structural units (W1) and (W2) different from one another and optionally at least one further structural unit (W3) different from (W1) and (W2),
wherein
each structural unit (W1) contains at least one functional group which contains at least one phosphorus atom, and optionally at least one part of the structural units (W1) additionally contains at least one functional group reactive towards an isocyanate group, and
each structural unit (W2) contains at least one functional group reactive towards an isocyanate group, wherein none of the structural units (W2) contains phosphorus atoms,
and the homopolymer or copolymer, based on the total quantity of the at least two structural units (W1) and (W2) and optionally (W3) within the polymer main chain of the homopolymer or copolymer, contains the following proportions in mol.%:
∘ 1 to 80 mol.% of the structural units (W1),
∘ 1 to 80 mol.% of the structural units (W2) and
∘ 0 to 98 mol.% of the structural units (W3),
as an adhesion-strengthening additive.

2. Use as claimed in claim 1, **characterized in that**
70 to 100 mol.% of the at least one functional group of each of the structural units (W1) or (W0) of the homopolymer or copolymer containing at least one phosphorus atom are each mutually independently selected from the group consisting of phosphonic acid groups, at least partially esterified phosphonic acid groups, at least partially esterified phosphoric acid groups and respective corresponding salts of these groups,
and/or
70 to 100 mol.% of the at least one functional group reactive towards an isocyanate group of each of the structural units (W2) or (W0) and optionally (W1) of the homopolymer or copolymer each mutually independently selected from the group consisting of optionally protected hydroxyl groups, thiol groups, epoxide groups, carboxyl groups, optionally protected primary amino groups and optionally protected secondary amino groups.

3. Use as claimed in claim 1 or 2, **characterized in that** the structural unit (W3) different from (W0) or from (W1) and (W2) is derived from an ethylenically unsaturated monomer, which, if it is used as a monomer for the production of a homopolymer obtainable therefrom, forms a homopolymer which has a glass transition temperature (T_{g}) of less than 50°C.

4. Use as claimed in one of the previous claims, **characterized in that** the homopolymer or copolymer is obtainable
by radical polymerization of
(a) at least one ethylenically unsaturated monomer capable of forming the structural unit (W1), which contains at least one functional group which contains at least one phosphorus atom, at least one ethylenically unsaturated monomer capable of forming the structural unit (W2), which contains at least one functional group reactive towards an isocyanate group, and optionally at least one ethylenically unsaturated monomer capable of forming the structural unit (W3),
or by radical polymerization of
(b1) at least two ethylenically unsaturated monomers different from each
other capable of forming the structural unit (W2), which each mutually independently contain at least one functional group reactive towards an isocyanate group, and optionally at least one ethylenically unsaturated monomer capable of forming the structural unit (W3),
or
of at least one ethylenically unsaturated monomer capable of forming the structural unit (W2), which contains at least one functional group reactive towards an isocyanate group, and at least one ethylenically unsaturated monomer capable of forming the structural unit (W3),
and
(b2) partial conversion of the functional groups reactive towards isocyanate groups contained in the structural units (W2) of the homopolymer or copolymer obtainable according to step (b1) into functional groups which contain at least one phosphorus atom, for the formation of structural units (W1) or (W0) within the homopolymer or copolymer
or by radical polymerization of
(c) at least one ethylenically unsaturated monomer capable of forming the structural unit (W0), which both contains at least one functional group which contains at least one phosphorus atom, and also contains at least one functional group reactive towards an isocyanate group, and optionally at least one ethylenically unsaturated monomer capable of forming the structural unit (W3).

5. Use as claimed in one of the previous claims, **characterized in that** the homopolymer or copolymer is obtainable by radical polymerization of
(b1 a) at least two ethylenically unsaturated monomers different from each
other capable of forming the structural unit (W2), which each contain at least one optionally protected hydroxyl group reactive towards an isocyanate group, and optionally at least one ethylenically unsaturated monomer capable of forming the structural unit (W3), or of
at least one ethylenically unsaturated monomer capable of forming the structural unit (W2), which contains at least one optionally protected hydroxyl group reactive towards an isocyanate group, and at least one ethylenically unsaturated monomer capable of forming the structural unit (W3),
and
(b2a) partial phosphorylation of the hydroxyl groups contained in the structural units (W2) of the homopolymer or copolymer obtainable according to step (b1 a) for the formation of structural units (W1) or (W0) within the homopolymer or copolymer.

6. Use as claimed in one of the previous claims, **characterized in that** the homopolymer or copolymer is obtainable by radical polymerization of
at least one ethylenically unsaturated monomer selected from the group consisting of vinylphosphonic acid, vinylphosphonic acid in a form at least partially esterified with a C₁₋₈ alkyl alcohol, vinylphosphoric acid in a form at least partially esterified with a C₁₋₈ alkyl alcohol, alkyl (meth)acrylates, cycloalkyl (meth)acrylates, aryl (meth)acrylates and alkylaryl (meth)acrylates, wherein the alkyl residues, cycloalkyl residues, aryl residues or alkylaryl residues of these (meth)acrylates each contain at least one functional group containing at least one phosphorus atom, for the formation of structural units (W1) within the copolymer,
and
at least one ethylenically unsaturated monomer selected from the group consisting of alkyl (meth)acrylates, cycloalkyl (meth)acrylates, aryl (meth)acrylates and alkylaryl (meth)acrylates, wherein the alkyl residues, cycloalkyl residues, aryl residues or alkylaryl residues of these (meth)acrylates each contain at least one OH group or at least one protected OH group, alkyl(meth)acrylamides, cycloalkyl(meth)acrylamides, aryl(meth)acrylamides and alkylaryl(meth)acrylamides, wherein the alkyl residues, cycloalkyl residues, aryl residues or alkylaryl residues of these (meth)acrylamides each contain at least one OH group or at least one protected OH group, allyl alcohol, vinyl alcohol and hydroxyalkyl vinyl ethers, for the formation of structural units (W2) within the copolymer,
and optionally at least one ethylenically unsaturated monomer selected from the group consisting of alkyl (meth)acrylates, cycloalkyl (meth)acrylates, aryl (meth)acrylates, heteroaryl (meth)acrylates and alkylaryl (meth)acrylates, wherein the alkyl residues, cycloalkyl residues, aryl residues, heteroaryl residues or alkylaryl residues of these (meth)acrylates can optionally each contain at least one tertiary amino group and/or at least one alkoxy group, for the formation of structural units (W3) within the copolymer,
or
by radical polymerization of at least one ethylenically unsaturated monomer selected from the group consisting of alkyl (meth)acrylates, cycloalkyl (meth)acrylates, aryl (meth)acrylates and alkylaryl (meth)acrylates, wherein the alkyl residues, cycloalkyl residues, aryl residues or alkylaryl residues of these (meth)acrylates each contain at least one OH group or at least one protected OH group, alkyl(meth)acrylamides, cycloalkyl(meth)acrylamides, aryl(meth)acrylamides and alkylaryl(meth)acrylamides, wherein the alkyl residues, cycloalkyl residues, aryl residues or alkylaryl residues of these (meth)acrylamides each contain at least one OH group or at least one protected OH group, allyl alcohol, vinyl alcohol and hydroxyalkyl vinyl ethers, for the formation of structural units (W2) within the copolymer,
and at least one ethylenically unsaturated monomer selected from the group consisting of alkyl (meth)acrylates, cycloalkyl (meth)acrylates, aryl (meth)acrylates, heteroaryl (meth)acrylates and alkylaryl (meth)acrylates, wherein the alkyl residues, cycloalkyl residues, aryl residues, heteroaryl residues or alkylaryl residues of these (meth)acrylates can optionally each contain at least one tertiary amino group and/or at least one alkoxy group, for the formation of structural units (W3) within the copolymer,
and partial phosphorylation of the hydroxyl groups contained in the structural units (W2) of the copolymer obtainable after radical polymerization for the formation of structural units (W1) or (W0) within the copolymer,
or by radical polymerization of at least one ethylenically unsaturated monomer selected from the group consisting of alkyl (meth)acrylates, cycloalkyl (meth)acrylates, aryl (meth)acrylates and alkylaryl (meth)acrylates, wherein the alkyl residues, cycloalkyl residues, aryl residues or alkylaryl residues of these (meth)acrylates each contain both at least one functional group containing at least one phosphorus atom and also at least one OH group or at least one protected OH group, for the formation of structural units (W0) within the homopolymer or copolymer,
and optionally at least one ethylenically unsaturated monomer selected from the group consisting of alkyl (meth)acrylates, cycloalkyl (meth)acrylates, aryl (meth)acrylates, heteroaryl (meth)acrylates and alkylaryl (meth)acrylates, wherein the alkyl residues, cycloalkyl residues, aryl residues, heteroaryl residues or alkylaryl residues of these (meth)acrylates can optionally each contain at least one tertiary amino group and/or at least one alkoxy group, for the formation of structural units (W3) within the homopolymer or copolymer.

7. Use as claimed in one of the previous claims, **characterized in that** the homopolymer or copolymer is obtainable by radical polymerization of
at least one ethylenically unsaturated monomer selected from the group consisting of vinylphosphonic acid, vinylphosphonic acid in a form at least partially esterified with a C₁₋₈ alkyl alcohol, vinylphosphoric acid in a form at least partially esterified with a C₁₋₈ alkyl alcohol, 2-(meth)acryloyloxyethyl phosphate, 3-(meth)acryloyloxypropyl phosphate, 4-(meth)acryloyloxybutyl phosphate, 10-methacryloyloxydecyl dihydrogen phosphate, ethyl-2-[4-(dihydroxyphosphoryl)-2-oxabutyl] acrylate and. 2,4,6-trimethylphenyl-2-[4-(dihydroxyphosphoryl)-2-oxabutyl] acrylate, for the formation of structural units (W1) within the copolymer,
and
at least one ethylenically unsaturated monomer selected from the group consisting of hydroxyethyl (meth)acrylate, hydroxypropyl (meth)acrylate and hydroxybutyl (meth)acrylate for the formation of structural units (W2) within the copolymer,
and optionally at least one ethylenically unsaturated monomer selected from the group consisting of methyl (meth)acrylate, ethyl (meth)acrylate, n-butyl (meth)acrylate, i-butyl (meth)acrylate, t-butyl (meth)acrylate, lauryl (meth)acrylate, 2-ethylhexyl (meth)acrylate, stearyl (meth)acrylate, allyl (meth)acrylate, tridecyl (meth)acrylate, and benzyl (meth)acrylate, for the formation of structural units (W3) within the copolymer,
or
by radical polymerization of at least one ethylenically unsaturated monomer selected from the group consisting of hydroxyethyl (meth)acrylate, glycidyl (meth)acrylate, hydroxypropyl (meth)acrylate and hydroxybutyl (meth)acrylate for the formation of structural units (W2) within the copolymer,
and at least one ethylenically unsaturated monomer selected from the group consisting of methyl (meth)acrylate, ethyl (meth)acrylate, n-butyl (meth)acrylate, i-butyl (meth)acrylate, t-butyl (meth)acrylate, lauryl (meth)acrylate, 2-ethylhexyl (meth)acrylate, stearyl (meth)acrylate, allyl (meth)acrylate, tridecyl (meth)acrylate, and benzyl (meth)acrylate, for the formation of structural units (W3) within the copolymer,
and partial phosphorylation of the optionally protected hydroxyl groups contained in the structural units (W2) of the copolymer obtainable after radical copolymerization for the formation of structural units (W1) or (W0) within the copolymer
or
by radical polymerization of at least one ethylenically unsaturated monomer selected from the group consisting of [(3-(meth)acryloyloxy-2-hydroxypropyl)] phosphate and [(2-(meth)acryloyloxy-3-hydroxypropyl)] phosphate for the formation of structural units (W0) within the homopolymer or copolymer, and optionally at least one ethylenically unsaturated monomer selected from the group consisting of methyl (meth)acrylate, ethyl (meth)acrylate, n-butyl (meth)acrylate, i-butyl (meth)acrylate, t-butyl (meth)acrylate, lauryl (meth)acrylate, 2-ethylhexyl (meth)acrylate, stearyl (meth)acrylate, allyl (meth)acrylate, tridecyl (meth)acrylate, and benzyl (meth)acrylate, for the formation of structural units (W3) within the homopolymer or copolymer.

8. Use as claimed in one of the previous claims, **characterized in that** the copolymer is obtainable by radical polymerization of
at least one ethylenically unsaturated monomer selected from the group consisting of hydroxyethyl (meth)acrylate, glycidyl (meth)acrylate, hydroxypropyl (meth)acrylate and hydroxybutyl (meth)acrylate for the formation of structural units (W2) within the copolymer
and
at least one ethylenically unsaturated monomer selected from the group consisting of methyl (meth)acrylate, ethyl (meth)acrylate, n-butyl (meth)acrylate and 2-ethylhexyl (meth)acrylate for the formation of structural units (W3) within the copolymer,
and partial phosphorylation of the optionally protected hydroxyl groups contained in the structural units (W2) of the copolymer obtainable after radical copolymerization for the formation of structural units (W1) or (W0) within the copolymer,
or by radical polymerization of
at least one ethylenically unsaturated monomer selected from the group consisting of 2-(meth)acryloyloxyethyl phosphate, 3-(meth)acryloyloxypropyl phosphate and 4-(meth)acryloyloxybutyl phosphate, for the formation of structural units (W1) within the copolymer,
and
at least one ethylenically unsaturated monomer selected from the group consisting of hydroxyethyl (meth)acrylate, hydroxypropyl (meth)acrylate and hydroxybutyl (meth)acrylate for the formation of structural units (W2) within the copolymer,
and
at least one ethylenically unsaturated monomer selected from the group consisting of methyl (meth)acrylate, ethyl (meth)acrylate, n-butyl (meth)acrylate and 2-ethylhexyl (meth)acrylate for the formation of structural units (W3) within the copolymer
or by radical copolymerization of [(2-(meth)acryloyloxy-3-hydroxypropyl)] phosphate for the formation of structural units (W0) within the copolymer and
at least one ethylenically unsaturated monomer selected from the group consisting of methyl (meth)acrylate, ethyl (meth)acrylate, n-butyl (meth)acrylate and 2-ethylhexyl (meth)acrylate for the formation of structural units (W3) within the copolymer.

9. Use as claimed in one of the previous claims, **characterized in that**
the copolymer, based on the total quantity of the at least two structural units (W1) and (W2) and (W3) within the polymer main chain of the copolymer, contains the following proportions in mol.%:
∘ 3 to 40 mol.% of the structural units (W1),
∘ 3 to 40 mol.% of the structural units (W2) and
∘ 20 to 94 mol.% of the structural units (W3),
or that the copolymer, based on the total quantity of the at least one structural unit (W0) and (W3) within the polymer main chain of the copolymer, contains the following proportions in mol.%:
∘ 6 to 80 mol.% of the structural units (W0) and
∘ 20 to 94 mol.% of the structural units (W3).

10. Use as claimed in one of the previous claims, **characterized in that** the homopolymer or copolymer is used as an adhesion-strengthening additive for adhesion promotion between a substrate optionally coated with at least one layer and at least one layer to be applied onto the substrate optionally coated with at least one layer.

11. Use as claimed in one of the previous claims, **characterized in that** the homopolymer or copolymer is used as an adhesion-strengthening additive as a component of a coating composition for application of a layer onto a substrate coated with at least one layer.

12. A coating composition comprising
(A) at least one homopolymer or copolymer used as claimed in one of claims 1 to 11 for use as an adhesion-strengthening additive in a quantity in a range from 0.1 to 15 wt.%, based on the total weight of the coating composition, and
(B) at least one binder in a quantity in a range from 20 to 99 wt.%, based on the total weight of the coating composition.

13. The coating composition as claimed in claim 12, **characterized in that** 70 to 100 wt.% of the binder (B) contained in the coating composition are selected from the group consisting of polyurethanes, polyesters, polyamides, polyureas, polyvinyl chlorides, polystyrenes, polycarbonates, poly(meth)acrylates, epoxy resins and mixtures thereof.

14. Use of the coating composition as claimed in claim 12 or 13 as clear lacquer, production line lacquer, repair lacquer or maintenance lacquer.

15. A substrate at least partially coated with the coating composition as claimed in claim 12 or 13.

## Revendications

1. Utilisation d'au moins un homopolymère ou copolymère obtenable par polymérisation des monomères éthyléniquement non saturés,
l'homopolymère ou copolymère étant composé d'au moins une unité structurale (W0) et le cas échéant au moins une autre unité structurale (W3) qui est différente de (W0),
où
chaque unité structurale (W0) contient au moins un groupe fonctionnel ayant au moins un atome de phosphore, ainsi qu'au moins un groupe fonctionnel réactif à un groupe isocyanate,
et l'homopolymère ou copolymère présente, dans la chaîne polymère principale de l'homopolymère ou copolymère et par rapport à la quantité totale de l'au moins une unité structurale (W0) et le cas échéant (W3), les proportions suivantes, en % en mole:
∘ 1 à 100 % en mole des unités structurales (W0) et
∘ 0 à 99 % en mole des unités structurales (W3),
ou l'homopolymère ou copolymère étant composé d'au moins deux unités structurales (W1) et (W2), l'une étant différente de l'autre, et le cas échéant d'au moins une autre unité structurale (W3) différente de (W1) et (W2),
où
chaque unité structurale (W1) contient au moins un groupe fonctionnel ayant au moins un atome de phosphore, et le cas échéant une partie des unités structurales (W1) en outre présente au moins un groupe fonctionnel réactif à un groupe isocyanate, et chaque unité structurale (W2) présente au moins un groupe fonctionnel réactif à un groupe isocyanate, et aucune des unités structurales (W2) n'ayant des atomes de phosphore,
et l'homopolymère ou copolymère présente, dans la chaîne polymère principale de l'homopolymère ou copolymère et par rapport à la quantité totale des au moins deux unités structurales (W1) et (W2), et le cas échéant (W3), les proportions suivantes, en % en mole :
∘ 1 à 80 % en mole des unités structurales (W1),
∘ 1 à 80 % en mole des unités structurales (W2) et
∘ 0 à 98 % en mole des unités structurales (W3),
en tant qu'additif renforçant l'adhésion.

2. Utilisation selon la revendication 1, **caractérisée en ce que** 70 à 100 % en mole de l'au moins un groupe fonctionnel ayant au moins un atome de phosphore des unités structurales (W1) ou (W0) de l'homopolymère ou copolymère sont indépendamment l'un de l'autre choisis dans le groupe consistant en des groupes de l'acide phosphonique, des groupes de l'acide phosphonique au moins partiellement estérifiés, des groupes de l'acide phosphorique au moins partiellement estérifiés, et les sels correspondants de ces groupes
et/ou
70 à 100 % en mole de l'au moins un groupe fonctionnel réactif à un groupe isocyanate de chacune des unités structurales (W2) ou (W0), et le cas échéant (W1), de l'homopolymère ou copolymère sont respectivement choisis, indépendamment l'un de l'autre, dans le groupe consistant en des groupes hydroxyle le cas échéant protégés, des groupes thiol, des groupes époxyde, des groupes carboxylique, des groupes amino primaires, le cas échéant protégés, et des groupes amino secondaires, le cas échéant protégés.

3. Utilisation selon la revendication 1 ou 2, **caractérisée en ce que** l'unité structurale (W3), qui est différente de (W0) ou (W1) et (W2), est dérivée d'un monomère éthyléniquement non saturé qui forme, lorsqu'il est utilisé comme monomère pour la production d'un homopolymère obtenable de celui, un homopolymère avec une température de transition vitreuse (Tg) inférieure à 50 °C.

4. Utilisation selon l'une quelconque des revendications précédentes, **caractérisée en ce que** l'homopolymère ou copolymère peut être obtenu par polymérisation par radicaux de :
(a) au moins un monomère éthyléniquement non saturé, adapté à former l'unité structurale (W1) et contenant au moins un groupe fonctionnel ayant au moins un atome de phosphore, au moins un monomère éthyléniquement non saturé, adapté à former l'unité structurale (W2) et ayant au moins un groupe fonctionnel réactif à un groupe isocyanate, et le cas échéant au moins un monomère éthyléniquement non saturé et adapté à former l'unité structurale (W3),
ou par polymérisation par radicaux de :
(b1) au moins deux monomères différents l'un de l'autre, qui sont éthyléniquement non saturés et adaptés à former l'unité structurale (W2), et qui respectivement ont, indépendamment l'un de l'autre, au moins un groupe fonctionnel réactif à un groupe isocyanate, et le cas échéant au moins un monomère éthyléniquement non saturé et adapté à former l'unité structurale (W3),
ou
au moins un monomère éthyléniquement non saturé et adapté à former l'unité structurale (W2), qui a au moins un groupe fonctionnel réactif à un groupe isocyanate, et au moins un monomère éthyléniquement non saturé et adapté à former l'unité structurale (W3),
et
(b2) par réaction partielle des groupes fonctionnels réactifs aux groupes isocyanate contenus dans les unités structurales (W2) de l'homopolymère ou copolymère obtenu selon l'étape (b1), pour obtenir des groupes fonctionnels ayant au moins un atome de phosphore, pour former des unités structurales (W1) ou (W0) dans l'homopolymère ou copolymère,
ou par polymérisation par radicaux de
(c) au moins un monomère éthyléniquement non saturé et adapté à former l'unité structurale (W0), et qui présente au moins un groupe fonctionnel ayant au moins un atome de phosphore, ainsi qu'au moins un groupe fonctionnel réactif à un groupe isocyanate, et le cas échéant au moins un monomère éthyléniquement non saturé et adapté à former l'unité structurale (W3).

5. Utilisation selon l'une quelconque des revendications précédentes, **caractérisée en ce que** l'homopolymère ou copolymère peut être obtenu par polymérisation par radicaux de
(b1) au moins deux monomères différents l'un de l'autre, qui sont éthyléniquement non saturés et adaptés à former l'unité structurale (W2), et qui respectivement ont, indépendamment l'un de l'autre, au moins un groupe hydroxyle, le cas échéant protégé, réactif à un groupe isocyanate, et le cas échéant au moins un monomère éthyléniquement non saturé et adapté à former l'unité structurale (W3), ou
au moins un monomère éthyléniquement non saturé, adapté à former l'unité structurale (W2), qui a au moins un groupe hydroxyle, le cas échéant protégé, réactif à un groupe isocyanate, et au moins un monomère éthyléniquement non saturé et adapté à former l'unité structurale (W3),
et
(b2a) par phosphorylation partielle des groupes hydroxyle contenus dans les unités structurales (W2) de l'homopolymère ou copolymère obtenu selon l'étape (b1 a) pour former des unités structurales (W1) ou (W0) dans l'homopolymère ou copolymère.

6. Utilisation selon l'une quelconque des revendications précédentes, **caractérisée en ce que** l'homopolymère ou copolymère peut être obtenu par polymérisation par radicaux
d'au moins un monomère éthyléniquement non saturé, choisi dans le groupe consistant en acide vinylphosphonique, acide vinylphosphonique dans la forme au moins partiellement ésterifiée avec un alcool d'alkyle en C₁₋₈, acide vinylphosphorique dans la forme au moins partiellement ésterifiée avec un alcool d'alkyle en C₁₋₈, (méth)acrylates d'alkyle, (méth)acrylates de cycloalkyle, (méth)acrylates d'aryle et (méth)acrylates d'alkylaryle, les groupements alkyle, cycloalkyle, aryle et/ou alkylaryle de ces (méth)acrylates respectivement présentant un groupe fonctionnel ayant au moins un atome de phosphore, pour former des unités structurales (W1) dans le copolymère,
et
au moins un monomère éthyléniquement non saturé, choisi dans le groupe consistant en (méth)acrylates d'alkyle, (méth)acrylates de cycloalkyle, (méth)acrylates d'aryle et (méth)acrylates d'alkylaryle, les groupements alkyle, cycloalkyle, aryle et/ou alkylaryle de ces (méth)acrylates respectivement présentant au moins un groupe OH ou au moins un groupe OH protégé, (méth)acrylamides d'alkyle, (méth)acrylamides de cycloalkyle, (méth)acrylamides d'aryle et (méth)acrylamides d'alkylaryle, les groupements alkyle, cycloalkyle, aryle et/ou alkylaryle de ces (méth)acrylamides respectivement présentant au moins un groupe OH ou au moins un groupe OH protégé, alcool allylique, alcool vinylique et les hydroxyalkylvinyléthers, pour former des unités structurales (W2) dans le copolymère,
et le cas échéant au moins un monomère éthyléniquement non saturé choisi dans le groupe consistant en (méth)acrylates d'alkyle, (méth)acrylates de cycloalkyle, (méth)acrylates d'aryle, (méth)acrylates d'hétéroaryle et (méth)acrylates d'alkylaryle, où les groupements alkyle, cycloalkyle, aryle, hétéroaryle et/ou alkylaryle de ces (méth)acrylates respectivement peuvent présenter au moins un groupe amino tertiaire et/ou au moins un groupe alcoxy, pour former des unités structurales (W3) dans le copolymère,
ou
par polymérisation par radicaux d'au moins un monomère éthyléniquement non saturé choisi dans le groupe consistant en (méth)acrylates d'alkyle, (méth)acrylates de cycloalkyle, (méth)acrylates d'aryle et (méth)acrylates d'alkylaryle, les groupements alkyle, cycloalkyle, aryle et/ou alkylaryle de ces (méth)acrylates respectivement présentant au moins un groupe OH ou au moins un groupe OH protégé, (méth)acrylamides d'alkyle, (méth)acrylamides de cycloalkyle, (méth)acrylamides d'aryle et (méth)acrylamides d'alkylaryle, les groupements alkyle, cycloalkyle, aryle et/ou alkylaryle de ces (méth)acrylamides respectivement présentant au moins un groupe OH ou au moins un groupe OH protégé, alcool allylique, alcool vinylique et les hydroxyalkylvinyléthers, pour former des unités structurales (W2) dans le copolymère,
et au moins un monomère éthyléniquement non saturé choisi dans le groupe consistant en (méth)acrylates d'alkyle, (méth)acrylates de cycloalkyle, (méth)acrylates d'aryle, (méth)acrylates d'hétéroaryle et (méth)acrylates d'alkylaryle, où les groupements alkyle, cycloalkyle, aryle, hétéroaryle et/ou alkylaryle de ces (méth)acrylates respectivement peuvent présenter au moins un groupe amino tertiaire et/ou au moins un groupe alcoxy, pour former des unités structurales (W3) dans le copolymère,
et par phosphorylation partielle des groupes hydroxyle contenus dans les unités structurales (W2) du copolymère obtenu par polymérisation par radicaux, pour former des unités structurales (W1) ou (W0) dans le copolymère,
ou par polymérisation par radicaux d'au moins un monomère éthyléniquement non saturé choisi dans le groupe consistant en (méth)acrylates d'alkyle, (méth)acrylates de cycloalkyle, (méth)acrylates d'aryle et (méth)acrylates d'alkylaryle, où les groupements alkyle, cycloalkyle, aryle et/ou alkylaryle de ces (méth)acrylates respectivement présentent au moins un groupe fonctionnel ayant un atome de phosphore, aussi qu'au moins un groupe OH ou au moins un groupe OH protégé, pour former des unités structurales (W0) dans l'homopolymère ou copolymère,
et le cas échéant au moins un monomère éthyléniquement non saturé choisi dans le groupe consistant en (méth)acrylates d'alkyle, (méth)acrylates de cycloalkyle, (méth)acrylates d'aryle, (méth)acrylates d'hétéroaryle et (méth)acrylates d'alkylaryle, où les groupements alkyle, cycloalkyle, aryle, hétéroaryle et/ou alkylaryle de ces (méth)acrylates respectivement peuvent présenter au moins un groupe amino tertiaire et/ou au moins un groupe alcoxy, pour former des unités structurales (W3) dans l'homopolymère ou copolymère.

7. Utilisation selon l'une quelconque des revendications précédentes, **caractérisée en ce que** l'homopolymère ou copolymère peut être obtenu par polymérisation par radicaux
d'au moins un monomère éthyléniquement non saturé, choisi dans le groupe consistant en acide vinylphosphonique, acide vinylphosphonique dans la forme au moins partiellement ésterifiée avec un alcool d'alkyle en C1₁₋₈, acide vinylphosphorique dans la forme au moins partiellement ésterifiée avec un alcool d'alkyle en C₁₋₈, phosphate de 2-(méth)acryloyloxyéthyle, phosphate de 3-(méth)acryloyloxypropyle, phosphate de 4-(méth)acryloyloxybutyle, dihydrogénophosphate de 10-méthacryloyloxydécyle, éthyl-2-[4-(dihydroxyphosphoryl)-2-oxabutyl]acrylate et 2,4,6-triméthylphényl-2-[4-(dihydroxyphosphoryl)-2-oxabutyl]acrylate, pour former des unités structurales (W1) dans le copolymère,
et
au moins un monomère éthyléniquement non saturé, choisi dans le groupe consistant en (méth)acrylate d'hydroxyéthyle, (méth)acrylate d'hydroxypropyle et (méth)acrylate d'hydroxybutyle, pour former des unités structurales (W2) dans le copolymère,
et le cas échéant au moins un monomère éthyléniquement non saturé, choisi dans le groupe consistant en (méth)acrylate de méthyle, (méth)acrylate d'éthyle, (méth)acrylate de n-butyle, (méth)acrylate de i-butyle, (méth)acrylate de t-butyle, (méth)acrylate de lauryle, (méth)acrylate de 2-éthylhexyle, (méth)acrylate de stéaryle, (méth)acrylate d'allyle, (méth)acrylate de tridécyle, et (méth)acrylate de benzyle, pour former des unités structurales (W3) dans le copolymère,
ou
par polymérisation par radicaux d'au moins un monomère éthyléniquement non saturé choisi dans le groupe consistant en (méth)acrylate d'hydroxyéthyle, (méth)acrylate de glycidyle, (méth)acrylate d'hydroxypropyle et (méth)acrylate d'hydroxybutyle pour former des unités structurales (W2) dans le copolymère,
et au moins un monomère éthyléniquement non saturé, choisi dans le groupe consistant en (méth)acrylate de méthyle, (méth)acrylate d'éthyle, (méth)acrylate de n-butyle, (méth)acrylate de i-butyle, (méth)acrylate de t-butyle, (méth)acrylate de lauryle, (méth)acrylate de 2-éthylhexyle, (méth)acrylate de stéaryle, (méth)acrylate d'allyle, (méth)acrylate de tridécyle, et (méth)acrylate de benzyle, pour former des unités structurales (W3) dans le copolymère,
et par phosphorylation partielle des groupes hydroxyle, le cas échéant protégés, contenus dans les unités structurales (W2) du copolymère obtenu par co-polymérisation par radicaux, pour former des unités structurales (W1) ou (W0) dans le copolymère, ou
par polymérisation par radicaux d'au moins un monomère éthyléniquement non saturé choisi dans le groupe consistant en phosphate de [(3-(méth)acryloyloxy-2-hydroxypropyle)] et phosphate de [(2-(méth)acryloyloxy-3-hydroxypropyle)], pour former des unités structurales (W0) dans l'homopolymère ou copolymère, et le cas échéant au moins un monomère éthyléniquement non saturé, choisi dans le groupe consistant en (méth)acrylate de méthyle, (méth)acrylate d'éthyle, (méth)acrylate de n-butyle, (méth)acrylate de i-butyle, (méth)acrylate de t-butyle, (méth)acrylate de lauryle, (méth)acrylate de 2-éthylhexyle, (méth)acrylate de stéaryle, (méth)acrylate d'allyle, (méth)acrylate de tridécyle, et (méth)acrylate de benzyle, pour former des unités structurales (W3) dans l'homopolymère ou copolymère.

8. Utilisation selon l'une quelconque des revendications précédentes, **caractérisée en ce que** le copolymère peut être obtenu par polymérisation par radicaux
d'au moins un monomère éthyléniquement non saturé, choisi dans le groupe consistant en (méth)acrylate d'hydroxyéthyle, (méth)acrylate de glycidyle, (méth)acrylate d'hydroxypropyle et (méth)acrylate d'hydroxybutyle pour former des unités structurales (W2) dans le copolymère,
et
au moins un monomère éthyléniquement non saturé, choisi dans le groupe consistant en (méth)acrylate de méthyle, (méth)acrylate d'éthyle, (méth)acrylate de n-butyle, (méth)acrylate de 2-éthylhexyle, pour former des unités structurales (W3) dans le copolymère,
et par phosphorylation partielle des groupes hydroxyle, le cas échéant protégés, contenus dans les unités structurales (W2) du copolymère obtenu par co-polymérisation par radicaux, pour former des unités structurales (W1) ou (W0) dans le copolymère,
ou par polymérisation par radicaux
d'au moins un monomère éthyléniquement choisi dans le groupe consistant en 2-(méth)acryloyloxyéthyle, phosphate de 3-(méth)acryloyloxypropyle, phosphate de 4-(méth)acryloyloxybutyle, pour former des unités structurales (W1) dans le copolymère,
et
au moins un monomère éthyléniquement non saturé, choisi dans le groupe consistant en (méth)acrylate d'hydroxyéthyle, (méth)acrylate d'hydroxypropyle et (méth)acrylate d'hydroxybutyle, pour former des unités structurales (W2) dans le copolymère,
et
au moins un monomère éthyléniquement non saturé, choisi dans le groupe consistant en (méth)acrylate de méthyle, (méth)acrylate d'éthyle, (méth)acrylate de n-butyle, (méth)acrylate de 2-éthylhexyle, pour former des unités structurales (W3) dans le copolymère,
ou par co-polymérisation par radicaux de phosphate de [(2-(méth)acryloyloxy-3-hydroxypropyle)] pour former des unités structurales (W0) dans le copolymère,
et
au moins un monomère éthyléniquement non saturé, choisi dans le groupe consistant en (méth)acrylate de méthyle, (méth)acrylate d'éthyle, (méth)acrylate de n-butyle, (méth)acrylate de 2-éthylhexyle, pour former des unités structurales (W3) dans le copolymère.

9. Utilisation selon l'une quelconque des revendications précédentes, **caractérisée en ce que**
le copolymère présente les proportions suivantes, en % en mole, dans la chaîne polymère principale du copolymère et par rapport à la quantité totale des au moins deux unités structurales (W1) et (W2), et (W3) :
∘ 3 à 40 % en mole des unités structurales (W1),
∘ 3 à 40 % en mole des unités structurales (W2) et
∘ 20 à 94 % en mole des unités structurales (W3),
ou **en ce que** le copolymère présente les proportions suivantes, en % en mole, par rapport à la quantité totale de l'au moins une unité structurelle (W0) et (W3) :
∘ 6 à 80 % en mole des unités structurales (W0) et
∘ 20 à 94 % en mole des unités structurales (W3).

10. Utilisation selon l'une quelconque des revendications précédentes, **caractérisée en ce que** l'homopolymère ou le copolymère est utilisé en tant qu'additif renforçant l'adhésion, pour promouvoir l'adhésion entre un substrat le cas échéant couché avec au moins une couche, et au moins une couche qui doit être appliquée sur le substrat le cas échéant couché avec au moins une couche.

11. Utilisation selon l'une quelconque des revendications précédentes, **caractérisée en ce que** l'homopolymère ou le copolymère est utilisé en tant qu'additif renforçant l'adhésion comme composant d'une composition de revêtement pour l'application d'une couche sur un substrat couché avec au moins une couche.

12. Composition de revêtement comportant
(A) au moins un homopolymère ou copolymère utilisé en tant qu'additif renforçant l'adhésion selon l'une quelconque des revendications 1 à 11, dans une quantité dans une gamme de 0,1 à 15 % en poids par rapport au poids total de la composition de revêtement et
(B) au moins un liant dans une quantité dans une gamme de 20 à 99 % en poids par rapport au poids total de la composition de revêtement.

13. Composition de revêtement selon la revendication 12, **caractérisée en ce que** 70 à 100 % du liant (B) contenu dans la composition de revêtement sont choisis dans le groupe consistant en polyuréthanes, polyesters, polyamides, polyurées, polychlorures de vinyle, polystyrènes, polycarbonates, poly(méth)acrylates, résines époxydes et mélanges de ceux-ci.

14. Utilisation de la composition de revêtement selon la revendication 12 ou 13 en tant que vernis transparent, vernis de série, vernis de retouche ou vernis d'entretien.

15. Substrat au moins partiellement revêtu avec la composition de revêtement selon la revendication 12 ou 13.
